# EUROPEAN PATENT APPLICATION

(11) **EP 4 442 500 A1**
(43) Date of publication of application: **09.10.2024**
(21) Application number: 22901427.9
(22) Date of filing: 01.12.2022
(51) Int. Cl.: B60N 2/16, B60K 1/04, B60N 2/07, B60P 3/00

(54) **VEHICLE SEAT**

(30) Priority: 03.12.2021 JP 2021197134; 28.01.2022 US 202263267237 P; 04.02.2022 US 202263306652 P; 04.02.2022 US 202263306654 P; 10.11.2022 JP 2022180416; 14.11.2022 JP 2022182016; 29.11.2022 JP 2022190373
(71) Applicant: TS Tech Co., Ltd., Asaka-shi Saitama 351-0012 (JP)
(72) Inventor: BABA, Hiroshi, Shioya-gun, Tochigi 329-1217 (JP); TANIGUCHI, Hiromi, Shioya-gun, Tochigi 329-1217 (JP); OSAKAYA, Naoki, Shioya-gun, Tochigi 329-1217 (JP); KINOSHITA, Sadahiro, Shioya-gun, Tochigi 329-1217 (JP); KUROSAWA, Mika, Shioya-gun, Tochigi 329-1217 (JP); YOGO, Hiroshi, Shioya-gun, Tochigi 329-1217 (JP); TAKAHASHI, Shoichi, Shioya-gun, Tochigi 329-1217 (JP); OZAKI, Takuya, Shioya-gun, Tochigi 329-1217 (JP); SATO, Ryosuke, Shioya-gun, Tochigi 329-1217 (JP); OSHINO, Yuta, Shioya-gun, Tochigi 329-1217 (JP); MIYOSHI, Akira, Shioya-gun, Tochigi 329-1217 (JP); KOWA, Munetaka, Shioya-gun, Tochigi 329-1217 (JP)
(74) Representative: Grünecker Patent- und Rechtsanwälte PartG mbB
(86) International application number: PCT/JP2022/044483
(87) International publication number: WO 2023/100997

(57) **Abstract**

Provided is a conveyance seat on which a seated occupant can spend time comfortably in an interior space (cabin) of a conveyance. A conveyance seat S1 includes a seat cushion 1, a rail device 50 (base member) that supports the seat cushion from a downward side, and connecting links 41 and 42 (connecting members) which are interposed between the seat cushion 1 and the rail device 50 in an up to down direction, and connect the seat cushion 1 and the rail device 50. Downward portions of the connecting links 41 and 42 are attached to the rail device 50 through a connecting bracket 60, or are attached to the rail device 50. Lower end portions of the connecting links 41 and 42 are disposed on a downward side as compared with an upper end portion of the rail device 50.

## Description

### TECHNICAL FIELD

The present invention relates to a conveyance seat, and particularly, to a conveyance seat including a seat cushion, a base member that supports the seat cushion, and a connecting member that connects the seat cushion and the base member.

### BACKGROUND ART

In the related art, there is known a vehicle including a vehicle floor, a vehicle battery that is disposed at a downward position of the vehicle floor and supplies electric power at the interior of the vehicle, and a vehicle seat that is disposed at an upward position of the vehicle floor at the inside of the vehicle.

For example, Patent Literature 1 discloses an electric vehicle including the vehicle floor, the vehicle battery, and the vehicle seat.

### CITATION LIST

### PATENT LITERATURE

PATENT LITERATURE 1: JP 2021-11262 A

### SUMMARY OF INVENTION

### TECHNICAL PROBLEM

By the way, in the electric vehicle in which the vehicle battery is mounted as in Patent Literature 1, the vehicle battery is disposed at the downward position of the vehicle floor. Therefore, a height position of the vehicle floor and the vehicle seat is higher as compared with a typical vehicle (engine vehicle), and thus an interior space (cabin) of the vehicle is narrowed. In this case, there was a concern that a seated occupant may feel that the interior space of the vehicle is narrow.

Note that, it was difficult to make a design change to raise a height position of a vehicle roof in accordance with a height position of the vehicle floor because the design change may have an influence on aerodynamic characteristics of the vehicle.

In addition, even in a typical vehicle (engine vehicle) without limitation to the electric vehicle, it is required to secure a wide interior space of the vehicle. That is, it was required that the seated occupant can spend time comfortably in the interior space of the vehicle. Therefore, it is required to devise a shape and a configuration of the conveyance seat.

The invention has been made in consideration of the problem, and an object thereof is to provide a conveyance seat on which a seated occupant can spend time more comfortably in an interior space (cabin) of a conveyance as compared with the related art.

### SOLUTION TO PROBLEM

The above-described object is accomplished by a conveyance seat of the invention. The conveyance seat includes: a seat cushion; a base member that supports the seat cushion from a downward side; and a connecting member that is interposed between the seat cushion and the base member in an up to down direction, and connects the seat cushion and the base member. A downward portion of the connecting member is attached to the base member through a connecting bracket, or is attached to the base member, and a lower end portion of the connecting member is disposed on a downward side as compared with an upper end portion of the base member.

According to the configuration, a conveyance seat on which a seated occupant can spend time comfortably in an interior space (cabin) of the conveyance can be realized.

Specifically, in the conveyance seat of the invention, the lower end portion of the connecting member that connects the seat cushion and the base member is disposed on a downward side as compared with the upper end portion of the base member. In this case, it is possible to lower a height position of the seat cushion as compared with a configuration in which the connecting member (for example, a connecting link) is attached to the base member (for example, a rail device) through a connecting bracket and the lower end portion of the connecting member is disposed on an upward side as compared with the upper end portion of the base member as in the conveyance seat in the related art. That is, the position of the connecting member is lowered, and thus a height position of the seat cushion can be lowered.

Therefore, the seated occupant may not feel that the interior space of the conveyance is narrow (the feeling is alleviated) as compared with the conveyance seat in the related art. In addition, the seated occupant can spend time more comfortably in the interior space of the conveyance as compared with the related art.

At this time, the base member may be a rail device that is provided on a conveyance floor and moves the seat cushion in a seat front to rear direction with respect to the conveyance floor, the rail device may include a lower rail extending in the seat front to rear direction, and an upper rail that is supported to be movable along the lower rail and moves together with the seat cushion, the downward portion of the connecting member may be attached to the upper rail through a connecting bracket, or may be attached to the upper rail, and the lower end portion of the connecting member may be disposed on a downward side as compared with an upper end portion of the upper rail.

According to the configuration, a height position of the conveyance seat including the rail device can be lowered. Therefore, the feeling that the interior space of the conveyance is narrow for the seated occupant is alleviated.

At this time, the connecting member may include a base connecting portion attached to the base member side, and the base connecting portion may be disposed at a position overlapping the base member in the up to down direction.

According to the configuration, the height position of the connecting member can be lowered, and the height position of the seat cushion can be lowered.

At this time, the base connecting portion may be attached to a side surface of the connecting bracket in a seat width direction, or may be attached to a side surface of the base member.

According to the configuration, the connecting member and the base member can be disposed in a compact manner.

At this time, the connecting member may be attached to the base member through the connecting bracket, and the base connecting portion, the connecting bracket, and the base member may be disposed at positions overlapping each other in the up to down direction.

In addition, the connecting bracket may include an upper wall portion that is attached to an upper surface of the base member, and a side wall portion that extends downward from an inner side portion of the upper wall portion in the seat width direction, and the base connecting portion may be attached to the side wall portion of the connecting bracket.

Since the connecting bracket is provided as described above, the connecting member and the base member can be easily assembled.

At this time, the connecting member may be attached to the base member through the connecting bracket and a second connecting bracket, the connecting bracket may be attached to the base member, and the second connecting bracket may be attached to the connecting bracket.

In addition, the second connecting bracket may be attached to an inner side surface of the connecting bracket in the seat width direction, and may be provided to overhang toward an inner side in the seat width direction from the connecting bracket, and the base connecting portion may be attached to the overhang portion of the second connecting bracket.

Since the connecting bracket and the second connecting bracket are provided as described above, the connecting member and the base member can be more firmly assembled.

At this time, the base member may be a rail device that is provided on a conveyance floor and moves the seat cushion in a seat front to rear direction with respect to the conveyance floor, the rail device may include a lower rail extending in the seat front to rear direction, and an upper rail that is supported to be movable along the lower rail and moves together with the seat cushion, and the connecting member may be disposed on an inner side in a seat width direction as compared with the lower rail.

According to the configuration, the lower rail, the upper rail, and the connecting member can be disposed in a compact manner.

At this time, the connecting member may be a connecting link that connects the seat cushion to the base member to be moveable up and down, the connecting link may have a bent shape that is bent in the seat width direction, and the connecting link may include a cushion connecting portion that is attached to the seat cushion side, and a base connecting portion that is disposed on an inner side in the seat width direction as compared with the cushion connecting portion, and is attached to the base member side.

According to the configuration, it is possible to lower the height position of the conveyance seat including the connecting link capable of moving up and down the seat cushion. Therefore, the feeling that the interior space of the conveyance is narrow for the seated occupant can be alleviated.

### ADVANTAGEOUS EFFECTS OF INVENTION

According to the invention, it is possible to realize a conveyance seat on which a seated occupant can spend time comfortably in an interior space (cabin) of the conveyance.

In addition, according to the invention, the height position of the seat cushion can be further lowered as compared with the related art, and feeling that the interior space of the conveyance is narrow for the seated occupant disappear (is alleviated).

In addition, according to the invention, it is possible to lower the height position of the conveyance seat including the rail device.

In addition, according to the invention, the connecting member and the base member can be disposed in a compact manner.

In addition, according to the invention, the connecting member and the base member can be easily assembled.

In addition, according to the invention, the connecting member and the base member can be more firmly assembled.

In addition, according to the invention, it is possible to lower the height position of the conveyance seat including the connecting link capable of moving up and down the seat cushion.

### BRIEF DESCRIPTION OF DRAWINGS

FIG. 1 is a perspective view of a conveyance seat of a first embodiment.
FIG. 2 is a perspective view of a seat frame, a rail device, and a height link device.
FIG. 3 is a perspective view of the rail device, a connecting link, and a cushion frame when viewed from a rear side of the seat.
FIG. 4 is a rear view of the rail device, the connecting link, and the cushion frame.
FIG. 5 is a perspective view of a connecting bracket.
FIG. 6 is a perspective view of a second connecting bracket.
FIG. 7 is Modification Example 1 of the conveyance seat (connecting link).
FIG. 8A is Modification Example 2 of the conveyance seat (connecting bracket).
FIG. 8B is Modification Example 2 of the conveyance seat (connecting bracket).
FIG. 9A is Modification Example 3 of the conveyance seat (seating sensor).
FIG. 9B is a view illustrating a position of a seating sensor.
FIG. 10 is Modification Example 4 of the conveyance seat (front connecting pipe).
FIG. 11 is Modification Example 5 of the conveyance seat (connecting bracket).
FIG. 12 is Modification Example 6 of the conveyance seat (connecting bracket).
FIG. 13A is Modification Example 7 of the conveyance seat (floor reinforcement member).
FIG. 13B is Modification Example 7 of the conveyance seat (floor reinforcement member).
FIG. 14 is a side view of a conveyance of a second embodiment.
FIG. 15 is a plan view of the conveyance, and illustrates an interior space of the conveyance.
FIG. 16 is a perspective view of a conveyance seat (seat frame).
FIG. 17 is a front view of a conveyance battery, a conveyance floor, and the conveyance seat.
FIG. 18 is a view illustrating an interior space of a conveyance of a third embodiment.
FIG. 19 is a front view of a conveyance battery, a conveyance floor, and a conveyance seat.
FIG. 20 is a view illustrating an interior space of a conveyance of a fourth embodiment.
FIG. 21 is a front view of a conveyance battery, a conveyance floor, and a conveyance seat.
FIG. 22 is a view illustrating an interior space of a conveyance of a fifth embodiment.
FIG. 23 is a front view of a conveyance battery, a conveyance floor, and a conveyance seat.
FIG. 24 is a view illustrating an interior space of a conveyance of a sixth embodiment.
FIG. 25 is a plan view of a conveyance of a seventh embodiment, and illustrates an interior space of the conveyance.
FIG. 26 is a block diagram illustrating an electric circuit of the conveyance.
FIG. 27 is a view illustrating an interior space of a conveyance of an eighth embodiment.
FIG. 28 is a view illustrating an interior space of a conveyance of a ninth embodiment.
FIG. 29 is a view illustrating an interior space of a conveyance of a tenth embodiment.
FIG. 30 is a view illustrating an interior space of a conveyance of an eleventh embodiment.
FIG. 31 is a view illustrating an interior space of a conveyance of a twelfth embodiment.
FIG. 32A is a view illustrating an interior space of a conveyance of a thirteenth embodiment.
FIG. 32B is a front view of a conveyance seat, a table device, and a rail device.
FIG. 32C is a view illustrating a state in which the table device is switched from a "normal position" to a "development position".
FIG. 33 is a view illustrating an interior space of a conveyance of a fourteenth embodiment.
FIG. 34 is a view illustrating an interior space of a conveyance of a fifteenth embodiment.
FIG. 35 is a view illustrating an interior space of a conveyance of a sixteenth embodiment.
FIG. 36 is a view illustrating an interior space of a conveyance of a seventeenth embodiment.
FIG. 37 is a view illustrating an interior space of a conveyance of an eighteenth embodiment.
FIG. 38 is a view illustrating an interior space of a conveyance of a nineteenth embodiment.
FIG. 39 is a perspective view of a conveyance seat of a twentieth embodiment.
FIG. 40 is a perspective view of a seat frame serving as a skeleton of the conveyance seat.
FIG. 41A is a side view of the conveyance seat when a seat main body is in a "normal state".
FIG. 41B is an enlarged view of a main portion of an operation lever (lock position).
FIG. 41C is an enlarged view of a main portion of a lock member (lock position).
FIG. 42A is a side view of the conveyance seat when the seat main body is in a "movement state".
FIG. 42B is an enlarged view of a main portion of the operation lever (unlock position).
FIG. 42C is an enlarged view of a main portion of the lock member (unlock position).
FIG. 43A is an assembled perspective view of the operation lever, a cover member, and a lever attachment member.
FIG. 43B is an exploded perspective view of FIG. 43A.
FIG. 44 is an assembled perspective view when viewed from another angle.
FIG. 45 is an assembled view when viewed from a rear side of the seat, and illustrates an assembled state of the operation lever and a connecting wire.
FIG. 46 is an assembled view when viewed from a downward side, and illustrates an assembled state of the lever attachment member and the connecting wire.
FIG. 47A is a view illustrating a method of assembling the connecting wire to the operation lever.
FIG. 47B is a view illustrating a state in which the connecting wire is assembled to the operation lever from a state in FIG. 47A.
FIG. 47C is a view illustrating a state in which the connecting wire is assembled to the lever attachment member from the state in FIG. 47B.
FIG. 48 is a view illustrating Modification Example 1 of the operation lever.
FIG. 49 is a view illustrating an arrangement of a lever rotating shaft, a movement restriction portion, and a biasing member.
FIG. 50 is a perspective view of a conveyance seat of a twelfth first embodiment.
FIG. 51 is an assembled perspective view of an operation lever and a lever attachment member of the twelfth first embodiment.
FIG. 52 is a view illustrating a modification example of FIG. 51.
FIG. 53 is a cross-sectional view taken along LIII-LIII in FIG. 52.

### DESCRIPTION OF EMBODIMENTS

### <First Embodiment>

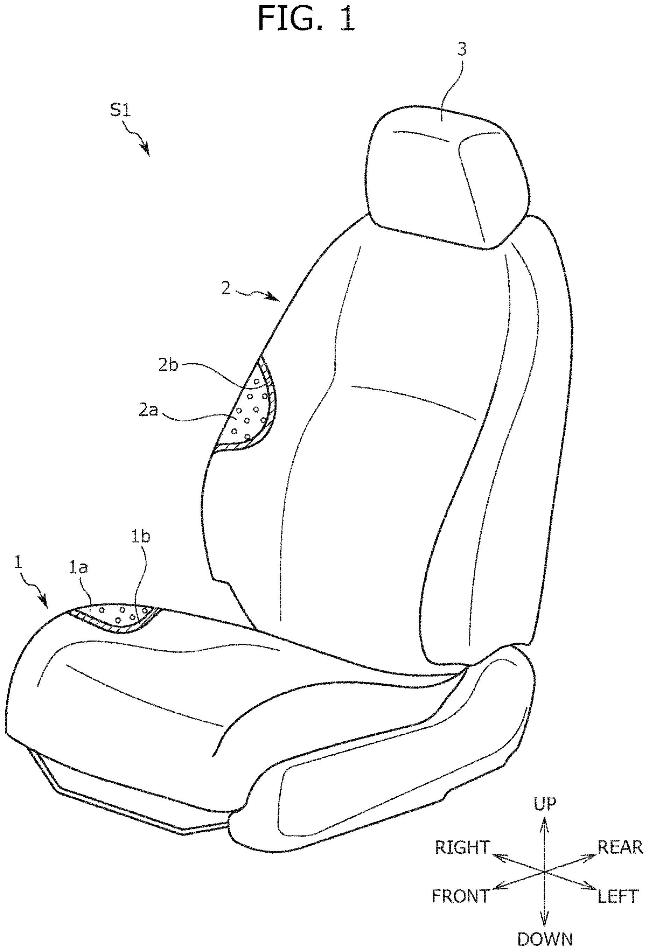

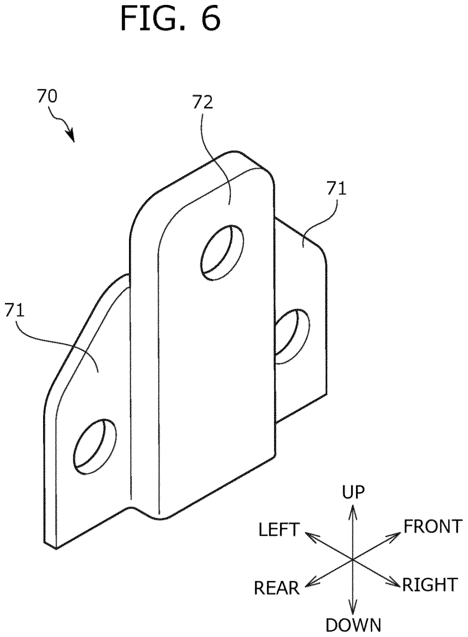

Hereinafter, a first embodiment will be described with reference to FIG. 1 to FIG. 13B.

The first embodiment relates to a conveyance seat having the following main characteristics. Specifically, the conveyance seat includes: a seat cushion; a base member that supports the seat cushion from a downward side; and a connecting member that connects the seat cushion and the base member. A downward portion of the connecting member is attached to the base member through a connecting bracket, or is attached to the base member, and a lower end portion of the connecting member is disposed on a downward side as compared with an upper end portion of the base member.

Note that, with respect to a seat back (headrest) of the conveyance seat, a side where a seated occupant is seated is a seat front side.

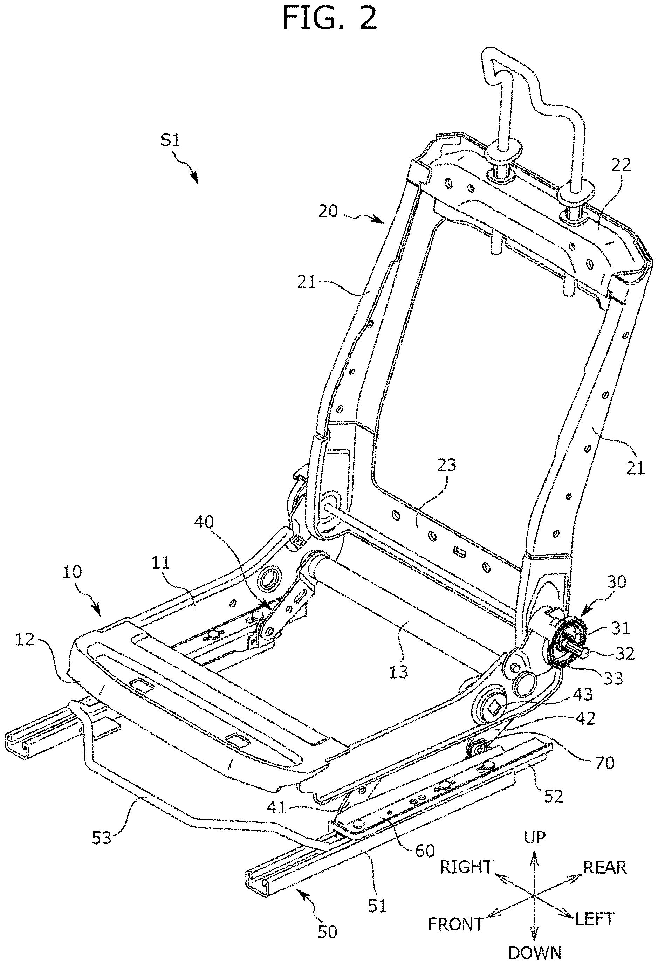

A conveyance seat S1 of the first embodiment is a vehicle seat as shown in FIG. 1 and FIG. 2 and includes a seat main body including a seat cushion 1, a seat back 2, and a headrest 3, a reclining device 30 that rotatably connects the seat back 2 to the seat cushion 1, a height link device 40 that connects the seat main body to be moveable up and down with respect to a vehicle body floor, and a rail device 50 that supports the seat main body to be movable back and forth with respect to the vehicle body floor.

In addition, as illustrated in FIG. 2, the conveyance seat S1 further includes a connecting bracket 60 that connects the height link device 40 and the rail device 50, and a second connecting bracket 70.

As illustrated in FIG. 1 and FIG. 2, the seat cushion 1 includes a cushion frame 10 that is a seating portion supporting a seated occupant from a lower side and serves as a skeleton, a pad material 1a placed on the cushion frame 10, and a skin material 1b that covers the cushion frame 10 and the pad material 1a.

The seat back 2 mainly includes a back frame 20 that is a backrest portion that supports the seated occupant from a rear side and serves as a skeleton, a pad material 2a, and a skin material 2b.

The headrest 3 is a head portion that supports the head of the seated occupant from a rear side.

As illustrated in FIG. 2, the cushion frame 10 is constituted by an approximately rectangular frame-shaped body, and includes side frames 11 disposed on rightward and leftward sides, a plate-shaped pan frame 12 that is bridged to front portions of the side frames 11, and a rear connecting pipe 13 that connects rear portions of the side frames 11.

Note that, the cushion frame 10 further includes a support plate that is hooked onto the pan frame 12 and the rear connecting pipe 13 and extends in a seat front to rear direction.

Each of the side frames 11 is a plate-shaped frame that is elongated in the seat front to rear direction.

The reclining device 30 is attached to rear portions of the side frames 11, and the rail device 50 is attached to downward portions of the side frames 11 through the height link device 40.

As illustrated in FIG. 2, the back frame 20 is constituted by an approximately rectangular frame-shaped body, and includes back side frames 21 disposed on rightward and leftward sides, an upper frame 22 that connects upper end portions of the back side frames 21, and a lower frame 23 that connects lower end portions of the back side frames 21.

Note that, the back frame 20 further includes a support plate that is hooked onto the back side frames 21 and extends in a seat width direction.

Each of the back side frames 21 extends in the up to down direction, and is a plate-shaped frame having approximately C-shaped transverse cross-section.

Lower end portions of the back side frame 21 are connected to rear end portions of the side frames 11 through the reclining device 30.

As illustrated in FIG. 2, the reclining device 30 is a device that rotatably connects the back frame 20 to the cushion frame 10 and is capable of locking the back frame 20.

The reclining device 30 includes a reclining main body 31 that is driven when rotating the back frame 20, a rotating shaft 32, a spiral spring 33 that biases the back frame 20 to forwardly rotate around the rotating shaft 32, and an operation lever that is operated to release a locked state of the back frame 20.

The reclining main body 31 includes a known lock mechanism, and can switch a state of the back frame 20 between a "locked state" fixed to the cushion frame 10 and an "unlocked state" capable of rotating with respect to the cushion frame 10.

The rotating shaft 32 is pivotally supported to the back frame 20 side and the cushion frame 10 side in the seat width direction. In the spiral spring 33, one end is locked to the back frame 20 side, and the other end is locked to the cushion frame 10 side.

As illustrated in FIG. 2 to FIG. 4, the height link device 40 is attached between the cushion frame 10 and the rail device 50 in the up to down direction.

The height link device 40 includes right and left first connecting links 41, right and left second connecting links 42 disposed on a rear side as compared with the first connecting links 41, a brake unit 43 that restricts a moving up and down motion of the seat main body, and an operation lever for releasing the restriction state of the brake unit 43.

The first connecting links 41 correspond to a connecting member, have a bent shape that is bent in the seat width direction, and connect the side frame 11 and the connecting bracket 60.

Each of the first connecting links 41 includes a link main body portion 41a that is elongated in the up to down direction, a cushion connecting portion 41b that is connected to the side frame 11, and a base connecting portion 41c that is disposed on an inner side in the seat width direction as compared with the cushion connecting portion 41b and is connected to the connecting bracket 60.

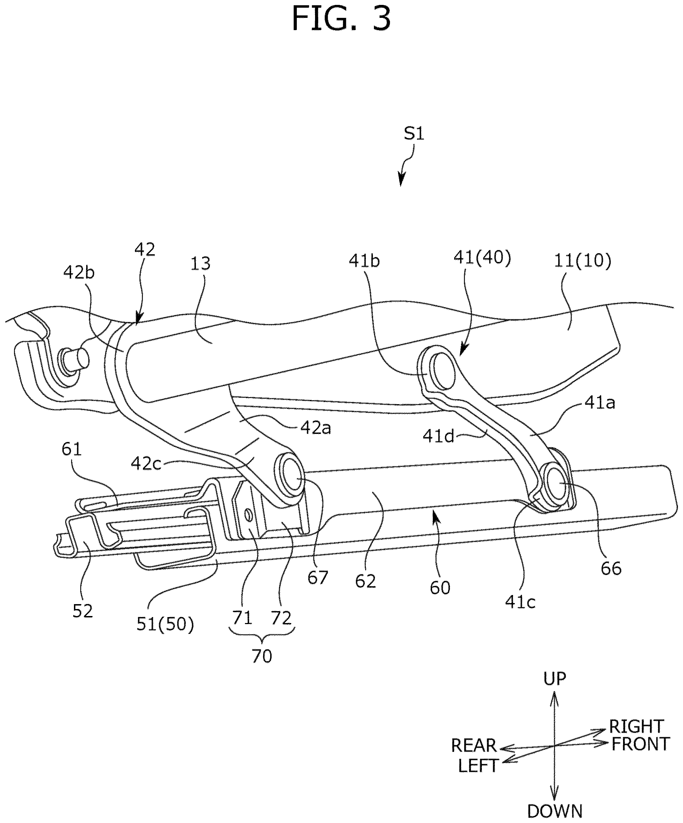

Note that, as illustrated in FIG. 3, a reinforcement flange 41d (reinforcement portion) is formed at an outer edge portion of the first connecting link 41. The reinforcement flange 41d extends from a position of the cushion connecting portion 41b to a position of the base connecting portion 41c.

The second connecting links 42 correspond to a connecting member, have a bent shape that is bent in the seat width direction, and connect the rear connecting pipe 13 and the second connecting bracket 70.

Each of the second connecting links 42 includes a link main body portion 42a that is elongated in the up to down direction, a cushion connecting portion 42b that is connected to the rear connecting pipe 13, and a base connecting portion 42c that is disposed on an inner side in the seat width direction as compared with the cushion connecting portion 42b and is connected to the second connecting bracket 70.

When the operation lever of the height link device 40 is operated, the second connecting link 42 (the left second connecting link 42) rotates as a driving link, and the right second connecting link 42 and the right and left first connecting link 41 also rotate. According to this, the seat main body moves up or down, and thus a seat height is adjusted.

As illustrated in FIG. 2 to FIG. 4, the rail device 50 corresponds to a base member that supports the seat main body from a downward side, is disposed between the seat main body and the vehicle body floor in the up to down direction, and is fixed to an upper surface of the vehicle body floor.

The rail device 50 includes right and left lower rails 51 extending in the seat front to rear direction, right and left upper rails 52 which are supported to be slidable along the lower rails 51 and move together with the seat cushion 1, a lock member that locks the upper rails 52 so as not to be slidable with respect to the lower rails 51, and a rail operation lever 53 for releasing the locked state of the lock member.

The lower rails 51 are constituted by an elongated hollow body, and are disposed on right and left sides with an interval in the seat width direction. An accommodation space having an approximately convex cross-section is formed inside each of the lower rails 51 along the seat front to rear direction.

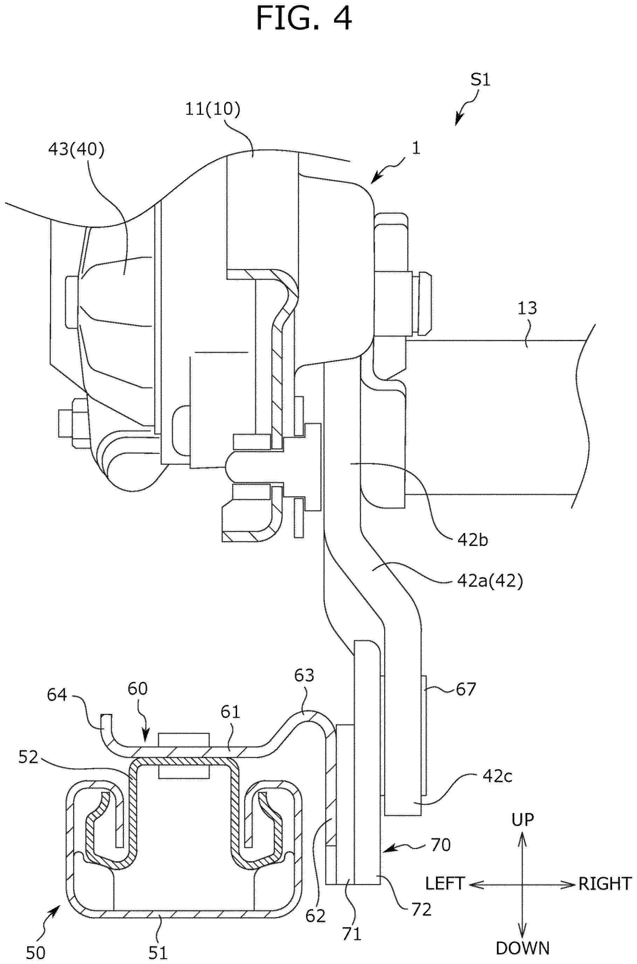

The upper rails 52 are elongated bodies which slide along the lower rails 51 in a state of being inserted in the accommodation spaces of the lower rails 51. As illustrated in FIG. 4, an upper end portion of each of the upper rail 52 is connected to the cushion frame 10 side through the connecting bracket 60 (second connecting bracket 70).

As illustrated in FIG. 2 to FIG. 5, the connecting bracket 60 is a member that is constituted by a plate-shaped member having an inverted L-shaped longitudinal cross-section elongated in the seat front to rear direction, and connects the upper rail 52 and the connecting links 41 and 42.

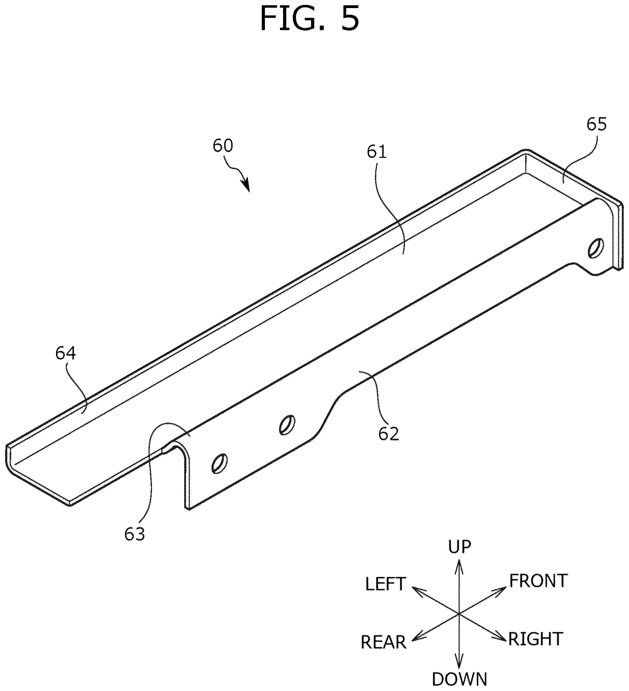

As illustrated in FIG. 4 and FIG. 5, the connecting bracket 60 includes an upper wall portion 61 that is attached to an upper surface of the upper rail 52, and a side wall portion 62 that extends downward from an inner side portion of the upper wall portion 61 in the seat width direction and is attached to the connecting links 41 and 42.

In addition, the connecting bracket 60 further includes an upward bending portion 63 that is provided at a boundary portion of the upper wall portion 61 and the side wall portion 62 and protrudes upward as compared with the upper wall portion 61, a reinforcement flange 64 (reinforcement portion) that is provided at an outer end portion of the upper wall portion 61 in the seat width direction, and a second reinforcement flange 65 (second reinforcement portion) that is provided at a rear end portion of each of the upper wall portion 61 and the side wall portion 62.

As illustrated in FIG. 3 and FIG. 4, the upper wall portion 61 is attached to the upper surface of the upper rail 52 by using an attachment bolt.

The side wall portion 62 is connected to the first connecting link 41 through a first rotating shaft 66. In addition, the side wall portion 62 is connected to the second connecting link 42 through a second rotating shaft 67 and the second connecting bracket 70.

As illustrated in FIG. 3 to FIG. 5, and FIG. 6, the second connecting bracket 70 is a plate-shaped reinforcement bracket that is attached to an inner side surface of the connecting bracket 60 (side wall portion 62), and is connected to the second connecting link 42 (driving link). The second connecting bracket 70 includes right and left fixing portions 71 attached to the inner side surface of the connecting bracket 60, and an overhang portion 72 that connects the right and left fixing portions 71 and is provided to overhang to an inner side in the seat width direction as compared with the right and left fixing portions 71.

The overhang portion 72 is connected to the second connecting link 42 through the second rotating shaft 67.

In the above-described configuration, as illustrated in FIG. 3 and FIG. 4, lower end portions of the connecting links 41 and 42 are disposed on a downward side as compared with the upper end portion of the upper rail 52.

Specifically, the base connecting portions 41c and 42c of the connecting links 41 and 42 are attached to the inner side surface of the connecting bracket 60 (second connecting bracket 70). In addition, the base connecting portions 41c and 42c, the connecting bracket 60, the second connecting bracket 70, and the rail device 50 (upper rail 52) are disposed at positions overlapping each other in the up to down direction.

According to this configuration, the height position of the connecting links 41 and 42 can be lowered, and the height position of the seat cushion 1 can be lowered. In addition, the seated occupant can spend time comfortably in the interior space of the vehicle.

In the above-described configuration, as illustrated in FIG. 4, the connecting links 41 and 42 have a bent shape that is bent inward in the seat width direction, and are disposed on an inner side in the seat width direction as compared with the lower rail 51 and the upper rail 52.

According to this configuration, the lower rail 51, the upper rail 52, and the connecting links 41 and 42 can be disposed in a compact manner.

In the above-described configuration, as illustrated in FIG. 4, the connecting bracket 60 includes an upward bending portion 63.

According to this configuration, the connecting bracket 60 can be reinforced. In addition, a contact area with the first connecting link 41 and a contact area with the second connecting bracket 70 can be increased, and assembly strength of the first connecting link 41 and the second connecting bracket 70 can be raised.

In the above-described configuration, as illustrated in FIG. 4, the connecting links 41 and 42 are bent inward to be separated from the upward bending portion 63 of the connecting bracket 60 in the seat width direction.

In addition, the side frame 11 is disposed on an inner side in the seat width direction as compared with the upward bending portion 63.

According to this configuration, interference between the connecting links 41 and 42, and the connecting bracket 60 can be suppressed. In addition, interference between the side frame 11 and the connecting bracket 60 can be suppressed.

According to the above-described configuration, in a conveyance in which a conveyance battery is mounted, the height position of the conveyance seat can be further lowered as compared with the related art. Accordingly, the seated occupant can spend time comfortably in the cabin of the conveyance.

### <<Modification Example 1>>

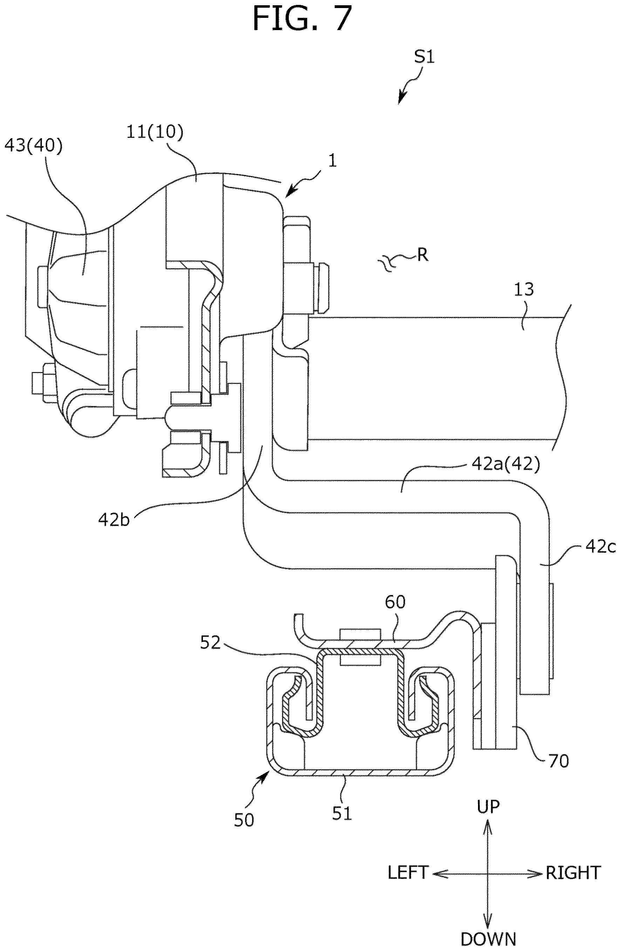

Next, Modification Example 1 of the conveyance seat S1 will be described with reference to FIG. 7.

Note that, description of contents which are redundant with the above-described conveyance seat S1 will be omitted (the same shall apply hereinafter).

In a conveyance seat S1 of Modification Example 1, the connecting links 41 and 42 have a bent shape that is bent long in the seat width direction. Specifically, the link main body portions 41a and 42a of the connecting links 41 and 42 extend in a long length in the seat width direction.

In addition, the side frame 11 is disposed on an outer side in the seat width direction as compared with the rail device 50 and the connecting bracket 60.

According to this, an interior space R (accommodation space) of the seat cushion 1 can be broadened. Accordingly, it is possible to relatively freely dispose movable devices such as a blower device and a harness by using the interior space R.

### <<Modification Example 2>>

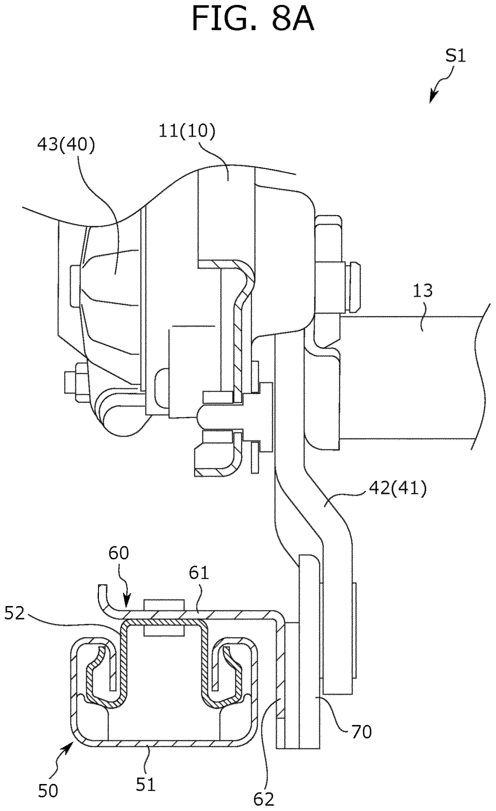

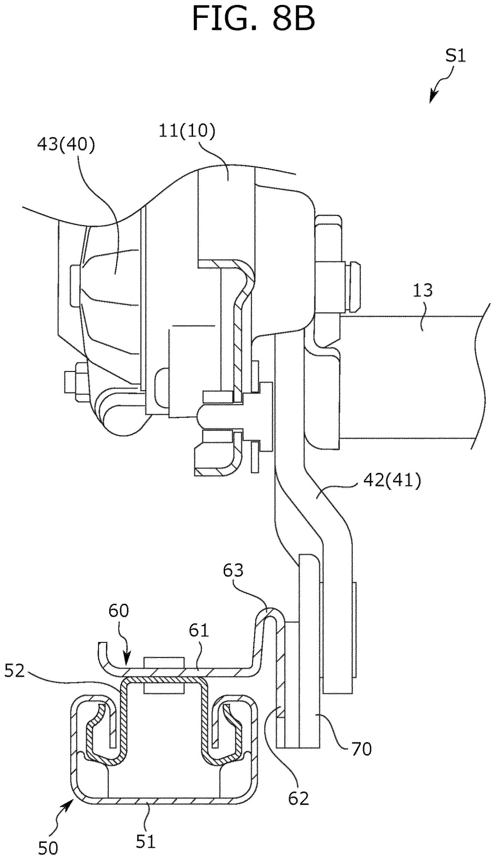

Next, Modification Example 2 of the conveyance seat S1 will be described with reference to FIGS. 8A and 8B.

In a conveyance seat S1 of Modification Example 2, the shape of the connecting bracket 60 is changed in correspondence with the design of the height link device 40 (connecting links 41 and 42) and the rail device 50 (the lower rail 51 and the upper rail 52).

In FIG. 8A, the connecting bracket 60 has a shape that is not provided with the upward bending portion 63. That is, the connecting bracket 60 has a shape including the upper wall portion 61, and the side wall portion 62 that extends downward continuously from an inner side end portion of the upper wall portion 61.

In addition, in FIG. 8B, the upward bending portion 63 of the connecting bracket 60 has a shape that further protrudes upward. That is, the upward bending portion 63 protrudes to a height position corresponding to the upper end portion of the connecting bracket 60.

According to the connecting bracket 60 as illustrated in FIG. 8A, the shape of the connecting bracket 60 can be made simple, and thus interference with other constituent components can be suppressed. According to the connecting bracket 60 as illustrated in FIG. 8B, the contact area with the first connecting link 41 and the contact area with the second connecting bracket 70 can be further increased, and thus the assembly strength thereof can be raised.

### <<Modification Example 3>>

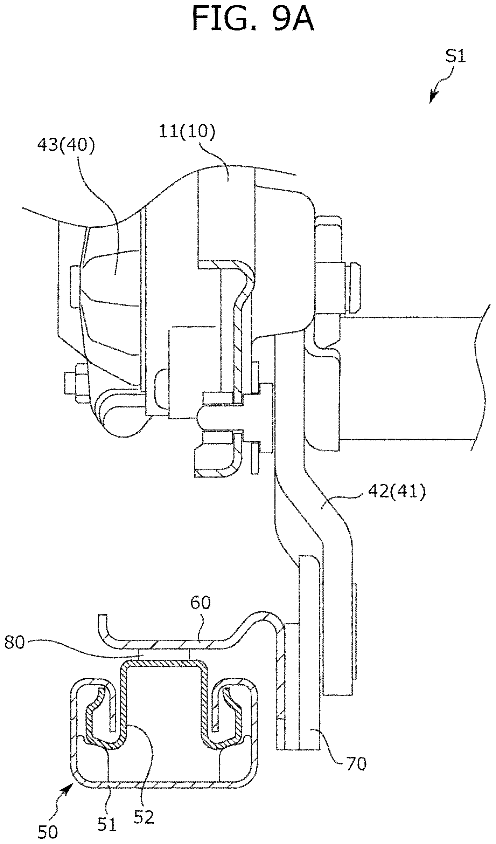

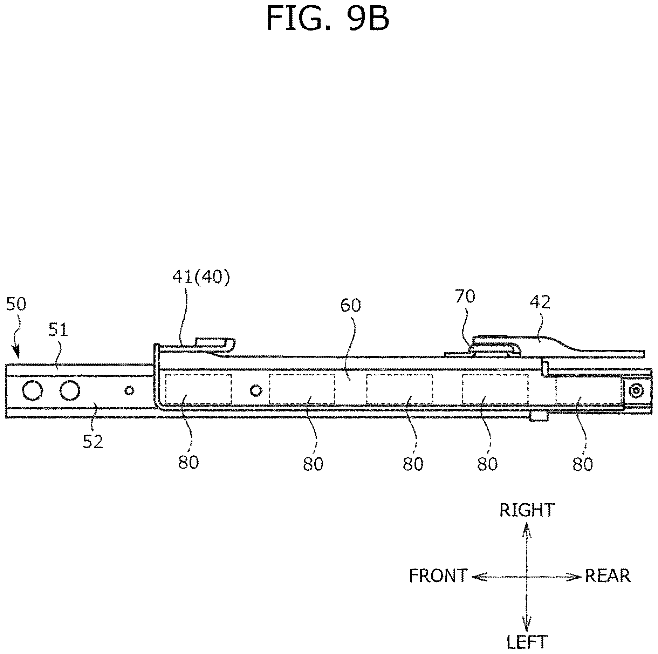

Next, Modification Example 3 of the conveyance seat S1 will be described with reference to FIGS. 9A and 9B.

In a conveyance seat S1 of Modification Example 3, a seating sensor 80 configured to detect that an occupant is seated on the conveyance seat S1 is further provided.

The seating sensor 80 is called a seat weight sensor, and is connected to a control device (not illustrated). The seating sensor 80 transmits a detection signal when detecting that an occupant is seated to the control device.

The seating sensor 80 is attached between the rail device 50 (upper rail 52) and the connecting bracket 60 in the up to down direction, and a plurality of the seating sensors 80 are arranged with an interval in the seat front to rear direction.

As illustrated in FIG. 9B, the seating sensors 80 are arranged at a position overlapping the connecting links 41 and 42 in the seat front to rear direction. According to this, detection sensitivity (detection accuracy) of the seating sensors 80 can be raised.

In addition, as illustrated in FIG. 9B, the seating sensors 80 are arranged at positions which do not overlap the connecting links 41 and 42 in the seat front to rear direction. According to this, the seating sensors 80 can be freely arranged.

### <<Modification Example 4>>

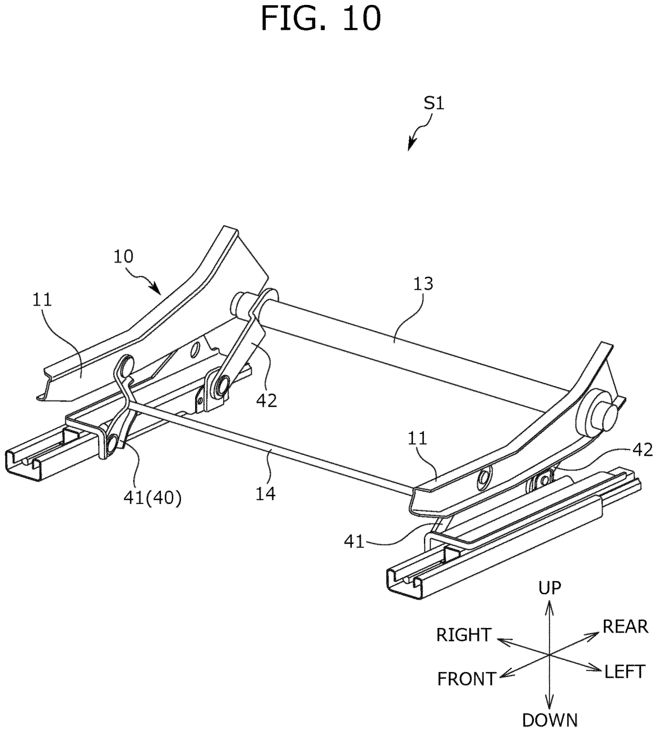

Next, Modification Example 4 of the conveyance seat S1 will be described with reference to FIG. 10.

In a conveyance seat S1 of Modification Example 4, the cushion frame 10 further includes a front connecting pipe 14.

The front connecting pipe 14 is a connecting frame that connects the right and left first connecting links 41 (link main body portions 41a). According to this, the connection strength of the right and left first connecting links 41 can be raised.

Note that, the front connecting pipe 14 also has a function of preventing a phenomenon (a so-called submarine phenomenon) in which a seated occupant sinks when the conveyance receives impact from the outside (when the conveyance collides with something from the outside).

### <<Modification Example 5>>

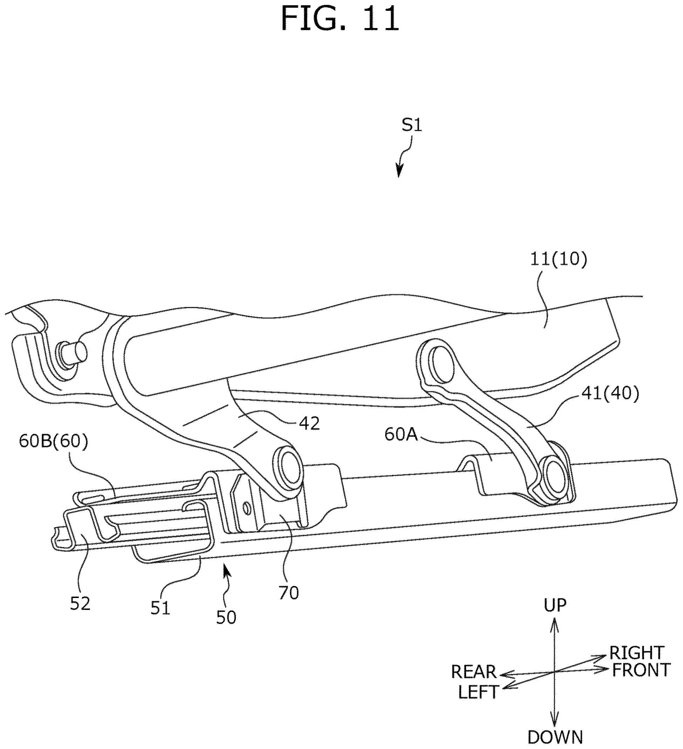

Next, Modification Example 5 of the conveyance seat S1 will be described with reference to FIG. 11.

In a conveyance seat S1 of Modification Example 5, the connecting bracket 60 is divided into a front connecting bracket 60A and a rear connecting bracket 60B.

The front connecting bracket 60A connects the first connecting link 41 and a front portion of the upper rail 52.

The rear connecting bracket 60B connects the second connecting link 42 (the second connecting bracket 70) and a rear portion of the upper rail 52.

According to the above-described configuration, the weight of the connecting bracket 60 can be reduced.

### <<Modification Example 6>>

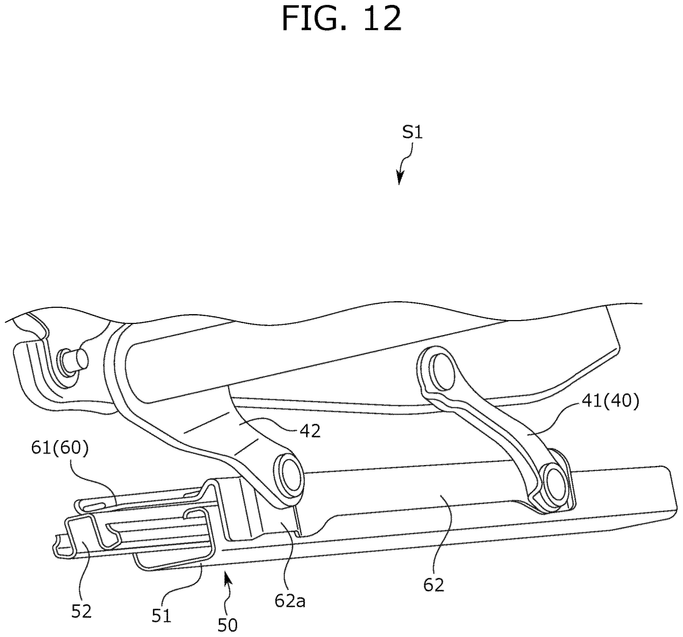

Next, Modification Example 6 of the conveyance seat S1 will be described with reference to FIG. 12.

A conveyance seat S1 of Modification Example 6 has a configuration in which the second connecting bracket 70 is not used. In other words, the connecting bracket 60 has a shape that is integrated with the second connecting bracket.

Specifically, the side wall portion 62 of the connecting bracket 60 is formed to partially overhang to an inner side in the seat width direction. In addition, an overhang portion 62a of the side wall portion 62 is connected to the second connecting link 42.

According to the above-described configuration, the number of components can be reduced as much as possible.

### <<Modification Example 7>>

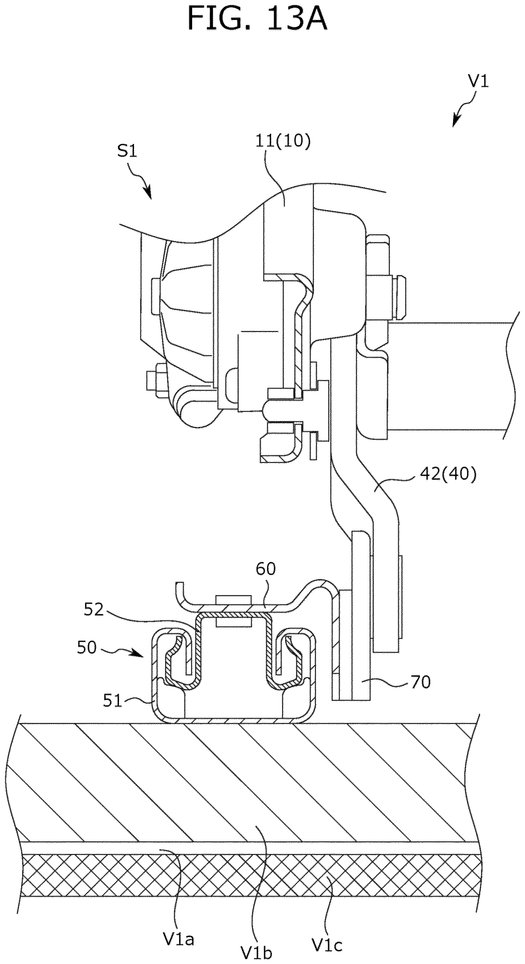

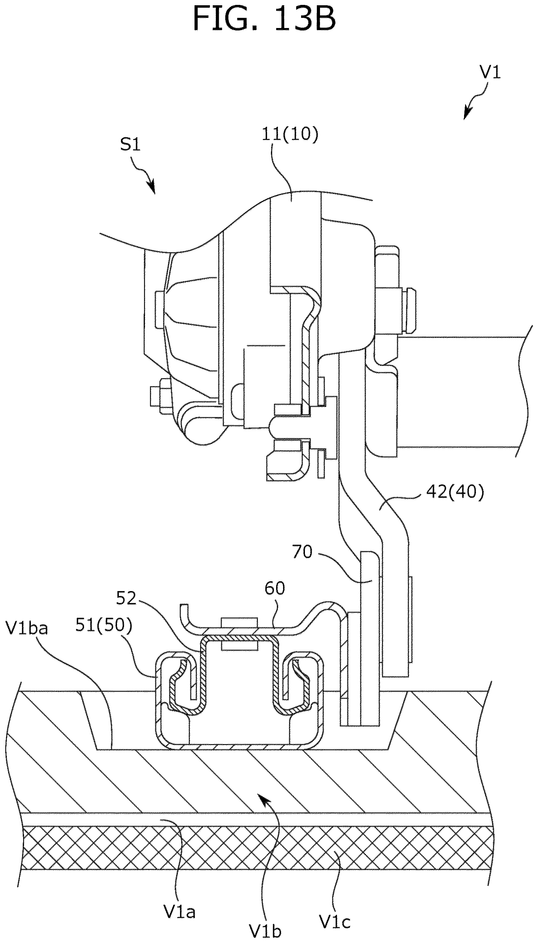

Next, Modification Example 7 of the conveyance seat S1 will be described with reference to FIGS. 13A and 13B.

A conveyance seat S1 of Modification Example 7 is a seat for electric vehicles, and is attached to an upper surface of a conveyance floor V1a through a plate-shaped floor reinforcement member V1b.

Specifically, as illustrated in FIG. 13A, the rail device 50 (lower rail 51) is attached to an upper surface of the floor reinforcement member V1b. According to this, the conveyance seat S1 can be firmly assembled.

Note that, in the conveyance V1, a conveyance battery V1c (lithium battery) is disposed at a downward position as compared with the conveyance seat S1 and the conveyance floor V1a.

In addition, in FIG. 13B, an accommodation concave portion V1ba is formed in the upper surface of the floor reinforcement member V1b with an interval in the seat width direction. The conveyance seat S1 (rail device 50) is accommodated in the accommodation concave portion V1ba.

According to this, the height position of the conveyance seat can be lowered, and a seated occupant can spend time comfortably in the cabin of the conveyance.

### <<Others>>

In the above-described embodiment, as illustrated in FIG. 2 to FIG. 4, the conveyance seat S1 includes the rail device 50, and the seat cushion 1 is supported from a downward side of the rail device 50, but there is no particular limitation.

For example, the conveyance seat S1 may include a base member (base bracket) that is fixed onto a vehicle body floor instead of the rail device 50. That is, the seat cushion 1 may be supported from a downward side by the base bracket.

In the above-described embodiment, as illustrated in FIG. 2 to FIG. 4, the conveyance seat S1 includes the reclining device 30 and the height link device 40, but there is no particular limitation. That is, the conveyance seat S1 may not include the reclining device 30 and the height link device 40.

Even in this case, the conveyance seat S1 may include a connecting member that connects the seat cushion 1 and the base member instead of the connecting links 41 and 42.

In the above-described embodiment, as illustrated in FIG. 3 and FIG. 4, downward portions of the connecting links 41 and 42 are attached to the rail device 50 through the connecting bracket 60, but there is no particular limitation.

For example, the downward portions of the connecting links 41 and 42 may be directly attached to the side surface of the rail device 50 (upper rail 52).

Even in this configuration, the height position of the connecting links 41 and 42 can be lowered, and the height position of the seat main body can be lowered.

### <Second Embodiment>

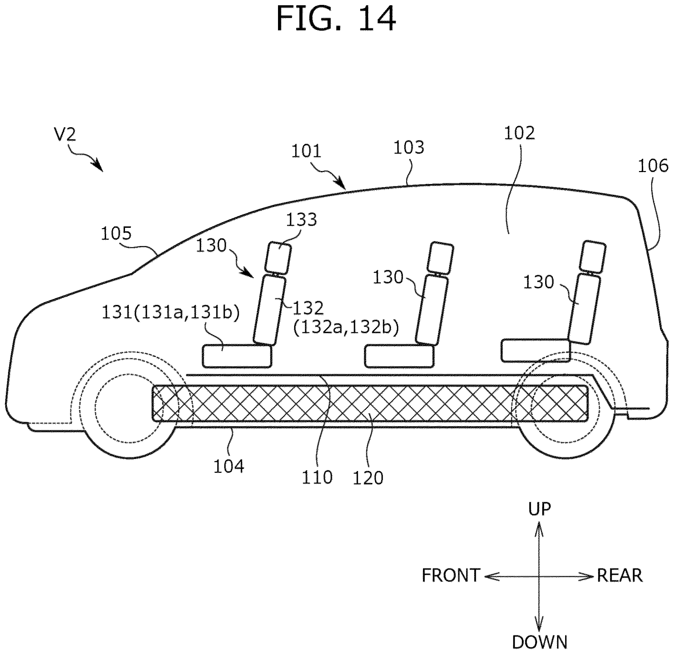

Next, a conveyance V2 of a second embodiment will be described with reference to FIG. 14 to FIG. 17.

The conveyance V2 is a conveyance in which a conveyance battery is mounted, and can allow a seated occupant to spend time more comfortably in an interior space (cabin) of the conveyance as compared with the related art. This is also true of conveyances V3 to V6.

For example, the conveyance V2 is a vehicle (automobile) as illustrated in FIG. 14, and is an electrically driven vehicle (electric vehicle) including three rows of conveyance seats 130 in a front to rear direction of the conveyance V2. Note that, the conveyance V2 may be a vehicle including one row, two rows, or four rows or more of conveyance seats 130.

As illustrated in FIG. 14, the conveyance V2 includes a conveyance main body 101, a conveyance floor 110 that is attached at the interior of the conveyance main body 101, a conveyance battery 120, and the conveyance seats 130.

The conveyance main body 101 corresponds to a vehicle body, and includes a side wall portion 102 that forms a side wall of the conveyance V2, a top wall portion 103 that forms the ceiling of the conveyance V2, a bottom wall portion 104 that forms a bottom wall of the conveyance V2, a front wall portion 105, and a rear wall portion 106.

As illustrated in FIG. 14, FIG. 15, and FIG. 17, the conveyance floor 110 is a vehicle body floor to which the conveyance seats 130 and conveyance interior members are attached, and is disposed on a slightly upward side as compared with the bottom wall portion 104 of the conveyance main body 101.

At the interior of the conveyance V2, a region surrounded by the conveyance floor 110, the side wall portion 102, the top wall portion 103, the front wall portion 105, and the rear wall portion 106 become a cabin (interior space) of the conveyance V2. An occupant spends time in the cabin while the conveyance V2 is traveling.

Note that, examples of the conveyance interior members include an illuminating device, a screen device, and the like.

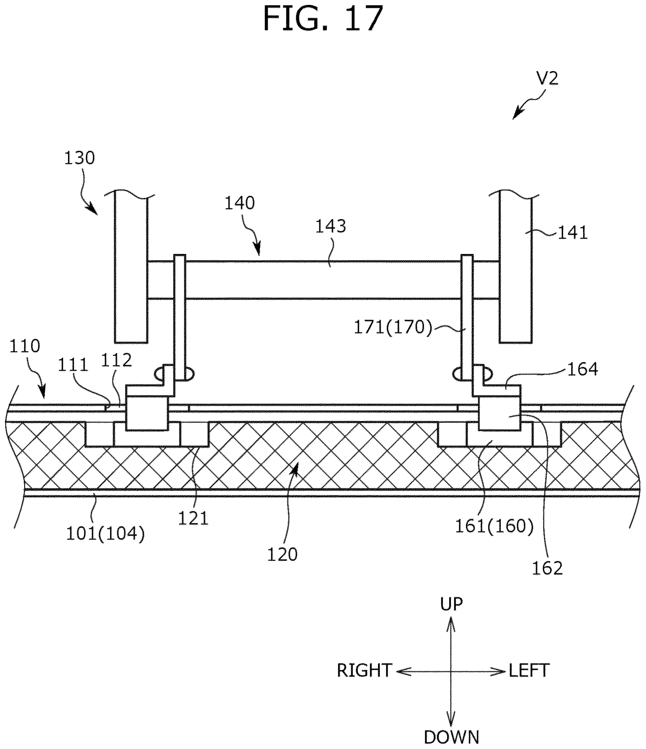

As illustrated in FIG. 17, slit-shaped through-holes 111 are formed in a surface of the conveyance floor 110 with a predetermined interval in a width direction of the conveyance V2. Each of the plurality of through-holes 111 extends long in a front to rear direction of the conveyance V2.

In addition, on the surface of the conveyance floor 110, a gap filling member 112 that fills a portion of the through-holes 111 is attached to edge portions of the through-holes 111. The gap filling member 112 is a member flexibility (elasticity), and is attached so that foreign matters do not enter from the conveyance floor 110 through the through-holes 111.

The conveyance battery 120 corresponds to an in-vehicle battery, and is a relatively large-sized battery that is electrically connected to a drive device of the conveyance V2, various electric devices (electric equipment), a control device, and the conveyance seats 130 at the inside of the conveyance V2, and supplies electric power to the devices.

As illustrated in FIG. 14, FIG. 15, and FIG. 17, the conveyance battery 120 is attached onto the bottom wall portion 104 of the conveyance V2, and is disposed on a downward side as compared with the conveyance floor 110.

Accommodation concave portions 121 (concave portions) are formed in the upper surface of the conveyance battery 120 with a predetermined interval in the width direction of the conveyance V2. Each of the plurality of accommodation concave portions 121 extends long in a front to rear direction of the conveyance V2.

As illustrated in FIG. 14 to FIG. 17, the conveyance seats 130 are vehicle seats, and are disposed on upward positions as compared with the conveyance floor 110 and the conveyance battery 120.

Each of the conveyance seats 130 includes a seat main body including a seat cushion 131, a seat back 132, and a headrest 133, a rail device 160 that moves the seat main body in a front to rear direction with respect to the conveyance floor 110, a height link device 170 that moves up and down the seat main body with respect to the conveyance floor 110, and a reclining device 180 that rotatably connects the seat back 132 to the seat cushion 131.

The seat cushion 131 is a seating portion that supports a seated occupant from a downward side, and includes a cushion frame 140 as a skeleton, a pad material 131a that is placed on the cushion frame 140, and a skin material 131b that covers the cushion frame 140 and the pad material 131a.

The seat back 132 is a backrest portion that supports the seated occupant from a rear side, and includes a back frame 150, a pad material 132a, and a skin material 132b.

The headrest 133 is a head portion that supports the head of the seated occupant from a rear side.

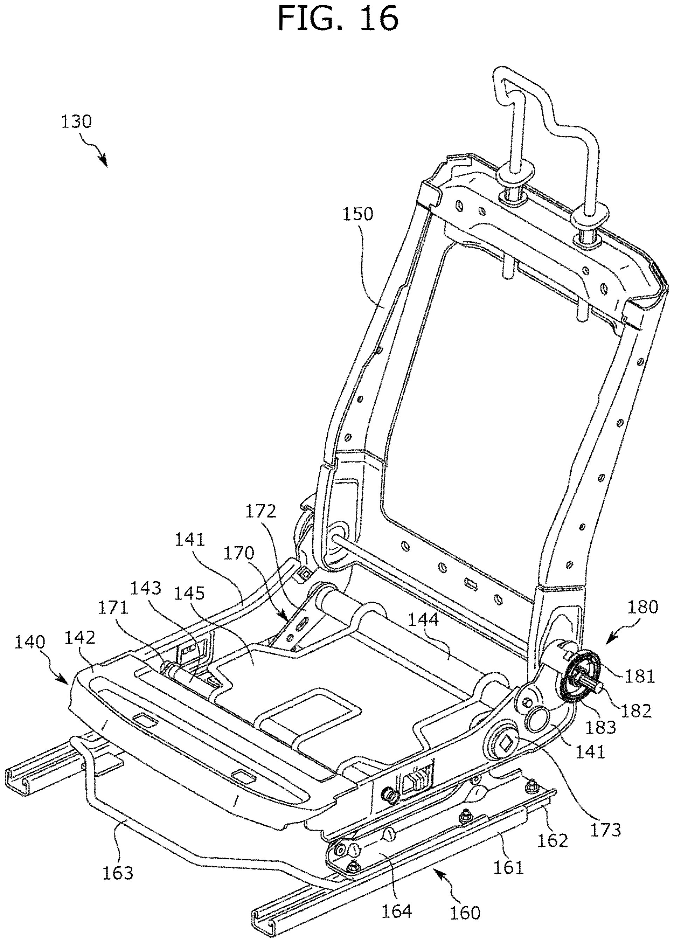

As illustrated in FIG. 16 and FIG. 17, the cushion frame 140 is constituted by an approximately rectangular frame-shaped body, and includes side frames 141 disposed on rightward and leftward sides, a plate-shaped pan frame 142 that is bridged to front end portions of the side frames 141, a front connecting pipe 143 that connects front portions of the side frames 141, a rear connecting pipe 144 that connects rear portions of the side frames 141, and a support plate 145 (pressure receiving plate) that is hooked onto the front connecting pipe 143 and the rear connecting pipe 144, and extends in the seat front to rear direction.

The side frame 141 is a plate-shaped frame that is elongated in the seat front to rear direction.

The reclining device 180 is attached to rear portions of the side frame 141, and the rail device 160 is attached to downward portions of the side frames 141 through the height link device 170.

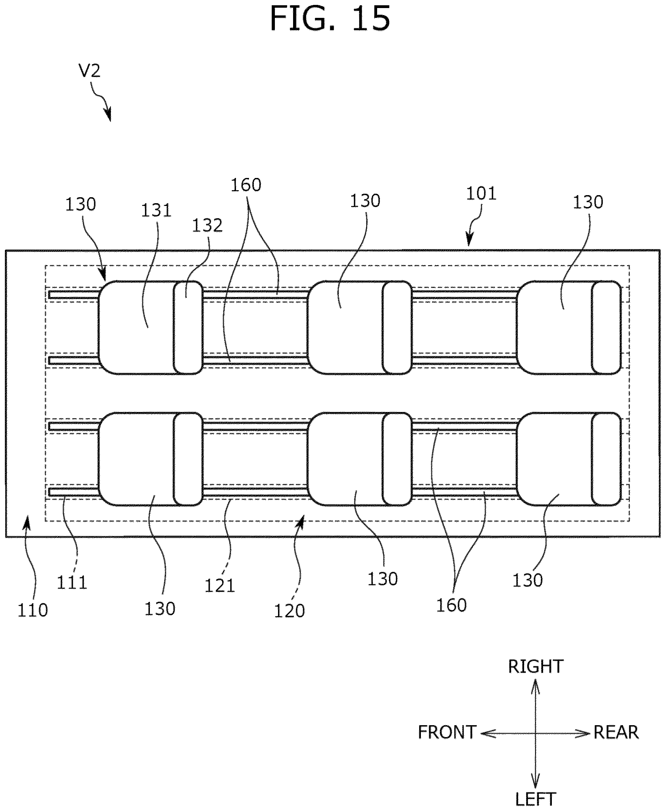

As illustrated in FIG. 15 to FIG. 17, the rail device 160 corresponds to a base member that supports the seat main body from a downward side, is disposed between the seat main body and the conveyance battery 120 in the up to down direction, and is fixed to an upper surface of the conveyance battery 120.

As illustrated in FIG. 17, the rail device 160 is disposed to pass through the conveyance floor 110 through the through-holes 111.

Specifically, right and left gap filling members 112 are respectively attached to edge portions of portions where the through-holes 111 are formed in the conveyance floor 110. Therefore, the rail device 160 (upper rail 162) is disposed to be sandwiched between the right and left gap filling members 112.

The rail device 160 includes right and left lower rails 161 extending in the front to rear direction, right and left upper rails 162 which are supported to be slidable along the lower rails 161, and move together with the seat main body, a lock member that locks the upper rails 162 so as not to be slidable with respect to the lower rails 161, and a rail operation lever 163 for releasing a locked state of the lock member.

In addition, the rail device 160 further includes a connecting bracket 164 that is attached to an upper surface of each of the upper rails 162 and connects the upper rail 162 and the height link device 170 (connecting links 171 and 172) .

Each of the lower rails 161 is disposed on a downward side as compared with the conveyance floor 110, and is attached to an upper surface of the conveyance battery 120.

Specifically, the lower rail 161 is accommodated in the accommodation concave portion 121 of the conveyance battery 120 and is fixed to the accommodation concave portion 121. For example, the lower rail 161 is fastened with a bolt from an upward side in a state of being accommodated in the accommodation concave portion 121.

The upper rail 162 is disposed on a downward position as compared with the conveyance floor 110, and is attached to each of the lower rails 161. A portion (upper end portion) of the upper rail 162 slightly protrudes upward as compared with the conveyance floor 110.

Note that, the entirety of the upper rails 162 may be disposed on a downward side as compared with the conveyance floor 110.

The connecting bracket 164 is a bracket having an L-shaped longitudinal cross-section, and extends long in the front to rear direction of the conveyance V2.

The connecting bracket 164 includes a bottom wall portion that is attached to an upper surface of the upper rail 162, and a side wall portion that protrudes upward from an inner side end portion of the bottom wall portion in the width direction and is attached to connecting links 171 and 172 to be described later.

In the above-described configuration, as illustrated in FIG. 17, the rail device 160 is disposed at a position overlapping a portion (upward portion) of the conveyance battery 120 in the up to down direction.

Specifically, the lower rail 161 is disposed at a position overlapping a portion (upward portion) of the conveyance battery 120 in the up to down direction. In addition, a portion (lower end portion) of the upper rail 162 is disposed at a position overlapping a portion (upper end portion) of the conveyance battery 120 in the up to down direction.

According to this, the height position of the conveyance seats 130 can be lowered, and the cabin of the conveyance V2 can be secured to be wide. That is, the seated occupant can spend time comfortably in the cabin.

As illustrated in FIG. 16 and FIG. 17, the height link device 170 is attached between the rail device 160 and the cushion frame 140 in the up to down direction.

The height link device 170 includes right and left first connecting links 171, right and left second connecting links 172 which are disposed on a rear side as compared with the first connecting links 171, a brake unit 173 that restricts a moving up and down motion of the seat main body, and an operation lever for releasing a restriction state of the brake unit 173.

Each of the first connecting links 171 connects the front connecting pipe 143 and the connecting bracket 164. Each of the second connecting links 172 connects the rear connecting pipe 144 and the connecting bracket 164.

When the operation lever is operated, the second connecting link 172 (the left second connecting link 172) rotates as a driving link, and the right second connecting link 172, the right and left first connecting links 171 also rotate. According to this, the seat main body is raised, and the seat height is adjusted.

As illustrated in FIG. 16, the reclining device 180 is a device that rotatably connects the back frame 150 to the cushion frame 140, and is capable of locking the back frame 150.

The reclining device 180 includes a reclining main body 181 that is driven when rotating the back frame 150, a rotating shaft 182, a spiral spring 183 that biases the back frame 150 to forwardly rotate around the rotating shaft 182, and an operation lever that is operated to release a locked state of the back frame 150.

The reclining main body 181 includes a known lock mechanism, and can switch a state of the back frame 150 between a locked state fixed to the cushion frame 140 and an unlocked state capable of rotating with respect to the cushion frame 140.

The rotating shaft 182 is pivotally supported to the back frame 150 side and the cushion frame 140 side in the seat width direction. In the spiral spring 183, one end is locked to the back frame 150 side, and the other end is locked to the cushion frame 140 side.

According to the above-described configuration, in the conveyance in which the conveyance battery is mounted, the height position of the conveyance seat can be further lowered as compared with the related art. Therefore, the seated occupant can spend time comfortably in the cabin of the conveyance.

### <Third Embodiment>

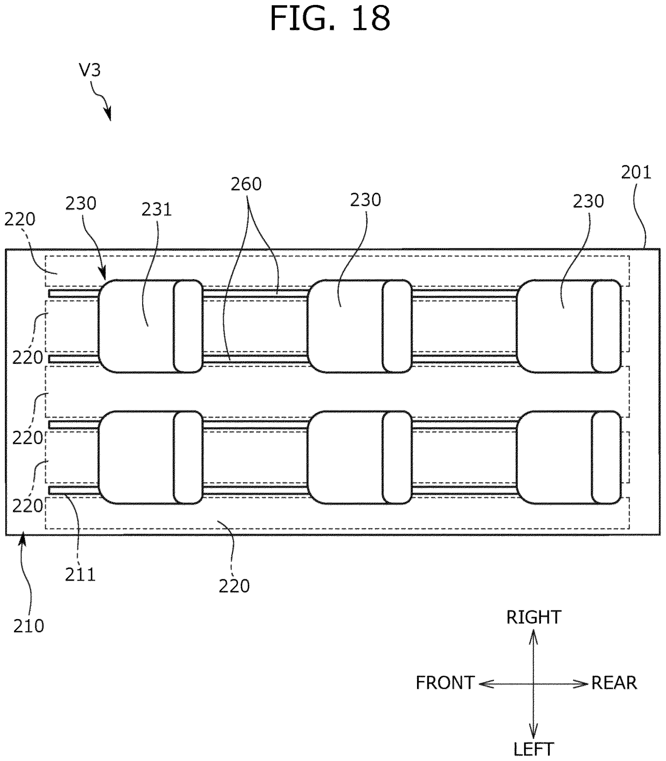

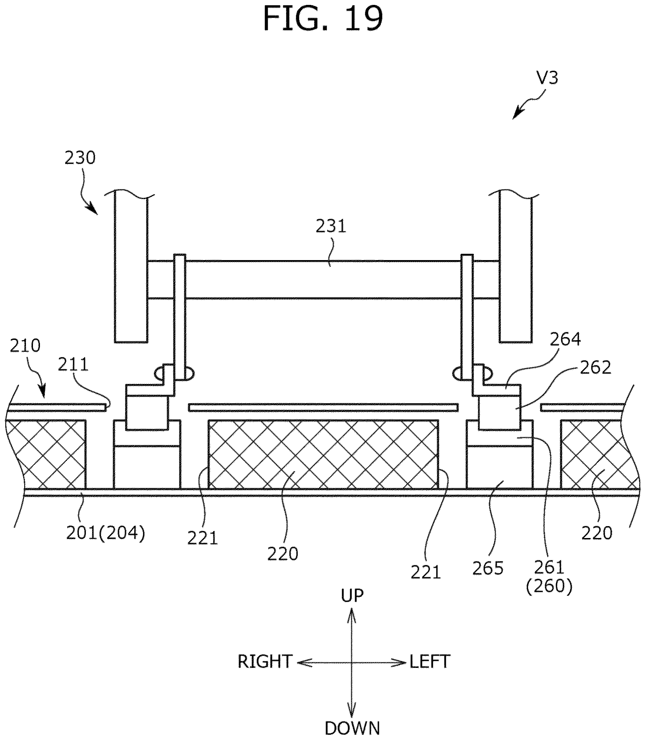

Next, a conveyance V3 of a third embodiment will be described with reference to FIG. 18 and FIG. 19.

Note that, description of contents which are redundant with the above-described conveyance V2 will be omitted.

The conveyance V3 includes a conveyance main body 201, a conveyance floor 210, a conveyance battery 220, and a conveyance seat 230.

The conveyance main body 201 includes a bottom wall portion 204.

Slit-shaped through-holes 211 are formed in a surface of the conveyance floor 210 with an interval in a width direction of the conveyance V3.

The conveyance battery 220 is attached onto the bottom wall portion 204 of the conveyance V3, and is disposed on a downward position as compared with the conveyance floor 210.

A plurality of the conveyance batteries 220 are aligned with an interval in the width direction of the conveyance V3. A predetermined gap 221 is formed between the conveyance batteries 220 adjacent to each other.

The conveyance seat 230 is disposed on an upward position as compared with the conveyance floor 210 and the conveyance batteries 220.

The conveyance seat 230 includes a seat cushion 231 and a rail device 260.

The rail device 260 is disposed between the seat cushion 231 and the conveyance main body 201 (bottom wall portion 204) in the up to down direction, and is attached to an upper surface of the bottom wall portion 204.

In addition, the rail device 260 is disposed between the plurality of conveyance batteries 220 in the width direction of the conveyance V3. That is, the rail device 260 is disposed in the gap 221.

The rail device 260 includes a lower rail 261, an upper rail 262, a connecting bracket 264, and a support bracket 265.

The lower rail 261 is attached to an upper surface of a support bracket 265 that is fixed onto the conveyance main body 201 (bottom wall portion 204).

The lower rail 261 and the support bracket 265 are disposed at downward positions as compared with the conveyance floor 210, and are disposed at positions overlapping the conveyance battery 220 in the up to down direction.

The upper rail 262 is disposed at a downward position as compared with the conveyance floor 210, and a portion (upper end portion) of the upper rail 262 slightly protrudes upward as compared with the conveyance floor 210.

Even in the above-described configuration, in the conveyance in which the conveyance battery is mounted, the height position of the conveyance seat can be lowered as compared with the related art. Therefore, a seated occupant can spend time comfortably in the cabin of the conveyance.

### <<Others>>

In the above-described embodiment, as illustrated in FIG. 18, the conveyance seat 230 includes the rail device 260, and the seat cushion 231 is supported from a downward side by the rail device 260, but there is no particular limitation.

For example, the conveyance seat 230 may include a base member (base bracket) that is fixed onto the conveyance battery 220 instead of the rail device 260.

In the above-described embodiment, as illustrated in FIG. 18, the conveyance seat 230 includes the height link device 270 and the reclining device 280, but there is no particular limitation. That is, the conveyance seat 230 may not include the height link device 270 and the reclining device 280.

### <Fourth Embodiment>

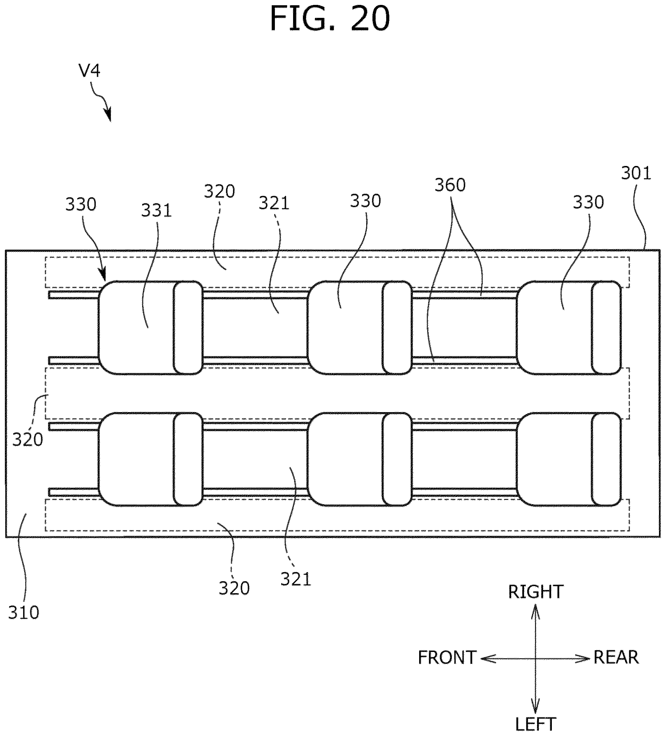

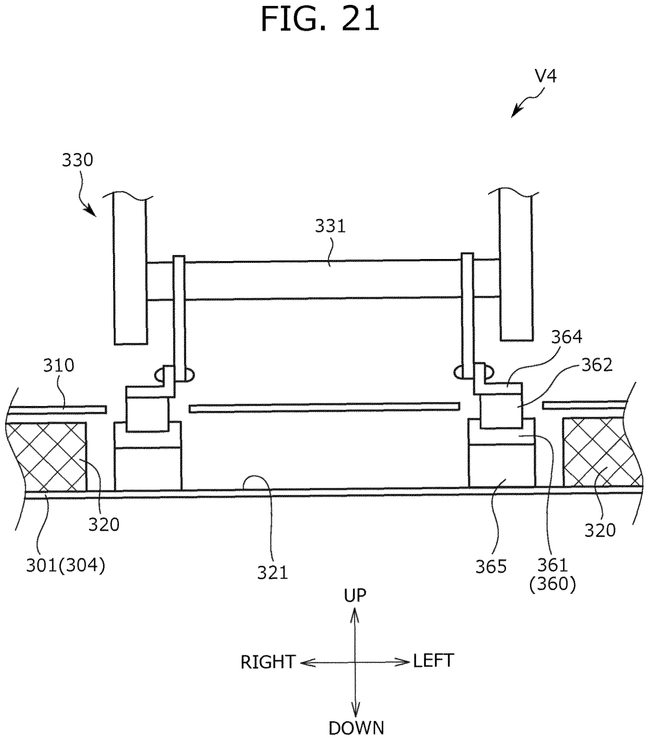

Next, a conveyance V4 of a fourth embodiment will be described with reference to FIG. 20 and FIG. 21.

Note that, description of contents which are redundant with the above-described conveyances V2 and V3 will be omitted.

The conveyance V4 includes a conveyance main body 301, a conveyance floor 310, a conveyance battery 320, and a conveyance seat 330.

The conveyance battery 320 is attached onto a bottom wall portion 304 of the conveyance V4, and is disposed on a downward position as compared with the conveyance floor 310.

A plurality of the conveyance batteries 320 are arranged with an interval in the width direction of the conveyance V4. A gap 321 is formed between the plurality of conveyance batteries 320. The gap 321 is formed to be wider than the conveyance seat 330.

The conveyance seat 330 includes a seat cushion 331 and a rail device 360.

The rail device 360 is disposed between the seat cushion 331 and the conveyance main body 301 (bottom wall portion 304) in the up to down direction, and is attached to an upper surface of the bottom wall portion 304.

In addition, the rail device 360 is disposed between the plurality of conveyance batteries 320 in the width direction of the conveyance V4. That is, the rail device 360 is disposed in the gap 321.

The rail device 360 includes a lower rail 361, an upper rail 362, a connecting bracket 364, and a support bracket 365.

The lower rail 361 is attached to an upper surface of a support bracket 365 fixed onto the conveyance main body 301 (bottom wall portion 204).

The lower rail 361 and the support bracket 365 are disposed at downward positions as compared with the conveyance floor 210, and are disposed at positions overlapping the conveyance batteries 320 in the up to down direction.

The upper rail 362 is disposed on a downward position as compared with the conveyance floor 310, and a portion (upper end portion) of the upper rail 362 slightly protrudes upward as compared with the conveyance floor 310.

Even in the above-described configuration, in the conveyance in which the conveyance battery is mounted, the height position of the conveyance seat can be further lowered as compared with the related art. Therefore, the seated occupant can spend time comfortably in the cabin of the conveyance.

### <Fifth Embodiment>

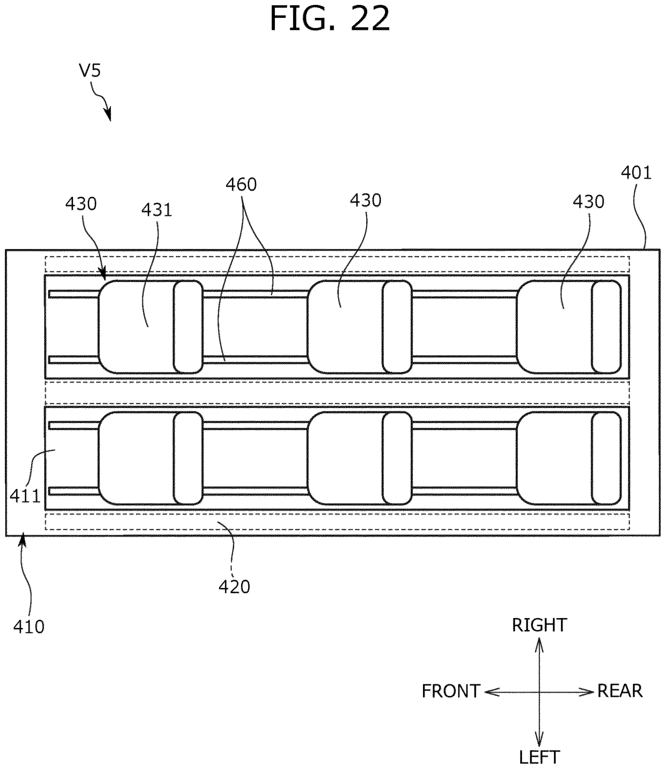

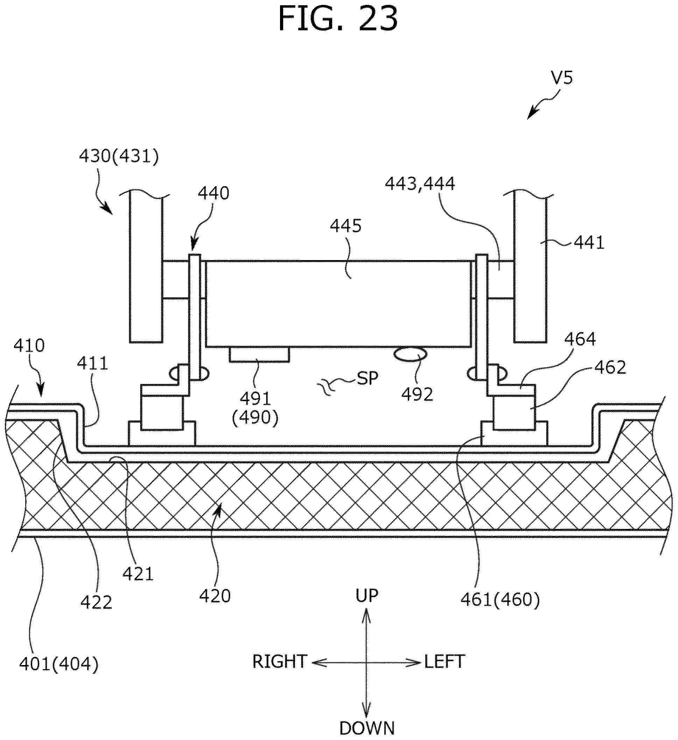

Next, a conveyance V5 of a fifth embodiment will be described with reference to FIG. 22 and FIG. 23.

Note that, description of contents which are redundant with the above-described conveyances V2 to V4 will be omitted.

The conveyance V5 includes a conveyance main body 401, a conveyance floor 410, a conveyance battery 420, and a conveyance seat 430.

An accommodation concave portion 411 (concave portion) is formed in an upper surface of the conveyance floor 410 to be wider than the conveyance seat 430. The accommodation concave portion 411 extends long in the front to rear direction of the conveyance V2.

The conveyance battery 420 is attached to a bottom wall portion 404 of the conveyance V4, and is disposed on a downward position as compared with the conveyance floor 410.

An accommodation concave portion 421 (concave portion) is formed in an upper surface of the conveyance battery 420 to be wider than the conveyance seat 430. The accommodation concave portion 421 extends long in the front to rear direction of the conveyance V2.

Note that, as illustrated in FIG. 23, a step surface between a surface of the conveyance battery 420 and the accommodation concave portion 421 is an inclined surface 322.

The conveyance seat 430 is disposed on an upward side as compared with the conveyance floor 410.

The conveyance seat 430 includes a seat cushion 431, a rail device 460, and a blower device 490 that ejects the air toward a seated occupant.

A cushion frame 440 that is a skeleton of the seat cushion 431 includes right and left side frames 441, a front connecting pipe 443, a rear connecting pipe 444, and a support plate 445 that is hooked onto the front connecting pipe 443 and the rear connecting pipe 444.

The blower device 490 (blower main body 491) is attached to a bottom surface of the support plate 445.

The rail device 460 is attached to an upper surface of the conveyance floor 410.

Specifically, the rail device 360 is accommodated in the accommodation concave portion 411 of the conveyance floor 410, and is accommodated in the accommodation concave portion 421 of the conveyance battery 420.

The rail device 460 includes a lower rail 461, an upper rail 462, and a connecting bracket 464.

The blower device 490 includes a blower main body 491 and a harness 492 that electrically connects the blower main body 491 and a control device (not illustrated).

The blower main body 491 is attached to a bottom surface of one end portion of the support plate 445 in the width direction.

The harness 492 extends along a bottom surface of the support plate 445. Specifically, the harness 492 extends from the blower main body 491 in the seat width direction, and further extends in the front to rear direction along another end portion of the support plate 445 in the width direction.

In the above-described configuration, as illustrated in FIG. 23, a space SP having a predetermined size is formed in a region surrounded by the conveyance floor 410, the right and left rail devices 460, and the seat cushion 431 in a front view.

According to this, it is possible to dispose the blower main body 491 or to route the harness 492 by using the space SP. In addition, the space SP can be used as an accommodation space at a downward position of the seat cushion 431. In addition, arrangement of the right and left rail devices 460 can be freely set by using the space SP.

Even in the above-described configuration, in the conveyance in which the conveyance battery is mounted, the height position of the conveyance seat can be further lowered as compared with the related art. Therefore, a seated occupant can spend time comfortably in the cabin of the conveyance.

### <Sixth Embodiment>

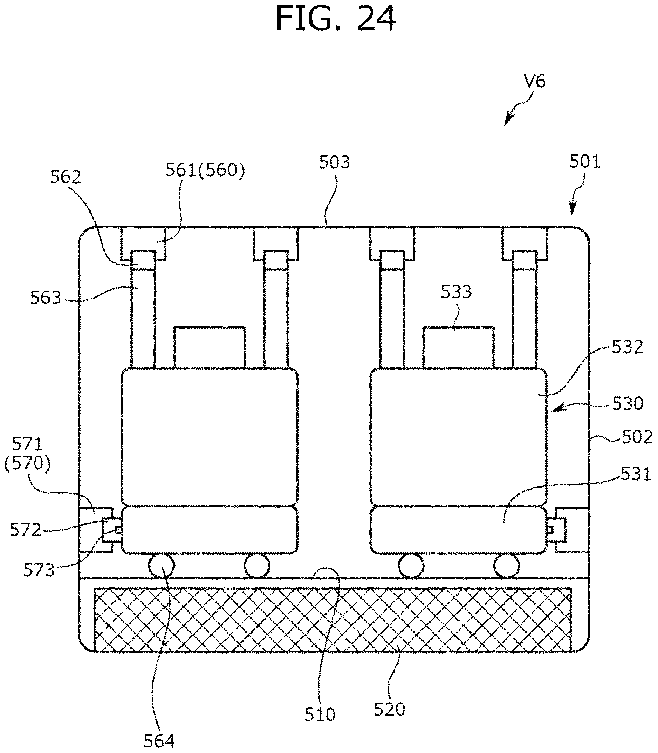

Next, a conveyance V6 of a sixth embodiment will be described with reference to FIG. 24.

Note that, description of contents which are redundant with the above-described conveyances V2 to V5 will be omitted.

The conveyance V6 includes a conveyance main body 501, a conveyance floor 510, a conveyance battery 520, and a conveyance seat 530.

The conveyance floor 510 is disposed on an upward side as compared with the conveyance battery 520.

The conveyance seat 530 is disposed on an upward side as compared with the conveyance floor 510.

The conveyance seat 530 includes a seat main body including a seat cushion 531, a seat back 532, and a headrest 533, a rail device 560 that moves the seat main body in the front to rear direction with respect to the conveyance main body 501 (top wall portion 503), and an auxiliary rail device 570 that moves the seat main body in the front to rear direction with respect to the conveyance main body 501 (side wall portion 502) .

The rail device 560 includes a fixed rail 561 that is fixed to the top wall portion 503, a movement rail 562 that slides along the fixed rail 561 in the front to rear direction, a connecting member 563 that connects the movement rail 562 and the seat back 532, and a ball portion 564 (caster portion) that is attached to a bottom surface of the seat cushion 531 and slides along the conveyance floor 510.

The auxiliary rail device 570 includes a fixed rail 571 that is fixed to a side wall portion 502, a movement rail 572 that slides along the fixed rail 571 in the front to rear direction, and a connecting member 573 that connects the movement rail 572 and the seat cushion 531.

According to the above-described configuration, in the conveyance in which the conveyance battery is mounted, the conveyance seat can be appropriately moved. Therefore, a seated occupant can spend time comfortably in the cabin of the conveyance.

### <<Supplementary Notes of Second to Sixth Embodiments>>

The conveyance of the invention includes a conveyance floor that is provided inside the conveyance, a conveyance battery that is provided inside the conveyance, is disposed on a downward position as compared with the conveyance floor, and supplies electric power to the interior of the conveyance, and a conveyance seat that is provided inside the conveyance and is disposed on an upward position as compared with the conveyance floor. The conveyance seat includes a seat cushion on which a seated occupant is seated, and a base member that supports the seat cushion from a downward side. The base member is disposed at a position overlapping at least a portion of the conveyance battery in the up to down direction.

According to the above-described configuration, in the conveyance in which the conveyance battery is mounted, a conveyance that allows the seated occupant to spend time comfortably in an interior space (cabin) of the conveyance can be realized.

Specifically, in the conveyance of the invention, the base member that supports the seat cushion from a downward side is disposed at a position overlapping at least a portion of the conveyance battery in the up to down direction. That is, the height position of the conveyance seat can be lowered.

Therefore, the seated occupant may not feel that the interior space of the conveyance is narrow (the feeling is alleviated) as compared with the conveyance in which the conveyance seat exists on an upward position as compared with the conveyance floor and the conveyance battery as in the related art. That is, the seated occupant can spend time more comfortably in the interior space of the conveyance as compared with the related art.

At this time, the base member may be a rail device that is attached to the conveyance floor, the conveyance battery, or the conveyance main body, and moves the seat cushion in the front to rear direction of the conveyance. The rail device may include a lower rail that extends in the front to rear direction of the conveyance, and an upper rail that is supported to be movable along the lower rail, and moves together with the seat cushion. The upper rail may be disposed at a position that overlaps at least a portion of the conveyance battery in the up to down direction.

According to the above-described configuration, the height position of the conveyance seat including the rail device can be lowered. Therefore, the feeling that the interior space of the conveyance is narrow for the seated occupant is alleviated.

At this time, the base member may be accommodated in an accommodation concave portion formed in an upper surface of the conveyance battery.

In addition, the base member may be provided on right and left sides with an interval in the width direction of the conveyance, may extend long in the front to rear direction of the conveyance, and the right and left base members may be accommodated in right and left accommodation concave portions formed in the upper surface of the conveyance battery.

According to the above-described configuration, the height position of the conveyance seat can be lowered with a simple configuration. In addition, the height position of the conveyance seat can be lowered without reducing the capacity of the conveyance battery as much as possible.

At this time, the base members may be provided on right and left sides with an interval in the width direction of the conveyance, may extend long in the front to rear direction of the conveyance, the accommodation concave portion may be formed to be wider than the seat cushion in the width direction of the conveyance, and the right and left base members may be accommodated in the accommodation concave portion.

According to the above-described configuration, arrangement of the right and left base members can be freely set in the accommodation concave portion formed to have a wide width.

At this time, a plurality of the conveyance batteries may be provided with an interval in the width direction of the conveyance, and the base member may be disposed between the plurality of conveyance batteries in the width direction of the conveyance.

In addition, the base member may be provided on right and left sides with an interval in the width direction of the conveyance and may extend long in the front to rear direction of the conveyance, and a predetermined conveyance battery among the plurality of conveyance batteries may be disposed between the right and left base member in the width direction of the conveyance.

As described above, since the base member is disposed at a position different from that of the conveyance battery, a load applied to the conveyance battery can be further reduced as compared with a case where the base member is disposed on the conveyance battery.

At this time, the base member may be provided on right and left sides with an interval in the width direction of the conveyance and may be disposed at an upward position as compared with the conveyance floor, and a space may be formed in a region surrounded by the conveyance floor, the right and left base members, and the seat cushion in a front view.

According to the above-described configuration, for example, an accommodation space can be formed at a downward position of the seat cushion. In addition, arrangement of the right and left base members can be freely set by using the space.

At this time, the base member may be a rail device that is attached to the conveyance floor, the conveyance battery, or the conveyance main body, and moves the seat cushion in the front to rear direction of the conveyance, and the rail device may be disposed on a downward position as compared with the conveyance floor.

As described above, since the rail device is disposed on a downward position as compared with the conveyance floor, the height position of the conveyance seat can be lowered.

At this time, the conveyance seat may include the seat cushion including a seat cushion and a seat back, and a reclining device that rotatably connects the seat back to the seat cushion, and the base member may be a rail device that is attached to the conveyance floor, the conveyance battery, or the conveyance main body, and moves the seat cushion in the front to rear direction of the conveyance.

As described above, since the conveyance seat includes the reclining device and the rail device, the seated occupant can spend time more comfortably in the interior space of the conveyance.

### <Seventh Embodiment>

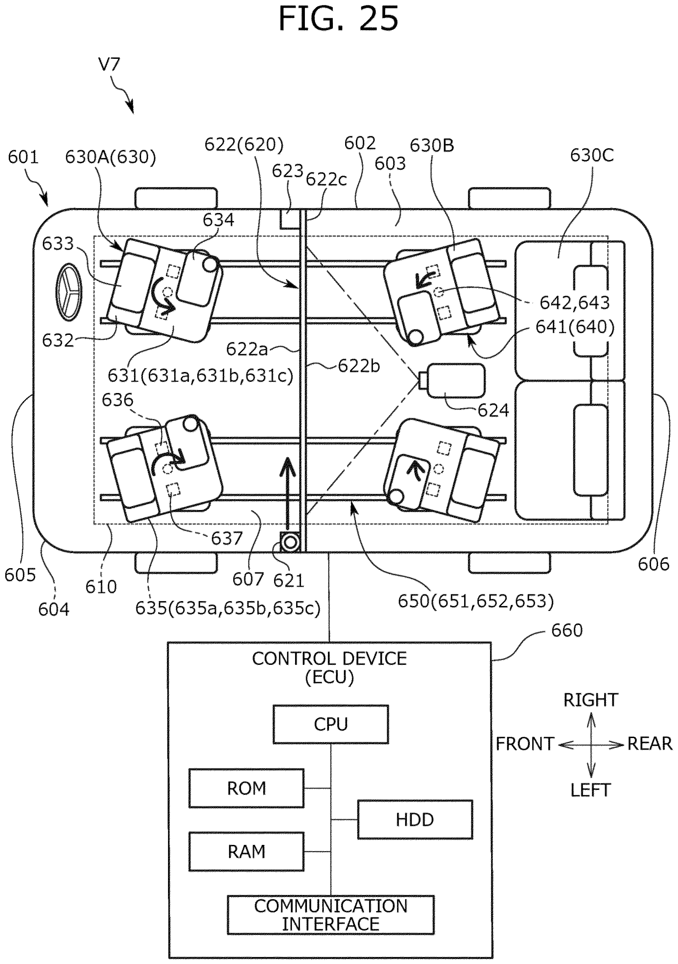

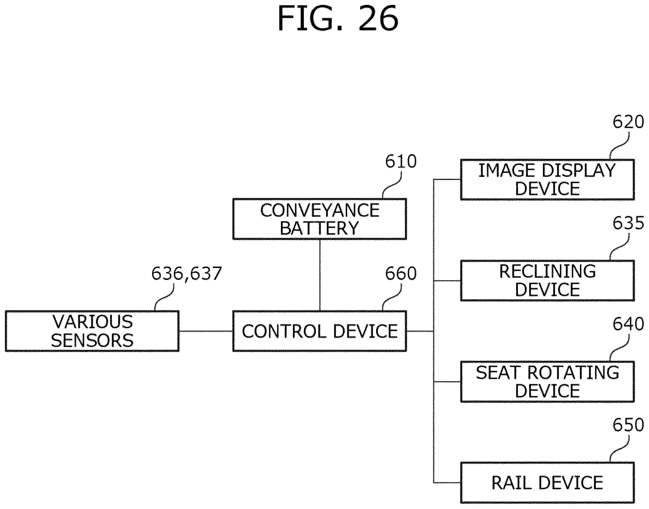

Next, a conveyance V7 of a seventh embodiment will be described with reference to FIG. 25 and FIG. 26.

The conveyance V7 allows a seated occupant to spend time more comfortably in an interior space (cabin) of a conveyance in the conveyance including an image display device as compared with the related art. This is also true of conveyances V7 to V19.

As illustrated in FIG. 25, for example, the conveyance V7 is a vehicle (automobile) and is an electrically driven vehicle (electric vehicle) including three rows of conveyance seats 630 in the front to rear direction of the conveyance V7. Note that, the conveyance V7 may be a vehicle including one row, two rows, or four or more rows of conveyance seats 630.

The conveyance V7 includes first conveyance seats 630A (front seats), second conveyance seats 630B (middle seats) disposed on a rear side as compared with the first conveyance seats 630A, and third conveyance seats 630C disposed on a rear side as compared with the second conveyance seats 630B.

As illustrated in FIG. 25, the conveyance V7 includes a conveyance main body 601, a conveyance battery 610 that is attached to the interior of the conveyance main body 601, an image display device 620, the conveyance seats 630, a seat rotating device 640, a rail device 650, and a control device 660.

The conveyance main body 601 corresponds to a vehicle body and includes a side wall portion 602 that forms a side wall of the conveyance V7, a top wall portion 603 that forms the ceiling of the conveyance V7, a bottom wall portion 604 that forms a bottom wall of the conveyance V7, a front wall portion 605 that forms a front wall of the conveyance V7, a rear wall portion 606 that forms a rear wall of the conveyance V7, and a conveyance floor 607 that attached to the interior of the conveyance V7.

The conveyance floor 607 is a vehicle body floor for attaching the conveyance seats 630 and conveyance interior members, and is disposed on a slightly upward side as compared with the bottom wall portion 604 of the conveyance main body 601.

At the interior of the conveyance V7, a region surrounded by the conveyance floor 607, the side wall portion 602, the top wall portion 603, the front wall portion 605, and the rear wall portion 606 becomes a cabin (interior space) of the conveyance V7. An occupant spends time in the cabin while the conveyance V7 is traveling.

The conveyance battery 610 corresponds to an in-vehicle battery, and is a relatively large-sized battery that is electrically connected to a drive device of the conveyance V7, various electric devices (electric equipment), the image display device 620, the conveyance seats 630, the seat rotating device 640, the rail device 650, and the control device 660, and supplies electric power to the devices at the inside of the conveyance V7.

As illustrated in FIG. 25, the conveyance battery 610 is attached onto the bottom wall portion 604 of the conveyance V7, and is disposed at a downward position as compared with the conveyance floor 607.

The image display device 620 is a device including a display unit (display screen 622) that displays images, and includes a screen accommodation portion 621, the display screen 622, a screen engagement portion 623, and a projector 624.

The screen accommodation portion 621 is attached to a lateral portion (leftward portion) of the conveyance main body 601. Specifically, the screen accommodation portion 621 is attached to the side wall portion 602 on a left side of the conveyance main body 601.

The screen accommodation portion 621 is constituted by a housing elongated in the up to down direction of the conveyance V7.

Note that, the screen accommodation portion 621 may be disposed at the side wall portion 602 on a right side, may be disposed at the top wall portion 603, or may be disposed at the conveyance floor 607. In a case where the screen accommodation portion 621 is attached to the top wall portion 603 or the conveyance floor 607, the screen accommodation portion 621 may be a housing elongated in the width direction of the conveyance V7.

The display screen 622 is accommodated in the screen accommodation portion 621 in a rolled up state. In addition, the display screen 622 can be extended toward a later side from the screen accommodation portion 621.

The display screen 622 is a screen elongated in the width direction of the conveyance V7, and is, for example, a transparent screen (translucent screen) having transparency (translucency).

The display screen 622 includes a first image display surface 622a facing first conveyance seats 630A side, and a second image display surface 622b facing the second conveyance seats 630B side.

An engaged portion 622c that can engage with the screen engagement portion 623 is attached to an extension end portion of the display screen 622. That is, the engaged portion 622c is attached to a right end portion of the extended display screen 622.

The screen engagement portion 623 is disposed at a lateral portion (rightward portion) of the conveyance main body 601. Specifically, the screen engagement portion 623 is attached to the side wall portion 602 on a right side of the conveyance main body 601.

The screen engagement portion 623 is constituted by a housing elongated in the up to down direction of the conveyance V7.

Specifically, the engaged portion 622c is an engagement hook, and the screen engagement portion 623 is an engagement hole portion. The engaged portion 622c and the screen engagement portion 623 are disposed at the same height position of the conveyance V7. The engaged portion 622c detachably engages with the screen engagement portion 623.

As illustrated in FIG. 25, the display screen 622 extends from the screen accommodation portion 621, and when the engaged portion 622c engages with the screen engagement portion 623, the display screen 622 is disposed between the first conveyance seats 630A and the second conveyance seats 630B.

The projector 624 is a projector that is provided on the second conveyance seat 630B side with respect to the display screen 622, and projects images onto the second image display surface 622b.

The projector 624 is attached onto the conveyance floor 607, is disposed at a slightly rearward position of the conveyance V7, and is disposed between the right and left second conveyance seats 630B in the width direction of the conveyance V7.

In the above-described configuration, the display screen 622 is a screen having transparency, and can display an image projected toward the second image display surface 622b on the second image display surface 622b and the first image display surface 622a located on a surface opposite to the second image display surface 622b.

That is, the same image can be displayed on the first image display surface 622a and the second image display surface 622b by using one piece of the projector 624.

As illustrated in FIG. 25, the conveyance seats 630 are vehicle seats and are disposed on the conveyance floor 607.

The conveyance seats 630 include the first conveyance seats 630A, the second conveyance seats 630B, and the third conveyance seats 630C aligned in the front to rear direction of the conveyance.

Each of the conveyance seats 630 includes a seat main body including a seat cushion 631, a seat back 632, and a headrest 633, a side table 634 that is attached to a lateral portion of the seat cushion 631, a reclining device 635 that rotatably connects the seat back 632 to the seat cushion 631, and a detection sensor 636 and a biometric sensor 637 which are attached to the inside of the seat cushion 631.

The conveyance seat 630 is supported from a downward side by the seat rotating device 640 and the rail device 650 provided on the conveyance floor 607.

Note that, the conveyance seat 630 may further include a height link device that moves up and down the seat main body (seat cushion 631).

The seat cushion 631 is a seating portion that supports a seated occupant from a downward side, and includes a cushion frame 631a as a skeleton, a pad material 631b that is placed on the cushion frame 631a, and a skin material 631c that covers the cushion frame 631a and the pad material 631b.

The seat back 632 is a backrest portion that supports the seated occupant from a rear side, and includes a back frame as a skeleton, a pad material, and a skin material.

The headrest 633 is a head portion that supports the head of the seated occupant from a rear side.

The side table 634 is attached to an outer side surface of the seat cushion 631, and can be switched between an "accommodated position" where the side table 634 is accommodated in the seat cushion 631, and a "developed position (use position)" where the side table 634 is developed upward from the seat cushion 631.

The reclining device 635 is attached to a rear portion of the seat cushion 631, and the rail device 650 is attached to a downward portion of the seat cushion 631 through the seat rotating device 640.

As illustrated in FIG. 25, the reclining device 635 is a device that rotatably connects the seat back 632 to the seat cushion 631, and is capable of locking the seat back 632.

The reclining device 635 includes a reclining main body 635a that is driven when rotating the seat back 632, a rotating shaft 635b, a spiral spring 635c that biases the seat back 632 to forwardly rotate around the rotating shaft 635b, and an operation lever that is operated to release a locked state of the seat back 632.

The reclining main body 635a includes a known lock mechanism, and can switch a state of the seat back 632 between a locked state fixed to the seat cushion 631 and an unlocked state capable of rotating with respect to the seat cushion 631.

The rotating shaft 635b is pivotally supported to the seat back 632 side and the seat cushion 631 side in the seat width direction. In the spiral spring 635c, one end is locked to the seat back 632 side, and the other end is locked to the seat cushion 631 side.

The detection sensor 636 is a sheet-shaped weight detection sensor that outputs a detection signal to the control device 660 when detecting that an occupant is seated, and is attached to a surface of the seat cushion 631.

The biometric sensor 637 is a sheet-shaped pressure sensor on that detects a "seating pressure" applied to a seating surface of the seat cushion 631, and outputs a detection signal to the control device 660, and is attached to the surface of the seat cushion 631.

Here, the "seating pressure" is a value that varies periodically in correspondence with occupant's physiological activity, specifically, respiration in a state in which the occupant is seated on the seat cushion 631, and is a target value that is detected by the biometric sensor 637. That is, the "seating pressure" corresponds to biometric information (for example, respiratory information) of the seated occupant.

The detection sensor 636 and the biometric sensor 637 are attached between the pad material 631b and the skin material 631c, and are disposed at the central portion in the seat width direction.

The detection sensor 636 is disposed on a left side of the seat cushion 631, and the biometric sensor 637 is disposed on a right side of the seat cushion 631.

Note that, the biometric sensor 637 may have a function of detecting that the occupant is seated, and a function of detecting the biometric information of the seated occupant. In this case, the detection sensor 636 may not be used.

The seat rotating device 640 is a device that rotates the conveyance seat 630 around an axis along the up to down direction with respect to the conveyance floor 607, and is capable of locking the conveyance seat 630.

The seat rotating device 640 includes a base member 641 that is fixed to an upper surface of the rail device 650, a rotary shaft 642 that is pivotally supported to a central portion of the base member and extends in the up to down direction, a rotary member 643 that is attached to the base member 641 to be rotatable around the rotary shaft 642, and a rotation operation lever that releases a locked state of the conveyance seat 630.

Note that, the seat rotating device 640 further includes a rotary actuator that supplies rotation power to the rotary member 643.

The rotary member 643 is a rotary body that is integrally attached to the seat cushion 631 and rotates together with the conveyance seat 630, and can rotate by 9660° with respect to the base member 641.

The seat rotating device 640 rotates the rotary member 643 to cause the conveyance seat 630 to rotate around an axis along the up to down direction, and locks the rotary member 643 at a predetermined rotation position to lock the conveyance seat 630.

The rail device 650 is a device that moves the conveyance seat 630 in the front to rear direction with respect to the conveyance floor 607, and is capable of locking the conveyance seat 630.

The rail device 650 extends long from a front portion of the conveyance V7 to a rear portion thereof, and a plurality of the rail devices 650 are arranged with an interval in the width direction of the conveyance V7.

Each of the rail device 650 is disposed between the seat rotating device 640 and the conveyance floor 607 in the up to down direction, and is fixed to an upper surface of the conveyance floor 607.

The rail device 650 includes right and left fixed rails 651 extending long in the front to rear direction, right and left first movable rails 652 supported to be slidable along the right and left fixed rails 651 and move together with the first conveyance seat 630A, and right and left second movable rails 653 supported to be slidable along the right and left fixed rails 651, and move together with the second conveyance seat 630B.

Note that, the rail device 650 includes a first lock member and a second lock member which respectively lock the first movable rails 652 and the second movable rails 653 so as not to be slidable, and a first operation lever and a second operation lever for releasing a locked state of the lock members.

In addition, the rail device 650 further includes a sliding actuator that supplies power to the movable rails 652 and 653.

The fixed rail 651 is disposed on the conveyance floor 607.

The first movable rails 652 and the second movable rails 653 are attached to the fixed rails 651, and upward portions of the movable rails 652 and 653 are fixed to the seat rotating device 640 (base member 641) through a connecting bracket.

As illustrated in FIG. 25 and FIG. 26, the control device 660 is a device that processes detection signals detected by the detection sensor 636 and the biometric sensor 63607, and are attached, for example, to the inside of a dashboard of a front portion of the conveyance V7. Alternatively, the control device 660 is attached to a downward position of the conveyance floor 607.

Specifically, when receiving the detection signals detected by various sensors, the control device 660 controls the operation of the image display device 620, the conveyance seats 630, the seat rotating device 640, and the rail device 650 on the basis of the detection signals.

Specifically, the control device 660 is a controller (ECU) and comprehensively executes electric control inside the conveyance V7.

The control device 660 receives power supply from the conveyance battery 610.

When receiving a detection signal from the detection sensor 636, the control device 660 controls the image display device 620 to display an image on the display screen 622.

In addition, as illustrated in FIG. 25, when receiving a detection signal from the detection sensor 636, the control device 660 controls the rail device 650 to move the conveyance seats 630 (630A and 630B) toward the display screen 622. In addition, the control device 660 controls the seat rotating device 640 in order for the conveyance seat 630 to face the display surfaces (the first image display surface 622a and the second image display surface 622b) .

According to this, when an occupant is seated on each of the conveyance seats 630, control can be performed so that an image is displayed on the display screen 622. In addition, when the occupant is seated, control can be performed so that a position and an orientation of the conveyance seat 630 are arranged.

In addition, when receiving biometric information detected by the biometric sensor 637 and determining that abnormality is present in the biometric information, the control device 660 controls the image display device 620 to output the determination result.

According to this, the control device 660 can grasp a health condition on the basis of the biometric information of the seated occupant, and the image display device 620 can display an image based on the health condition.

Specifically, when the control device 660 is connected to a known heartbeat measuring device (not illustrated) through a network, the heartbeat measuring device measures a heartbeat of the seated occupant on the basis of respiratory information of the seated occupant which is transmitted from the biometric sensor 63607, and in a case where abnormality has occurred in a heartbeat variation, the seated occupant can be quickly notified of the abnormality.

Note that, as a specific method of calculating a heart rate on the basis of the respiratory information, a known calculation method can be used.

In addition, in correspondence with a request of an occupant, the "kind of the biometric sensor" can be changed and an "output function" based on biometric information detected from the biometric sensor can be changed.

Specifically, in addition to the pressure sensor, a capacitance sensor, a temperature sensor, a sound sensor, an optical sensor, an odor sensor, an acceleration sensor, and the like can be employed.

In addition, as the "output function", in addition to the aspect in which the variation in the heartbeat of the occupant is measured and the occupant is notified of abnormality (snooze state) of the heartbeat, the following aspects and the like are assumed. Specifically, an occupant's sitting posture is measured, and seat movement is controlled to present a relaxation mode or a skeletal correction mode, and an aspect in which a game or an image is presented to the occupant on the basis of the biometric information (for example, an electrocardiogram, a blood pressure, a body temperature, respiration, and the like) of the occupant, and the like are assumed.

In this case, the biometric information obtained by the biometric sensor may be used by a dedicated application downloaded to a portable terminal of the occupant. According to this, it is possible to operate the dedicated application by using the biometric information, or it is possible to store the biometric information in the dedicated application.

According to the above-described configuration, in the conveyance V7 including the image display device 620, the occupant and the like can spend time comfortably in the interior space (cabin) of the conveyance V7.

Note that, in a case where the conveyance V7 is an electric vehicle, the biometric information of the occupant can be sensed during charging of the conveyance battery 610 mounted in the conveyance V7 (during stoppage of the conveyance V7).

### <<Others>>

In the above-described embodiment, as illustrated in FIG. 25, the display screen 622 (display unit) is accommodated in the screen accommodation portion 621 in a rolled up state, and can extend from the screen accommodation portion 621, but there is no particular limitation.

For example, the display screen 622 may always be fixed in a developed state (extended state). Alternatively, the display screen 622 may be detachably attached to the conveyance main body 601.

In the above-described embodiment, as illustrated in FIG. 25, the rail device 650 is fixed onto the conveyance floor 607, but there is no particular limitation.

For example, the rail device 650 may be disposed at a downward position as compared with the conveyance floor 607. More specifically, the fixed rails 651 of the rail device 650 may be attached onto the conveyance battery 610, and the movable rails (movable portions) 652 and 653 may be disposed to partially protrude from the conveyance floor 607.

### <Eighth Embodiment>

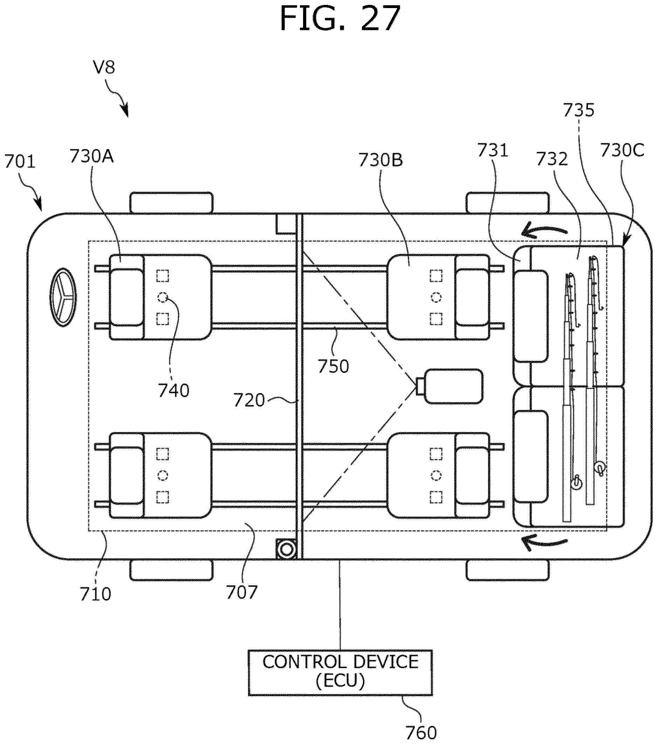

Next, a conveyance V8 of an eighth embodiment will be described with reference to FIG. 27.

Note that, description of contents which are redundant with the above-described conveyance V7 will be omitted.

The conveyance V8 includes a conveyance main body 701 (conveyance floor 707), a conveyance battery 710, an image display device 720, a conveyance seat 730, a seat rotating device 740, a rail device 750, and a control device 760.

The conveyance seat 730 includes a first conveyance seat 730A, a second conveyance seat 730B, and a third conveyance seat 730C.

The third conveyance seat 730C includes a reclining device 735 that rotatably connects the seat back 732 to the seat cushion 731.

According to the above-described configuration, in the conveyance V8 including the image display device 720, an occupant and the like can spend time comfortably in the cabin of the conveyance V8.

In addition, according to the above-described configuration, when the seat back 732 of the third conveyance seat 730C is folded to the seat cushion 731 side, the third conveyance seat 730C can be used as a storage stand. For example, outdoor goods and the like can be placed on the third conveyance seat 730C. Additionally, the cabin of the conveyance V8 can be used as a secret base.

Note that, stain prevention processing and water-repellent processing may be performed on a rear surface of the seat back 732.

### <Ninth Embodiment>

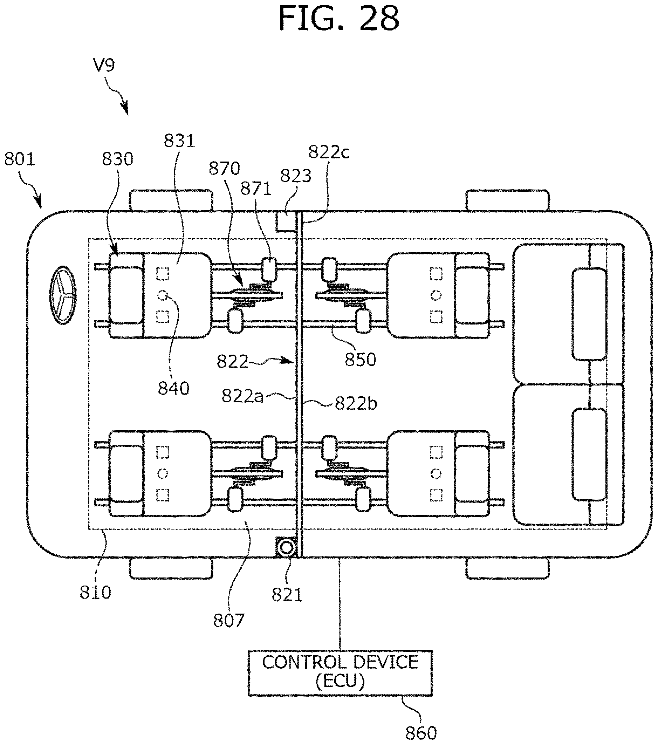

Next, a conveyance V9 of a ninth embodiment will be described with reference to FIG. 28.

Note that, description of contents which are redundant with the conveyances V7 and V8 will be omitted.

The conveyance V9 includes a conveyance main body 801 (conveyance floor 807), a conveyance battery 810, an image display device 820, a conveyance seat 830, a seat rotating device 840, a rail device 850, and a control device 860.

In addition, the conveyance V9 further includes a pedal device 870 for a seated occupant to exercise.

The image display device 820 is a device including a display unit (display 822) on which an image is displayed, and includes an accommodation portion 821, the display 822, and an engagement portion 823.

The display 822 is, for example, a flexible display, and can display different images on a first image display surface 822a and a second image display surface 822b, respectively.

The display 822 is accommodated in a manner capable of being drawn out from the accommodation portion 821.

An engaged portion 822c that engages with an engagement portion 823 is attached to an extension end portion of the display 822.

The pedal device 870 is attached to the conveyance seat 830 (seat cushion 831), and is disposed on a forward position as compared with the seat cushion 831.

The pedal device 870 is electrically connected to the conveyance battery 810 through a charging cable. The pedal device 870 can generate electric power when a seated occupant pushes the pedal 871, and the electric power is supplied to the conveyance battery 810.

The pedal device 870 can be accommodated inside the conveyance seat 830 (for example, a downward position of the seat cushion 831). That is, the pedal device 870 can be switched between an "accommodated position" and a "developed position (use position)".

The control device 860 controls operation of the pedal device 870.

Note that, the pedal device 870 may be detachably attached onto the rail device 850.

According to the above-described configuration, the occupant can appropriately exercise in the cabin. In addition, electric power can be generated in accordance with the exercise of the occupant.

In addition, in a case of the image display device 820, a projector is not necessary.

### <Tenth Embodiment>

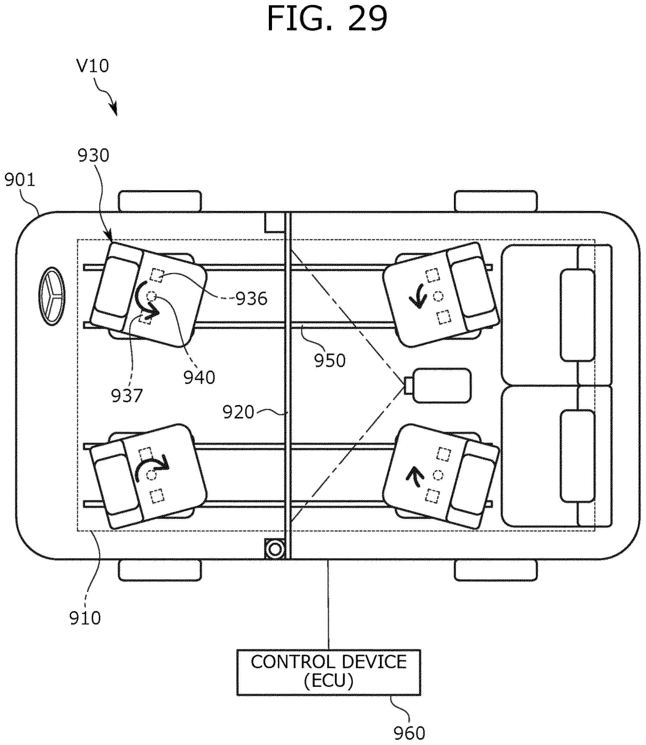

Next, a conveyance V10 of a tenth embodiment will be described with reference to FIG. 29.

Note that, description of contents which are redundant with the conveyances V7 to V9 will be omitted.

The conveyance V10 includes a conveyance main body 901, a conveyance battery 910, an image display device 920, a conveyance seat 930, a seat rotating device 940, a rail device 950, and a control device 960.

The conveyance seat 930 includes a detection sensor 936 and a biometric sensor 937.

The image display device 920 displays, for example, an image relating to yoga or exercise.

The control device 960 receives biometric information (respiratory information) detected by the biometric sensor 937, and grasps a respiratory condition or a pulse of an occupant on the basis of the biometric information. In addition, the image display device 920 is controlled to display information relating to the respiratory condition and information relating to the pulse in combination.

According to the above-described configuration, the occupant who is seated on the conveyance seat 930 can enjoy exercise such as yoga (stretching yoga) and can exercise with peace of mind.

### <Eleventh Embodiment>

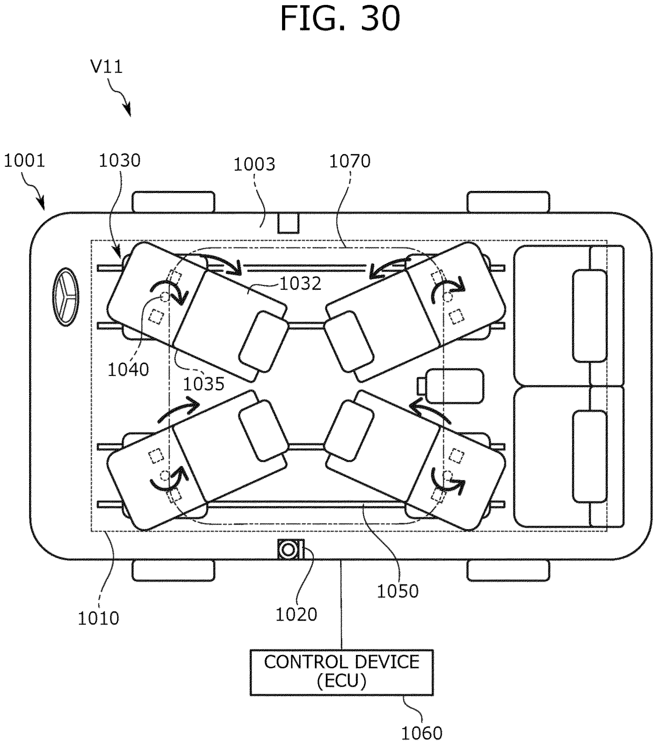

Next, a conveyance V11 of an eleventh embodiment will be described with reference to FIG. 30.

Note that, description of contents which are redundant with the conveyances V7 to V10 will be omitted.

The conveyance V11 includes a conveyance main body 1001, a conveyance battery 1010, an image display device 1020, a conveyance seat 1030, a seat rotating device 1040, a rail device 1050, and a control device 1060.

The conveyance V11 further includes a sunroof 1070 attached to a central portion of a top wall portion 1003 of the conveyance main body 1001.

The conveyance seat 1030 includes a reclining device 1035. According to FIG. 30, a seat back 1032 is in a reclined state (rearwardly inclined state).

Specifically, a plurality of the seat backs 1032 of a plurality of the conveyance seats 1030 are arranged at positions overlapping the sunroof 1070 in a top view (plan view).

For example, the sunroof 1070 is a relatively large-sized sunroof having an augmented reality (AR) expansion function.

The sunroof 1070 can display the names of constellations in the night sky in real time in an AR expansion mode. The control device 1060 can control the operation of the sunroof 1070.

According to the above-described configuration, an occupant who is seated on the conveyance seat 1030 can enjoy astronomical observation while lying down.

### <Twelfth Embodiment>

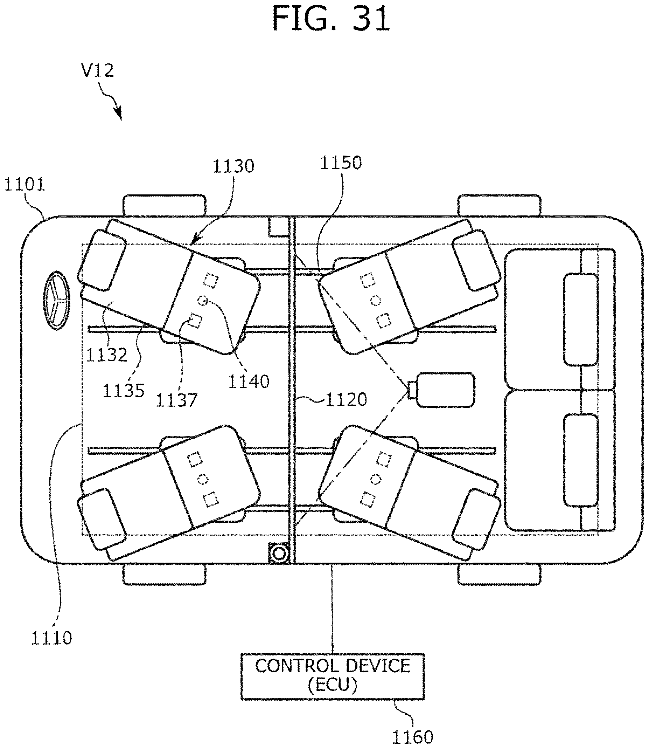

Next, a conveyance V12 of a twelfth embodiment will be described with reference to FIG. 31.

Note that, description of contents which are redundant with the conveyances V7 to V11 will be omitted.

The conveyance V12 includes a conveyance main body 1101, a conveyance battery 1110, an image display device 1120, a conveyance seat 1130, a seat rotating device 1140, a rail device 1150, and a control device 1160.

The conveyance seat 1130 further includes a reclining device 1135.

According to FIG. 31, a seat back 1132 is in a reclined state (rearwardly inclined state). In addition, a plurality of the conveyance seats 1130 are arranged to face a central portion of the conveyance V12.

The control device 1160 can receive biometric information detected by a biometric sensor 1137, can diagnose a health condition or a skeletal condition of an occupant on the basis of the biometric information, and can control the image display device 1120 to display a diagnosis result.

According to this, medical examination of the occupant can be performed in the cabin of the conveyance V12.

### <Thirteenth Embodiment>

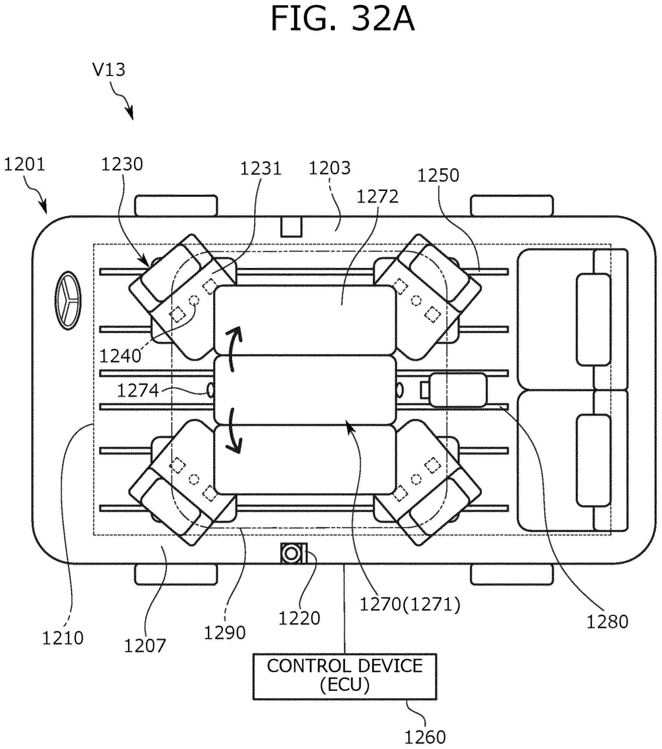

Next, a conveyance V13 of a thirteenth embodiment will be described with reference to FIG. 32A to FIG. 32C.

Note that, description of contents which are redundant with the conveyances V7 to V12 will be omitted.

The conveyance V13 includes a conveyance main body 1201 (conveyance floor 1207), a conveyance battery 1210, an image display device 1220, a conveyance seat 1230, a seat rotating device 1240, a rail device 1250, and a control device 1260.

The conveyance V13 further includes a table device 1270 provided at a central portion in the width direction of the conveyance V13, a second rail device 1280 that moves the table device 1270 back and forth, and a ventilation device 1290 that exhausts air inside the conveyance to the outside of the conveyance.

The ventilation device 1290 is attached to a top wall portion 1203 of the conveyance V13.

Note that, the conveyance V13 may further include a blower device that blows the air inside the conveyance. The blower device may be disposed on the conveyance floor 1207.

The table device 1270 is a consort table, and includes a table main body 1271, right and left auxiliary tables 1272, a temperature adjustment device 1273 attached to a downward portion of the table main body 1271, and a switch 1274 of the temperature adjustment device 1273.

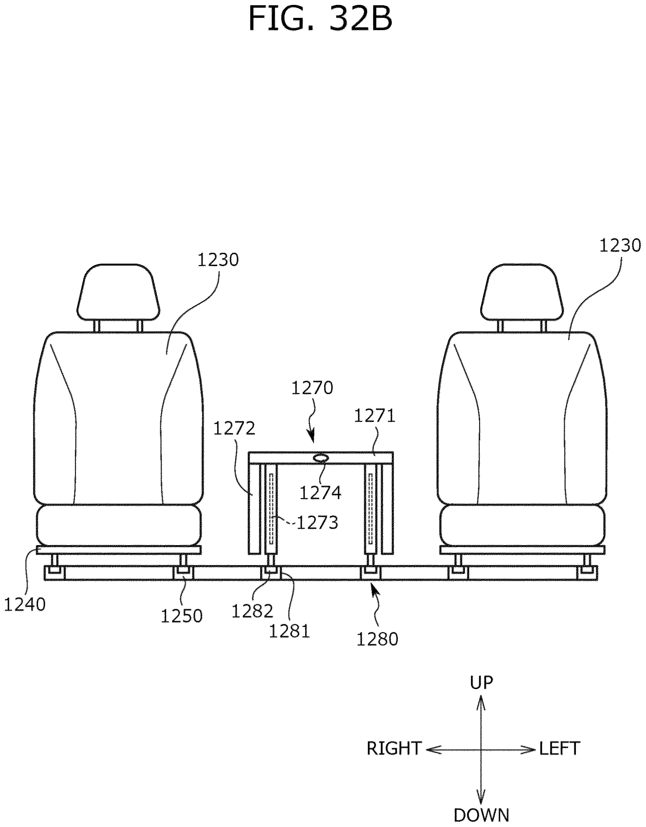

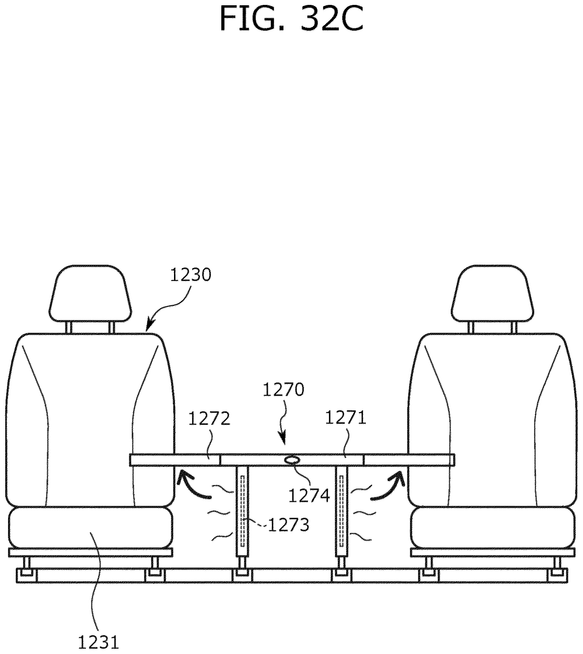

The table main body 1271 is fixed onto the second rail device 1280 as illustrated in FIG. 32B and FIG. 32C.

The right and left auxiliary table 1272 are attached to right and left lateral positions in the width direction of the table main body 1271. The auxiliary tables 1272 can be switched between an "accommodated position" illustrated in FIG. 32B and "a developed position (use position)" illustrated in FIG. 32C.

When the auxiliary tables 1272 are developed, a seat cushion 1231 and the auxiliary tables 1272 are arranged to overlap each other in the up to down direction.

The temperature adjustment device 1273 is attached to a leg portion of the table main body 1271.

For example, the temperature adjustment device 1273 may be a heating element that warms the interior of the cabin, or a cooling element that cools the interior of the cabin. Alternatively, the temperature adjustment device 1273 may be a blowing portion that blows the air.

The second rail device 1280 includes a right and left fixed rails 1281, right and left movable rails 1282, a lock member that locks the movable rails 1282, and an operation lever for releasing a locked state of the lock member.

The table device 1270 (table main body 1271) is attached to a top surface of the right and left movable rails 1282, and moves in the front to rear direction together with the right and left movable rails 1282.

The control device 1260 may control the operation of the table device 1270 and the second rail device 1280.

According to the above-described configuration, the occupant and the like can spend time comfortably in the cabin by using the table device 1270 that is movable back and forth.

Note that, the table device 1270 may be electrically connected to the conveyance battery 1210 through the second rail device 1280. In addition, the temperature adjustment device 1273 may automatically initiate an operation (may be switched on) when the table main body 1271 has moved to a predetermined front to rear position.

### <Fourteenth Embodiment>

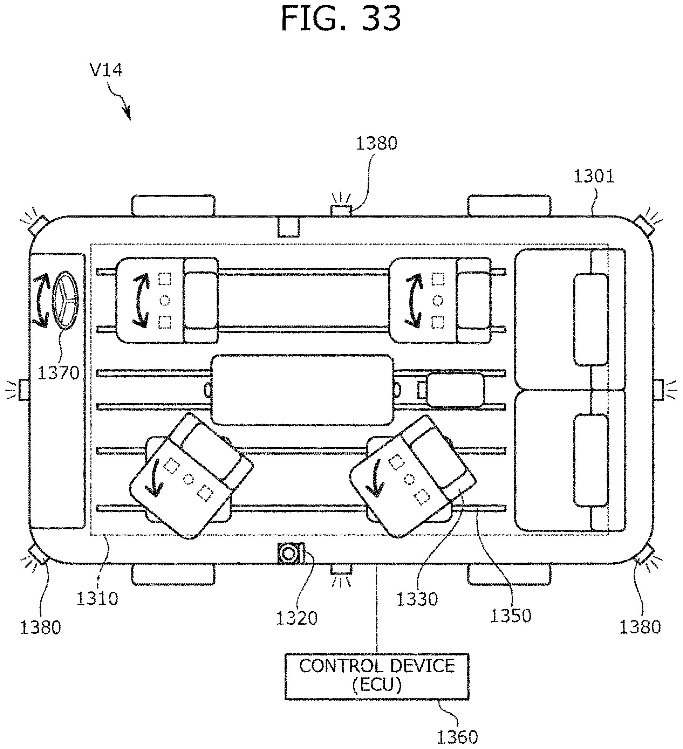

Next, a conveyance V14 of a fourteenth embodiment will be described with reference to FIG. 33.

Note that, description of contents which are redundant with the conveyances V7 to V13 will be omitted.

The conveyance V14 includes a conveyance main body 1301, a conveyance battery 1310, an image display device 1320, a conveyance seat 1330, a seat rotating device 1340, a rail device 1350, and a control device 1360.

In addition, the conveyance V14 further includes a steering 1370, and a plurality of imaging cameras 1380 attached to an outer surface of the conveyance main body 1301.

The imaging cameras 1380 capture external images at the periphery of the conveyance V14, and transmit external image data to the control device 1360 to execute a "sensing function" of performing traveling control of the conveyance V14.

The control device 1360 acquires the external image data received from the imaging cameras 1380, and controls the seat rotating device 1340 and the rail device 1350 on the basis of the external image data.

For example, when recognizing a predetermined scenery (a noted place, a sightseeing spot, and the like) from the external image data, the control device 1360 controls the seat rotating device 1340 and the rail device 1350 in order for the conveyance seat 1330 to face the scenery side. According to FIG. 33, it can be seen that conveyance seats 1330 located on a left side are controlled to face obliquely forward to the left.

According to this, an occupant can spend time while enjoying the scenery while the conveyance is traveling.

In addition, the control device 1360 recognizes an advancing direction of the conveyance V14 on the basis of an operation of a steering 1370 (power steering), and controls the seat rotating device 1340 and the rail device 1350.

For example, when recognizing a right curve (a curve that turns to the right) of the conveyance V14, the control device 1360 controls the seat rotating device 1340 and the rail device 1350 in order for the conveyance seat 1330 to face obliquely forward to the right.

According to this, the occupant can spend time comfortably while the conveyance is traveling.

### <Fifteenth Embodiment>

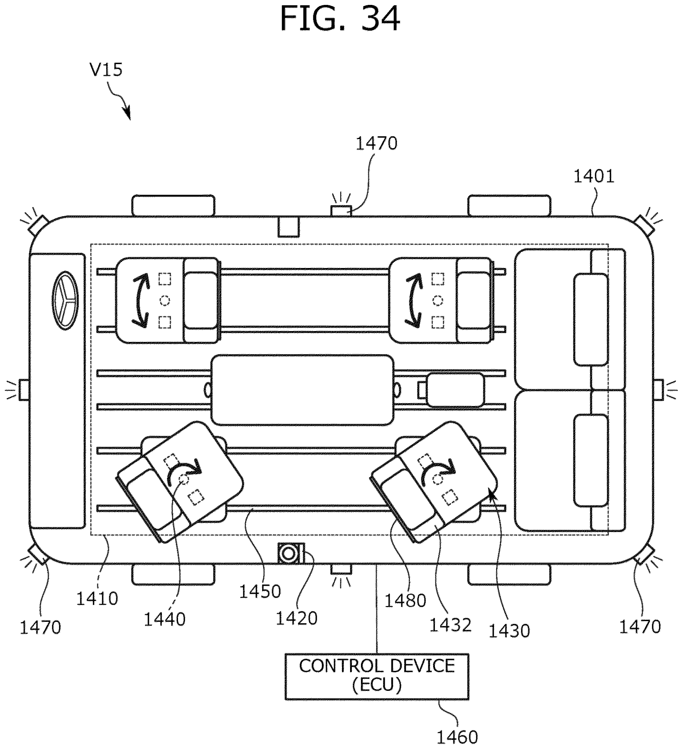

Next, a conveyance V15 of a fifteenth embodiment will be described with reference to FIG. 34.

Note that, description of contents which are redundant with the conveyances V7 to V14 will be omitted.

The conveyance V15 includes a conveyance main body 1401, a conveyance battery 1410, an image display device 1420, a conveyance seat 1430, a seat rotating device 1440, a rail device 1450, and a control device 1460.

In addition, the conveyance V15 further includes a plurality of imaging cameras 1470 attached to an outer surface of the conveyance main body 1401.

The imaging cameras 1470 transmit external image data to the control device 1460 to execute a "sensing function" of performing traveling control of the conveyance V15.

The control device 1460 acquires the external image data received from the imaging cameras 1470, and controls the seat rotating device 1440 and the rail device 1450 on the basis of the external image data.

For example, the control device 1460 recognizes a position and an orientation of the sun from the external image data, and controls the seat rotating device 1340 and the rail device 1350 in order for the conveyance seat 1430 not to face the sun side (to face a side opposite to the sun side) .

According to FIG. 34, it can be seen that conveyance seats 1430 located on a left side is controlled to face obliquely rearward to the right.

According to this, it is possible to prevent the occupant from being exposed to sunlight (ultraviolet rays as much as possible, and to protect a skin of the occupant from sunlight.

Note that, a solar panel 1480 may be attached to a rear surface of a seat back 1432 of the conveyance seat 1430.

According to this, it is possible to prevent the occupant who is seated on the conveyance seat 1430 from being exposed to solar light as much as possible, and to charge the solar panel 1480 efficiently.

### <Sixteenth Embodiment>

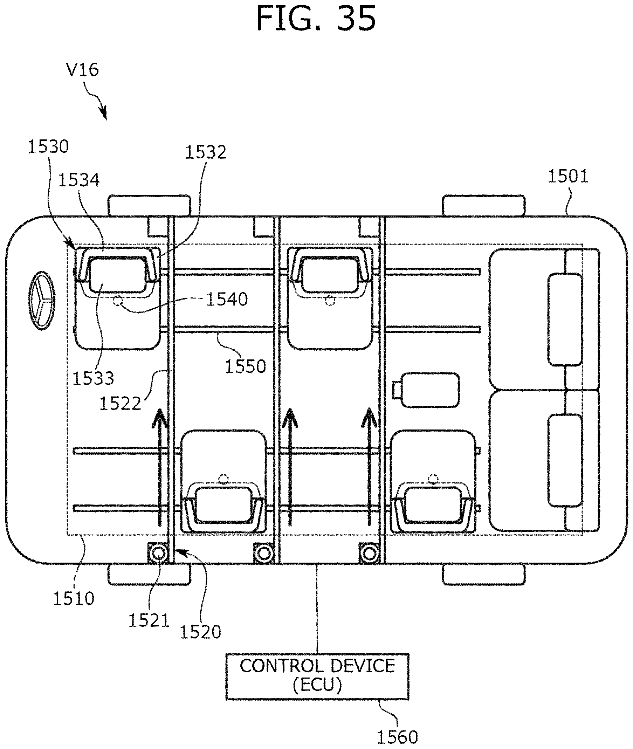

Next, a conveyance V16 of a sixteenth embodiment will be described with reference to FIG. 35.

Note that, description of contents which are redundant with the conveyances V7 to V15 will be omitted.

The conveyance V16 includes a conveyance main body 1501, a conveyance battery 1510, an image display device 1520, a conveyance seat 1530, a seat rotating device 1540, a rail device 1550, and a control device 1560.

The image display device 1520 includes a plurality of display screens 1522.

The display screens 1522 are arranged with an interval in the front to rear direction of the conveyance V16.

The display screens 1522 can be used as a partition when being drawn from a screen accommodation portion 1521.

According to this, as illustrated in FIG. 35, it is possible to secure an individual space (individual booth) for every occupant. Occupants can stretch their legs and relax. In addition, the occupants can spend time in their own individual space without worrying about their surroundings.

In addition, the conveyance seat 1530 includes a face cover 1534 that is attached to a headrest 1533 and can be developed from the headrest 1533.

When using the face cover 1534, the seated occupant can spend time in a more relaxed state.

Note that, the face cover 1534 may be attached to an upper portion or a rear portion of a seat back.

The control device 1560 may control the image display device 1520, the conveyance seat 1530, the seat rotating device 1540, and the rail device 1550 to perform arrangement (seat arrangement) illustrated in FIG. 35 when predetermined conditions are satisfied.

For example, the control device 1560 may perform the arrangement illustrated in FIG. 35 when the conveyance V16 is traveling to a destination.

Alternatively, the control device 1560 may perform the arrangement illustrated in FIG. 35 when the conveyance V16 is stopped at a charging spot.

This allows the occupant to relax while listening to music, sleeping, or holding a meeting.

### <Seventeenth Embodiment>

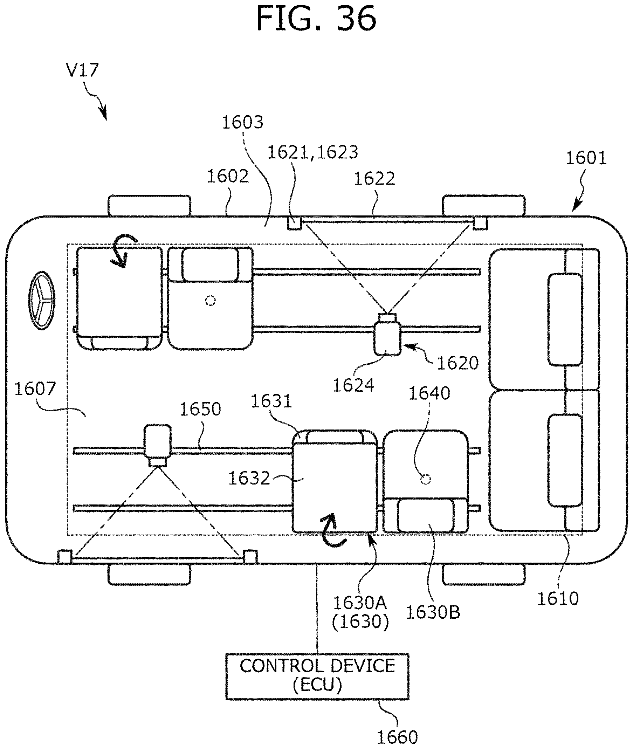

Next, a conveyance V17 of a seventeenth embodiment will be described with reference to FIG. 36.

Note that, description of contents which are redundant with the conveyances V7 to V16 will be omitted.

The conveyance V17 includes a conveyance main body 1601, a conveyance battery 1610, an image display device 1620, a conveyance seat 1630, a seat rotating device 1640, a rail device 1650, and a control device 1660.

The image display device 1620 includes a plurality of display screens 1622 and a plurality of projectors 1624.

The display screen 1622 is provided at a side wall portion 1602 of the conveyance main body 1601, and is attached in a manner capable of being drawn in the up to down direction. Specifically, a screen accommodation portion 1621 is provided at a top wall portion 1603, and a screen engagement portion 1623 is provided at a conveyance floor 1607.

The conveyance V17 can perform arrangement illustrated in FIG. 36 through an automatic operation or a manual operation.

Specifically, a first conveyance seat 1630A is in a state in which a seat back 1632 is folded to a seat cushion 1631 side, and is used as a side table.

A second conveyance seat 1630B is adjusted to a position facing the display screen 1622, and is also adjusted to face the display screen 1622 side.

According to this, an occupant and the like can spend time comfortably in the interior space of the conveyance V17.

### <Eighteenth Embodiment>

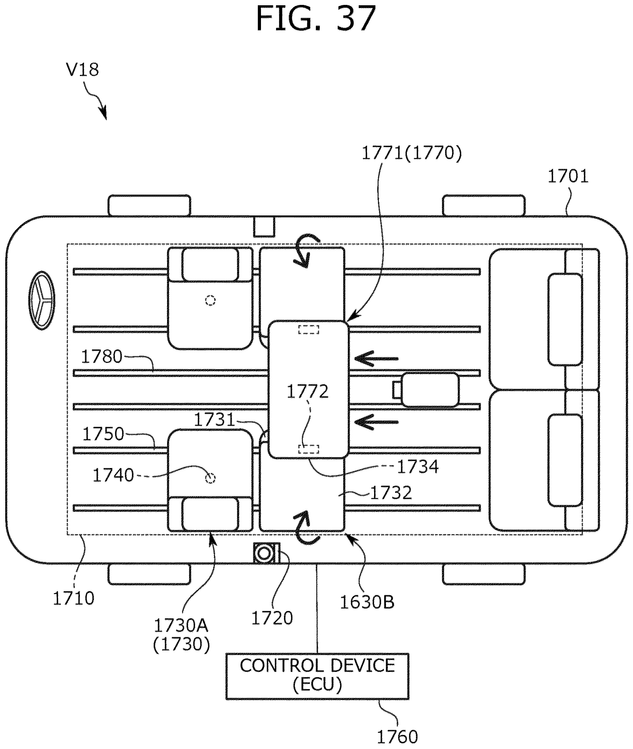

Next, a conveyance V18 of an eighteenth embodiment will be described with reference to FIG. 37.

Note that, description of contents which are redundant with the conveyances V7 to V17 will be omitted.

The conveyance V18 includes a conveyance main body 1701, a conveyance battery 1710, an image display device 1720, a conveyance seat 1730, a seat rotating device 1740, a rail device 1750, and a control device 1760.

In addition, the conveyance V18 further includes a table device 1770, and a second rail device 1780 that moves the table device 1770 back and forth.

The image display device 1720 includes a display 1722 (flexible display) having flexibility.

A second conveyance seat 1730B is in a state in which a seat back 1732 is folded to a seat cushion 1731 side, and is used as a side table.

The table device 1770 is a consort table.

A table main body 1771 includes an engagement hook 1772 that detachably engages with an engaged portion 1734 provided on a rear surface of the conveyance seat 1730.

According to FIG. 37, it can be seen that the table main body 1771 (engagement hook 1772) engages with a second conveyance seat 1730B (engaged portion 1734).

According to this, the second conveyance seat 1730B and the table device 1770 can be used as a continuous table.

### <Nineteenth Embodiment>

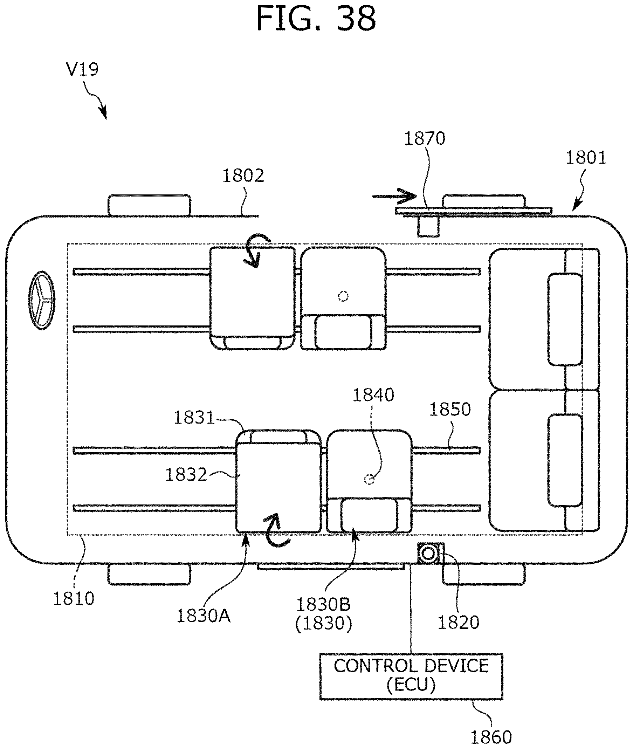

Next, a conveyance V19 of a nineteenth embodiment will be described with reference to FIG. 38.

Note that, description of contents which are redundant with the conveyances V7 to V18 will be omitted.

The conveyance V19 includes a conveyance main body 1801, a conveyance battery 1810, an image display device 1820, a conveyance seat 1830, a seat rotating device 1840, a rail device 1850, and a control device 1860.

In addition, the conveyance V19 further includes a sliding door 1870 that is provided at a side wall portion 1802 of the conveyance main body 1801, and is capable of being slid.

The sliding door 1870 can be switched between a "closed position" and an "opened position" illustrated in FIG. 38.

A first conveyance seat 1830A is in a state in which a seat back 1832 is folded to a seat cushion 1831 side, and is used as a side table.

A second conveyance seat 1830B is adjusted to a position facing the sliding door 1870, and is also adjusted to face the sliding door 1870 side.

According to this, an occupant can enjoy bird watching, sketching, and fishing. In addition, the occupant can spend time comfortably by using the cabin of the conveyance V19 as a gazebo.

### <<Supplementary Note of Seventh to Nineteenth Embodiments>>

The conveyance of the invention may include a conveyance floor, a conveyance seat disposed on the conveyance floor, a rail device that moves the conveyance seat in a front to rear direction of the conveyance with respect to the conveyance floor, a seat rotating device that rotates the conveyance seat around an axis along the up to down direction with respect to the conveyance floor, and an image display device including a display unit that is disposed on the conveyance floor and displays an image. The conveyance seat may include a first conveyance seat and a second conveyance seat aligned in the front to rear direction or a width direction of the conveyance, the display unit may be disposed between the first conveyance seat and the second conveyance seat, the display unit may include a first image display surface facing the first conveyance seat side and a second image display surface facing the second conveyance seat side, and an image may be displayed on the first image display surface and the second image display surface.

According to the above-described configuration, in a conveyance including the image display device, a conveyance seat that allows an occupant to spend time comfortably in the interior space of the cabin of the conveyance can be realized.

Specifically, the conveyance includes the rail device, the seat rotating device, and the image display device, the display unit of the image display device includes the first image display surface facing the first conveyance seat side, and the second image display surface facing the second conveyance seat side, and an image is displayed on the first image display surface and the second image display surface.

According to this, a position and an orientation of the conveyance seat can be arranged in the cabin of the conveyance. In addition, the occupant and the like who are seated on the conveyance seats can spend time comfortably while viewing the image displayed on the display unit.

At this time, the first conveyance seat and the second conveyance seat may be disposed to be aligned in the front to rear direction of the conveyance, the rail device may extend long from a front portion of the conveyance to a rear portion thereof, the rail device may include right and left fixed rails which extend long in the front to rear direction of the conveyance, right and left first movable portions which are supported to be movable along the right and left fixed rails and move together with the first conveyance seat, and right and left second movable portions which are supported to be movable along the right and left fixed rails and move together with the second conveyance seat.

According to the above-described configuration, the arrangement of the conveyance seats in the cabin of the conveyance can be more appropriately arranged.

At this time, a detection sensor that is provided in the conveyance seat and detects that an occupant is seated, and a control device that is provided in the conveyance and controls the image display device may be provided. When receiving a detection signal from the detection sensor, the control device may control the image display device in order for the display unit to display an image.

According to the above-described configuration, it is possible to perform control so that the display unit displays an image when the occupant is seated on the conveyance seat. Therefore, the occupant can spend time more comfortably.

At this time, the control device may control the rail device and the seat rotating device. When receiving a detection signal from the detection sensor, the control device may control the rail device to move the first conveyance seat toward the display unit, and may control the seat rotating device so that the first conveyance seat faces the first image display surface.

According to the above-described configuration, when the occupant is seated on the conveyance seat, control can be performed to arrange a position and an orientation of the conveyance seat. Therefore, the occupant can spend time more comfortably.

At this time, a biometric sensor that is provided in the conveyance seat and detects biometric information of the seated occupant, and a control device that is provided in the conveyance and controls the image display device may be provided. The control device may control the image display device to display an image based on the biometric information on the display unit on the basis of the biometric information detected by the biometric sensor.

In addition, the control device may receive the biometric information detected by the biometric sensor, and may control the image display device to output a determination result when it is determined that abnormality is present in the biometric information.

According to the above-described configuration, the control device can grasp a health condition on the basis of the biometric information of the seated occupant, and the image display device can display an image based on the health condition. For example, the image display device can display an image of a health diagnosis result. According to this, the occupant can spend time more comfortably.

At this time, the display unit may be a display screen, and the image display device may include a screen accommodation portion provided on one side of a left lateral portion and a right lateral portion of the conveyance, the display screen that is accommodated in the screen accommodation portion and is extended toward the other of the left lateral portion and the right lateral portion from the screen accommodation portion, and a screen engagement portion that is provided on the other side of the left lateral portion and the right lateral portion and engages with an engaged portion provided at an extension end portion of the display screen. When the display screen is extended from the screen accommodation portion, and the engaged portion engages with the screen engagement portion, the display screen may be disposed between the first conveyance seat and the second conveyance seat.

In addition, the display unit may be a display screen, and the image display device may include a screen accommodation portion that is provided at one side of an upward portion and a downward portion of the conveyance, the display screen that is accommodated in the screen accommodation portion and is extended from the screen accommodation portion toward the other side of the upward portion and the downward portion, and a screen engagement portion that is provided at the other side of the upward portion and the downward portion and engages with an engaged portion which is provided an extension end portion of the display screen. The display screen may be extended from the screen accommodation portion, and when the engaged portion engages with the screen engagement portion, the display screen may be disposed between the first conveyance seat and the second conveyance seat.

According to the above-described configuration, in a case where a display screen is necessary, the display screen can be easily drawn out. In addition, in a case where the display screen is not used, the display screen can be accommodated.

At this time, the display unit may be a display screen, the image display device may include a projector that is provided on the second conveyance seat side with respect to the display screen and projects an image to the second image display surface. The display screen may be a screen having transparency, and may display the image projected toward the second image display surface on the second image display surface, and the first image display surface located on a surface opposite to the second image display surface.

According to the above-described configuration, the same image can be displayed on the first image display surface and the second image display surface by using, for example, one piece of the projector. Note that, examples of the display screen include a translucent display screen and the like.

At this time, the display unit may be a display having flexibility, and the image display device may include an accommodation portion that is provided at one side of a left lateral portion and a right lateral portion of the conveyance, the display that is accommodated in the accommodation portion and is extended from the accommodation portion toward the other side of the left lateral portion and the right lateral portion, and an engagement portion that is provided at the other side of the left lateral portion and the right lateral portion and engages with an engaged portion that is provided at an extension end portion of the display. The display may be extended from the accommodation portion, and when the engaged portion engages with the engagement portion, the display may be disposed between the first conveyance seat and the second conveyance seat. The display may display different images on the first image display surface and the second image display surface.

As described above, since the display having flexibility is used, the same image can be displayed on the first image display surface and the second image display surface without the need for a projector. Note that, examples of the display include a flexible display and the like.

### <Twentieth Embodiment>

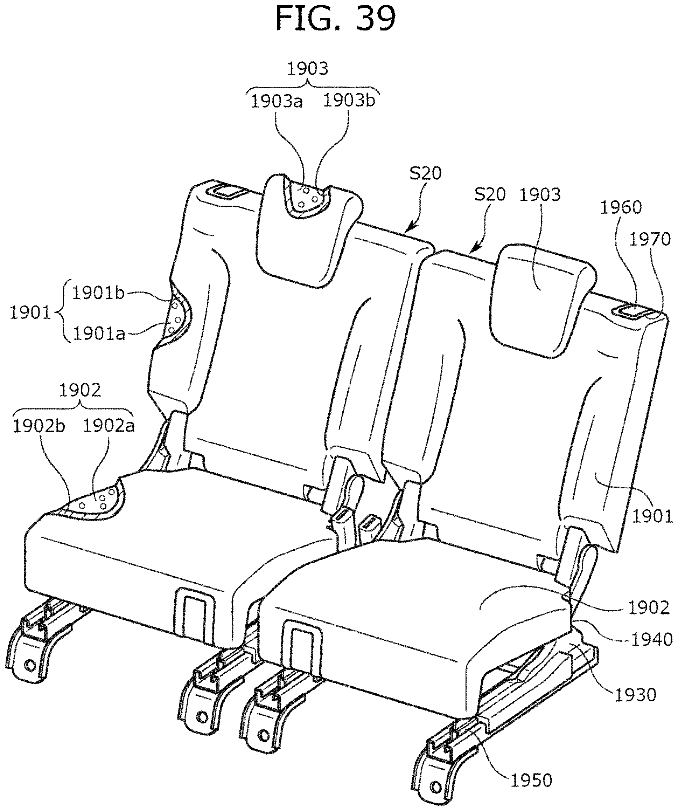

Next, a conveyance seat S20 of a twentieth embodiment will be described with reference to FIG. 39 to FIG. 49.

The conveyance seat S20 realizes a switch device for switching a state of a seat main body in a simple structure. This is also true of a conveyance seat S21.

As illustrated in FIG. 39, the conveyance seat S20 is, for example, a rear seat corresponding to a rear seat of a vehicle. Note that, the conveyance seat S20 can also be used as a middle seat in a second row of a vehicle including three rows of seats in a vehicle front to rear direction.

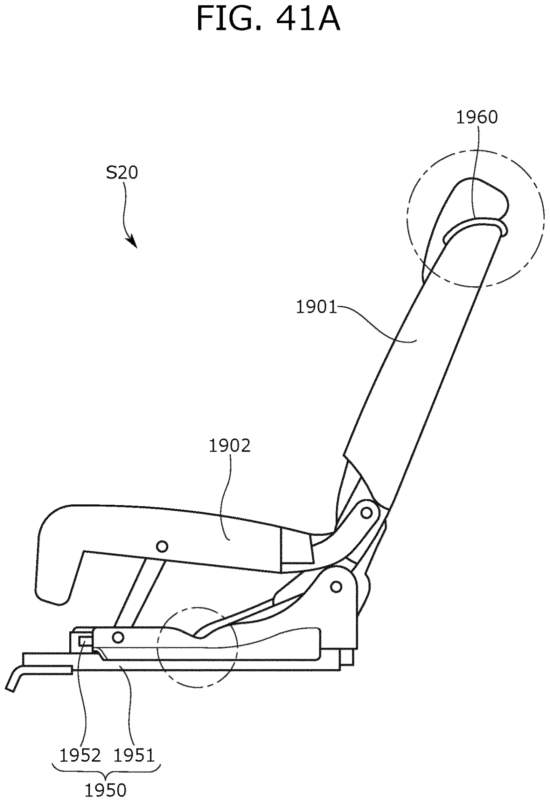

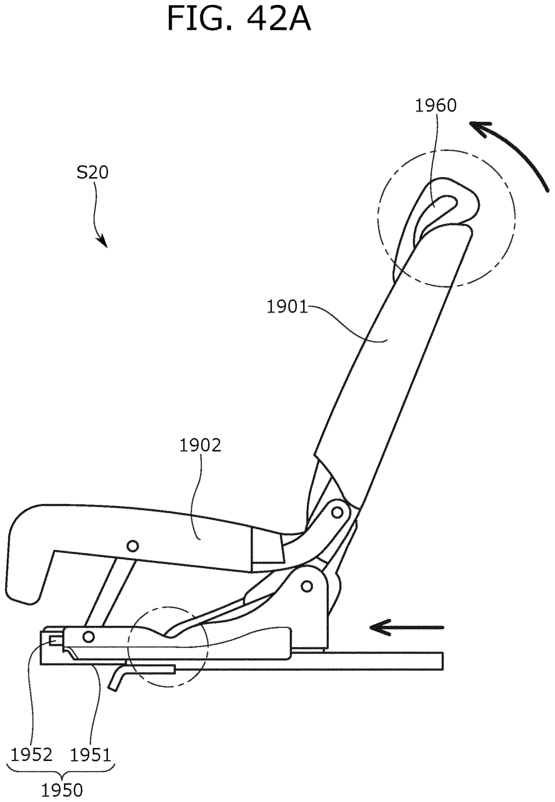

As illustrated in FIG. 41A and FIG. 42A, the conveyance seat S20 is a seat that can be switched between a "normal state (normal position)" located at a reference position in a seat front to rear direction, and a "slide movement state (slide movement position)" in which a seat main body has slid to a predetermined position in the seat front to rear direction.

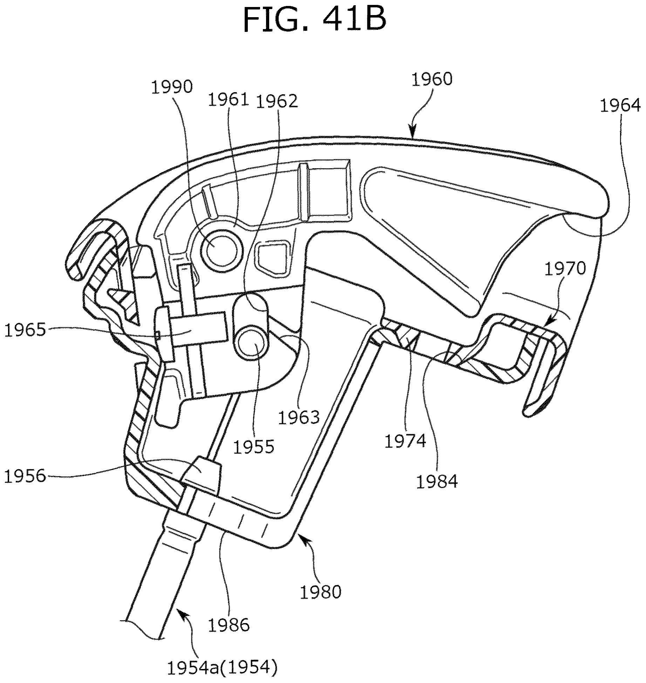

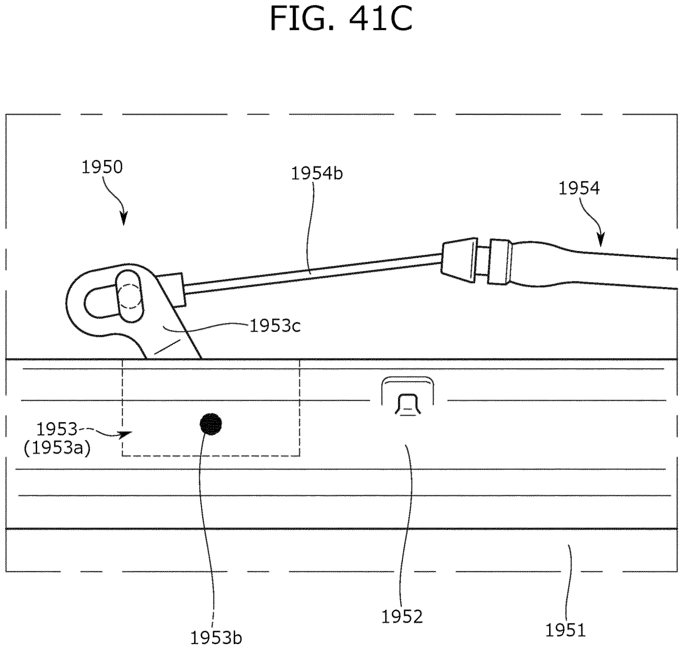

Specifically, when the conveyance seat S20 is in the "normal state" illustrated in FIG. 41A, a lock member 1953 that locks a movement operation of the seat main body is in a locked state (locked position) (refer to FIG. 41B and FIG. 41C). In addition, when an occupant pulls an operation lever 1960 located at an upper end portion of the seat main body, the locked state of the lock member 1953 is released, and the seat main body is slidable in the seat front to rear direction (refer to FIG. 42A to FIG. 42C).

When the occupant releases the operation lever 1960 after the seat main body has slid to a predetermined position, the lock member 1953 enters a locked state from the unlocked state (lock release position). According to this, the conveyance seat S20 is switched from the "normal state" to the "slide movement state" as illustrated in FIG. 42A.

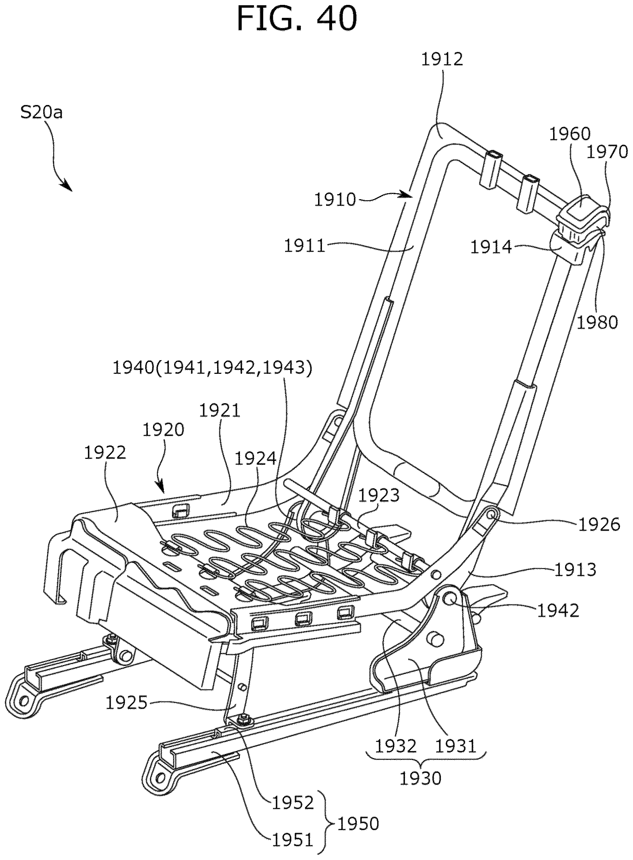

As illustrated in FIG. 39 and FIG. 40, the conveyance seat S20 includes a seat main body including a seat back 1901, a seat cushion 1902, and a headrest 1903, a support base 1930 that supports the seat main body from a downward side, and a reclining device 1940 that rotatably connects the seat back 1901 to a support base 1930, and locks a rotating operation of the seat back 1901.

In addition, the conveyance seat S20 further includes a rail device 1950 that is attached between a vehicle body floor and the support base 1930, rotatably supports the seat main body in the seat front to rear direction, and locks a movement operation of the seat main body.

As illustrated in FIG. 39, the seat back 1901 is a backrest that supports the back of an occupant from a rear side, and has a configuration in which a pad member 1901a is placed on a back frame 1910 as a skeleton as illustrated in FIG. 40 and the pad member 1901a is covered with a skin material 1901b.

Note that, the operation lever 1960 is attached to a left portion of an upper surface of the seat back 1901 in the seat width direction.

The seat cushion 1902 is a seating portion that supports the occupant from a downward side, and has a configuration in which a pad material 1902a is placed on a cushion frame 1920 as a skeleton as illustrated in FIG. 40, and the pad material 1902a is covered with a skin material 1902b.

The headrest 1903 is a head portion that supports the head of the occupant from a rear side, and has a configuration in which a pad member 1903a is placed on a pillar (not illustrated) as a core material, and the pad member 1903a is covered with a skin material 1903b.

As illustrated in FIG. 40, the back frame 1910 is constituted by a rectangular frame-shaped body, and mainly includes a frame-shaped main frame 1911 that is constituted by a pipe material, and a plate-shaped panel frame 1912 that is attached to the rear of a seat of the main frame 1911. Right and left connecting brackets 1913 for connection with the support base 1930 are attached to an outer side surface of a downward portion of the main frame 1911.

The connecting bracket 1913 is constituted by a bow-shaped plate member extending the up to down direction, and upper ends of the connecting brackets 1913 are attached to the back frame 1910, and lower ends thereof are attached to the support base 1930.

A reclining device 1940 (reclining main body 1941) that rotatably connects the back frame 1910 to the support base 1930 is attached to a lower end portion of the right connecting bracket 1913. In addition, a back rotating shaft 1942 that is pivotally supported to the support base 1930 in the seat width direction is attached to a lower end portion of the left connecting bracket 1913.

An attachment bracket 1914 for attaching the operation lever 1960 and a lever attachment member 1980 from an upward side is fixed to a left portion of an upper surface of the back frame 1910.

Note that, the attachment bracket 1914 may be fixed to a right portion of the upper surface of the back frame 1910 in the seat width direction, or may be fixed to a rear surface of the back frame. Alternatively, the attachment bracket 1914 may be fixed to a front surface of the cushion frame 1920.

As illustrated in FIG. 40, the cushion frame 1920 is constituted by an approximately rectangular frame-shaped body, and mainly includes side frames 1921 which are disposed on right and left lateral sides, a plate-shaped pan frame 1922 (a bridging frame) that is bridged to front portions of the side frames 1921, a pipe-shaped rear connecting frame 1923 that connects rear portions of the side frames 1921, and a plurality of elastic springs 1924 (elastic support members) that is hooked to the pan frame 1922 and the rear connecting frame 1923 and extends in a serpentine shape in the seat front to rear direction.

The side frames 1921 are plate-shaped frames elongated in the seat front to rear direction.

A connecting link 1925 for connection with the rail device 1950 is attached to a front portion of each of the side frames 1921. In addition, a cushion rotating shaft 1926 for connection with the back frame 1910 is attached to a rear portion of the side frame 1921.

The connecting link 1925 is a member that rotates so as to accommodate the seat main body (seat cushion 1902) in a vehicle body floor side, and a pair of the connecting links 1925 are attached between the cushion frame 1920 and the rail device 1950.

As illustrated in FIG. 40, the support base 1930 is a base member that supports the seat main body, and connects the back frame 1910 (connecting bracket 1913) and the rail device 1950 (upper rail 1952) in the up to down direction.

Specifically, the support base 1930 includes approximately L-shaped side base portions 1931 disposed on right and left lateral sides in the seat width direction and are attached to upper surfaces of the upper rails 1952, and a pipe-shaped base connecting portion 1932 that connects the right and left side base portions 1931.

As illustrated in FIG. 40, the reclining device 1940 is disposed between the right connecting bracket 1913 and the right support base 1930 (base connecting portion 1932) in the seat width direction.

The reclining device 1940 mainly includes a reclining main body 1941 that is driven when rotating the back frame 1910, a back rotating shaft 1942, a spiral spring 1943 that biases the back frame 1910 to forwardly rotate around the back rotating shaft 1942, a reclining operation lever (not illustrated) that is operated to release a locked state of the back frame 1910, and a connecting wire (not illustrated) that connects the reclining operation lever and the reclining main body 1941.

The reclining main body 1941 includes a known lock mechanism, and can switch a state of the back frame 1910 between a locked state of being fixed with respect to the support base 1930, and an unlocked state capable of rotating with respect to the support base 1930.

The back rotating shaft 1942 is pivotally supported to the back frame 1910 side and the support base 1930 side in the seat width direction, and one end portion of the spiral spring 1943 is locked to the back frame 1910 side and the other end thereof is locked to the support base 1930 side.

Note that, the connecting wire (not illustrated) is pulled by an operation by the reclining operation lever, and operates to switch the seat back 1901 from a locked state to an unlock state.

In the above-described configuration, the reclining device 1940 locks the back frame 1910 in an erected posture, and when the reclining operation lever is operated, the locked state of the back frame 1910 is released, and the back frame 1910 is rotated to a front side by a biasing force of the spiral spring 1943, thereby folding the back frame 1910 to a vehicle body floor side in combination with the cushion frame 1920.

As illustrated in FIG. 39 to FIG. 42C, the rail device 1950 is a device that supports the seat main body to be slidable in the seat front to rear direction, and is disposed between the seat main body and the vehicle body floor.

The rail device 1950 includes right and left lower rails 1951 which are fixed to the vehicle body floor and extend in the seat front to rear direction, right and left upper rails 1952 witch are supported to be slidable along the lower rails 1951, right and left lock members 1953 which lock the upper rails 1952 so as not to be slidable with respect to the lower rails 1951, an operation lever 1960 that is operated to release a locked state of the lock members 1953, and right and left connecting wires 1954 which connect the right and left lock members 1953 and the operation lever 1960.

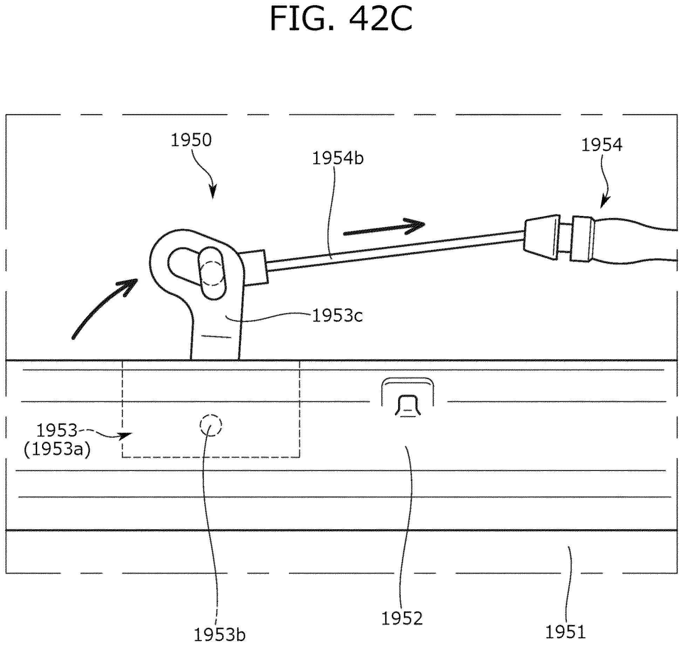

As illustrated in FIG. 41C and FIG. 42C, the lock members 1953 are members which are disposed between the right and left upper rails 1952, and rotate between a locked position where the upper rails 1952 are locked not to be slidable with respect to the lower rails 1951 and an unlock position.

Note that, the left lock member 1953 corresponds to a "first lock member 1953A", and the right lock member 1953 corresponds to a "second lock member 1953B".

Each of the lock members 1953 mainly includes a lock main body 1953a, and a rotating lever 1953c that connects the lock main body 1953a and a connecting wire 1954, and rotates around a rotating shaft 1953b as the connecting wire 1954 is pulled.

Note that, the lock main body 1953a and the rotating lever 1953c are biased to a locked position by a spring (not illustrated).

The lock main body 1953a is attached to an inner side surface of the upper rail 1952, and operates (rotates) to detach an engagement groove provided in the upper rail 1952 from an engagement claw provided in the lower rail 1951 in accordance with a rotating operation of the rotating lever 1953c to release a locked state of the upper rail 1952.

The rotating lever 1953c is a rotary member elongated in the up to down direction, and is attached to the inner side surface of the upper rail 1952 through the rotating shaft 1953b. In addition, the rotating lever 1953c functions as a transmission member that transmits the pulling operation of the connecting wire 1954 to the lock main body 1953a.

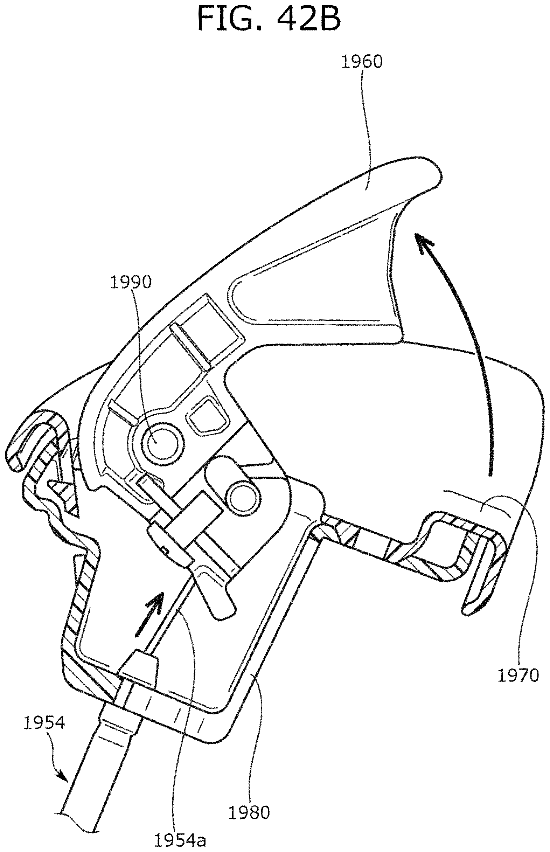

As illustrated in FIGS. 42A, 42B, and 42C, the connecting wire 1954 is a connecting member that is pulled by the rotating operation of the operation lever 1960, and operates to switch the lock member 1953 from a locked position to an unlocked position.

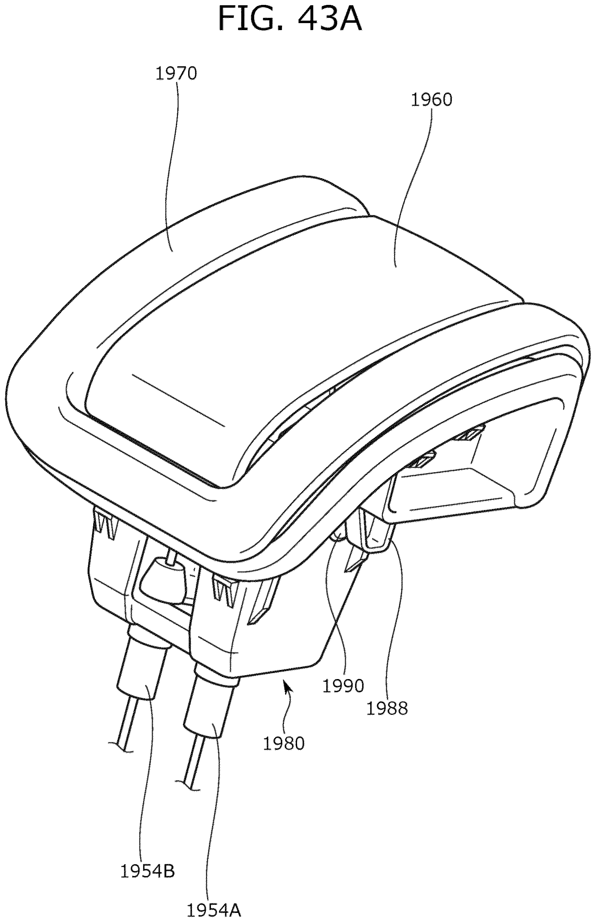

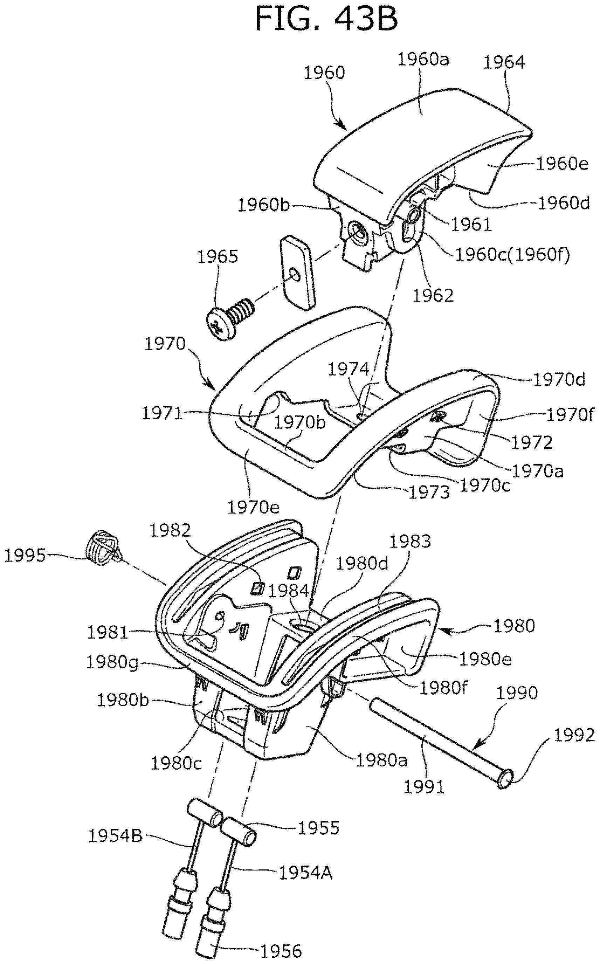

Note that, as illustrated in FIGS. 43A and 43B, a left connecting wire 1954 corresponds to a "first connecting wire 1954A" and a right connecting wire 1954 corresponds to a "second connecting wire 1954B".

The connecting wire 1954 includes one end portion 1954a that is attached to the operation lever 1960, a folding portion that extends downward from the one end portion 1954a and becomes a folded portion, and the other end portion 1954b that extends to a seat front side from the folding portion and is attached to the lock member 1953 (rotating lever 1953c).

Specifically, as illustrated in FIGS. 43A and 43B, a T-shaped connecting tool 1955 that is attached to the operation lever 1960 (attachment portion 1962), and a support tool 1956 that is supported to a lever attachment member 1980 (support portion 1986) are attached to the one end portion 1954a of the connecting wire 1954. This is also true of the other end portion 1954b.

### <<Operation Lever, Cover Member, and Lever Attachment Member>>

As illustrated in FIG. 41A to FIG. 44, the operation lever 1960 is a lever that is rotated to release a locked state of the rail device 1950, and is attached to an upper surface of the seat back 1901.

Specifically, the operation lever 1960 is accommodated in a cover member 1970 and the lever attachment member 1980 provided on an upper surface of the seat back 1901. In addition, the operation lever 1960 is rotatably attached to the lever attachment member 1980 through a lever rotating shaft 1990.

The operation lever 1960 is a lever elongated in the seat front to rear direction, and a front end portion thereof corresponds to a "base end portion", and a rear end portion thereof corresponds to a "tip end portion".

The operation lever 1960 is attached to be rotatable between a "normal position" as illustrated in FIG. 41B and a "rotation position" rotated from the normal position as illustrated in FIG. 42B.

Note that, the operation lever 1960 is biased from the rotation position side to the normal position side by a biasing spring 1995 interposed between the operation lever 1960 and the lever attachment member 1980.

As illustrated in FIGS. 43A and 43B, the operation lever 1960 includes an upper wall portion 1960a that forms an outer surface of the operation lever 1960 and extends in the seat front to rear direction while being curved, a front wall portion 1960b that extends downward from a front end portion of the upper wall portion 1960a, right and left side wall portions 1960c which extend downward from right and left lateral portions of the upper wall portion 1960a and are connected to the upper wall portion 1960a and the front wall portion 1960b, a bottom wall portion 1960d that connects the right and left side wall portions 1960c and protrudes toward a seat rear side from the right and left side wall portions 1960c, and right and left reinforcement wall portion 1960e which connect rear portions of the upper wall portion 1960a and the bottom wall portion 1960d.

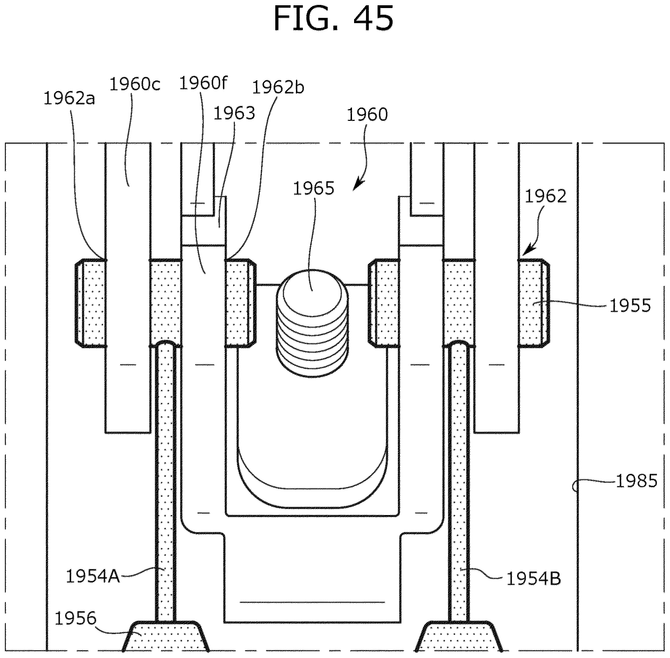

In addition, the operation lever 1960 further includes right and left second side wall portions 1960f which protrude downward from right and left lateral portions of the bottom wall portion 1960d (refer to FIG. 45).

The side wall portions 1960c and the second side wall portions 1960f are disposed at positions facing each other in the seat width direction, and the side wall portions 1960c are disposed on an outer side as compared with the second side wall portions 1960f.

The operation lever 1960 includes right and left shaft support portions 1961 which are formed in the right and left side wall portions 1960c, protrudes from the side wall portions 1960c toward an outer side in the seat width direction, and pivotally supports the lever rotating shaft 1990.

In addition, the operation lever 1960 includes a first attachment portion 1962A that is formed across the left side wall portion 1960c and the second side wall portion 1960f for attaching the connecting tool 1955 of the first connecting wire 1954A, and a second attachment portion 1962B that is formed across the right side wall portion 1960c and the second side wall portion 1960f for attaching the connecting tool 1955 of the second connecting wire 1954B.

In addition, the operation lever 1960 includes a lever operation portion 1964 that protrudes from a rear end portion of the upper wall portion 1960a to a seat rear side and is used by an occupant to hook his or her finger thereon. The lever operation portion 1964 is formed to be approximately flushed with an upper surface of the cover member 1970.

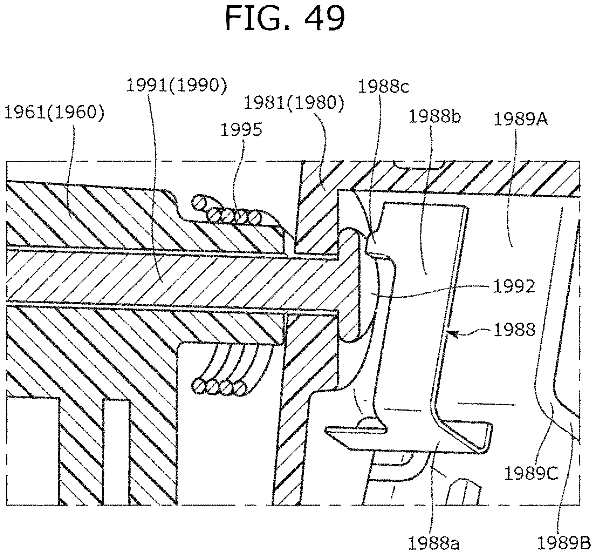

As illustrated in FIG. 43B and FIG. 49, the right and left shaft support portions 1961 are shaft support holes into which the lever rotating shaft 1990 can be inserted in the seat width direction. Specifically, the right and left shaft support portions 1961 can pivotally support the lever rotating shaft 1990 by inserting the lever rotating shaft 1990 from the left shaft support portion 1961.

Note that, the shaft support portions 1961 may be surrounded by a plurality of reinforcement ribs. For example, the reinforcement ribs may protrude outward from the side wall portions 1960c, and may connect the upper wall portion 1960a and the shaft support portions 1961.

As illustrated in FIG. 43B and FIG. 45, the first attachment portion 1962A (1962) is an elliptical attachment hole elongated in the up to down direction, and holds the connecting tool 1955 of the first connecting wire 1954A in a sandwiching manner.

Specifically, the first attachment portion 1962A (1962) holds the connecting tool 1955 by an outer through-hole 1962a formed in each of the side wall portions 1960c, and an inner through-hole 1962b formed in each of the second side wall portions 1960f from a downward side and in the seat front to rear direction.

Note that, the operation lever 1960 further includes a wire passing portion 1963 (wire passing hole) that is formed by cutting a rear end portion of the second side wall portion 1960f for guiding the first connecting wire 1954A to the first attachment portion 1962A.

This is also true of the second attachment portion 1962B.

As illustrated in FIG. 41A to FIG. 44, the cover member 1970 is a cover plate that supports the operation lever 1960, and is attached to the lever attachment member 1980 in a state of being accommodated inside the lever attachment member 1980.

Specifically, the cover member 1970 is configured to sandwich a portion of the skin material 1901b (an outer peripheral portion of an opening hole formed in the skin material 1901b) with the lever attachment member 1980. According to this, the appearance near the operation lever 1960 becomes better.

As illustrated in FIG. 43B, the cover member 1970 has a box shape in which a bottom surface is opened.

Specifically, the cover member 1970 mainly includes right and left side wall portions 1970a disposed in the seat width direction with a predetermined interval, a front wall portion 1970b that connects front end portions of the right and left side wall portions 1970a, a bottom wall portion 1970c that connects lower end portions of the right and left side wall portions 1970a, right and left lateral flange portions 1970d which overhang from the upper end portions and the rear end portions of the right and left side wall portions 1970a to an outer side in the seat width direction, a front flange portion 1970e that overhangs from an upper end portion of the front wall portion 1970b to a seat front side, and a rear flange portion 1970f that overhangs downward from a rear end portion of the bottom wall portion 1970c.

In a front portion of the bottom wall portion 1970c of the cover member 1970, an approximately rectangular cover opening portion 1971 that passes through the front portion in the up to down direction is formed.

The cover opening portion 1971 is a notched opening hole formed across a downward portion of the right and left side wall portions 1970a from the bottom wall portion 1970c.

A downward portion of the operation lever 1960 is assembled to pass through the cover member 1970 through the cover opening portion 1971. In addition, the lever rotating shaft 1990 is assembled to pass through the cover member 1970.

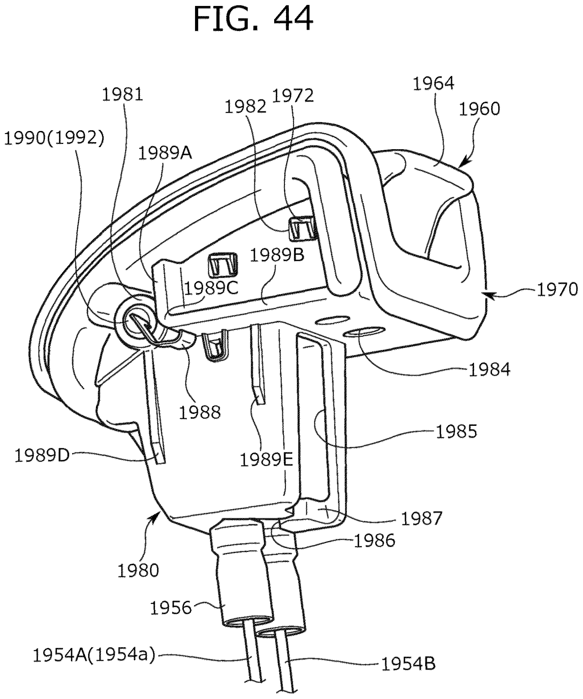

As illustrated in FIG. 43B and FIG. 44, the cover member 1970 includes right and left cover engagement claws 1972 which protrude outward from the right and left side wall portions 1970a, and engage with the lever attachment member 1980 (engagement holes 1982).

In addition, the cover member 1970 includes right and left cover engagement convex portions 1973 which protrude downward from the right and left lateral flange portions 1970d and engage with the lever attachment member 1980 (engagement concave portions 1983), and a second cover engagement convex portion 1974 that protrudes downward from the bottom wall portion 1970c, and engages with the lever attachment member 1980 (second engagement concave portion 1984) .

Even in the above-described configuration, as illustrated in FIG. 39, the operation lever 1960 and the cover member 1970 are assembled to the back frame 1910 (lever attachment member 1980) to be partially exposed from the outer surface of the seat back 1901.

In addition, when the operation lever 1960 is at a locked position, the outer surface of the seat back 1901, an outer surface of the operation lever 1960, and an outer surface of the cover member 1970 are approximately flushed with each other.

According to this, the operation lever 1960 can be disposed compactly at an upward portion of the seat back 1901 without deteriorating the design of the conveyance seat S20.

As illustrated in FIG. 40, FIGS. 43A and 43B, and FIG. 44, the lever attachment member 1980 is an accommodation plate that rotatably supports the operation lever 1960, and is attached in a state of being partially fitted into the attachment bracket 1914 of the back frame 1910.

As illustrated in FIG. 43B, the lever attachment member 1980 has a box shape in which a rear surface is opened.

Specifically, the lever attachment member 1980 includes inverted L-shaped right and left side wall portions 1980a disposed with an interval in the seat width direction, a front wall portion 1980b that connects front end portions of the right and left side wall portions 1980a, a bottom wall portion 1980c that connects lower end portions of front portions of the right and left side wall portions 1980a, a second bottom wall portion 1980d that connects lower end portions of rear portions of the right and left side wall portions 1980a, and a rear wall portion 1980e that connects a rear end portion of the bottom wall portion 1980c and a front end portion of the second bottom wall portion.

In addition, the lever attachment member 1980 includes right and left lateral flange portions 1980f which overhang outward in the seat width direction from upper end portions and rear end portions of the right and left side wall portions 1980a, and a front flange portion 1980g that overhangs to a seat front side from an upper end portion of the front wall portion 1980b.

As illustrated in FIG. 43B and FIG. 44, the lever attachment member 1980 includes right and left shaft support portions 1981 which are formed at front portions of the right and left side wall portions 1980a and pivotally support the lever rotating shaft 1990.

In addition, the lever attachment member 1980 includes right and left engagement holes 1982 which are formed in rear portions of the right and left side wall portions 1970a and engage with the cover member 1970 (cover engagement claws 1972).
in addition, the lever attachment member 1980 includes right and left engagement concave portions 1983 which are formed in upper surfaces of the right and left lateral flange portions 1980f and engage with the cover member 1970 (cover engagement convex portions 1973), and a second engagement concave portion 1984 that is formed in the second bottom wall portion 1980d and engages with the cover member 1970 (second cover engagement convex portion 1974) .

A plurality of the engagement holes 1982 are formed in the side wall portions 1980a at different positions in the seat front to rear direction and the up to down direction.

The engagement concave portions 1983 are formed in the lateral flange portions 1980f to extend along the seat front to rear direction.

A plurality of the second engagement concave portions 1984 are formed to be aligned in the seat width direction.

Note that, the cover engagement claws 1972 and the engagement holes 1982, the cover engagement convex portions 1973 and the engagement concave portions 1983, and the second cover engagement convex portion 1974 and the second engagement concave portion 1984 may have shapes capable of engaging with each other, respectively, or may engage with each other by any engagement means.

### <<Common Opening Portion, First Support Portion, and Second Support Portion>>

As illustrated in FIG. 44 to FIG. 46, the lever attachment member 1980 includes an approximately rectangular opening portion 1985 that passes through the rear wall portion 1980e in the seat front to rear direction.

The opening portion 1985 is an opening hole elongated in the up to down direction and corresponds to a "common opening portion" that is formed to guide the first connecting wire 1954A into the first attachment portion 1962A, and to guide the second connecting wire 1954B into the second attachment portion 1962B.

In addition, the lever attachment member 1980 includes a first support portion 1986A that is formed in the bottom wall portion 1980c and supports the support tool 1956 of the first connecting wire 1954A, a second support portion 1986B that supports the support tool 1956 of the second connecting wire 1954B, and a common guide hole 1987 that is formed to guide the first connecting wire 1954A into the first support portion 1986A, and to guide the second connecting wire 1954B into the second support portion 1986B.

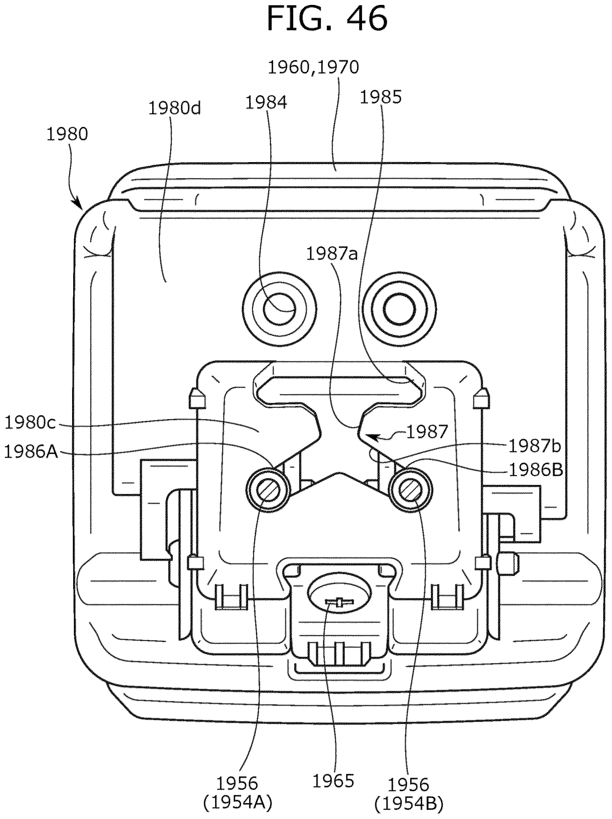

As illustrated in FIG. 46, the guide hole 1987 is formed by cutting the bottom wall portion 1980c from a rear end portion toward a front side, and forms a passage from the opening portion 1985 to the first support portion 1986A and the second support portion 1986B.

Specifically, the guide hole 1987 includes a first hole portion 1987a that is formed continuously from the opening portion 1985 and is narrower than the opening portion 1985, and right and left second hole portion 1987b which are formed continuously from the first hole portion 1987a, are branched from the first hole portion 1987a, and extend toward the first support portion 1986A and the second support portion 1986B, respectively.

The right and left second hole portions 1987b extend along directions intersecting an operation direction of the operation lever 1960.

The first support portion 1986A is a support hole that holds the support tool 1956 of the first connecting wire 1954A in a sandwiching manner.

In addition, the second support portion 1986B is a support hole that holds the support tool 1956 of the second connecting wire 1954B in a sandwiching manner.

The first support portion 1986A and the second support portion 1986B are disposed at positions aligned in the seat width direction, and are disposed at bilaterally symmetrical positions in the lever attachment member 1980.

### <<Method of Assembling Connecting wire>>

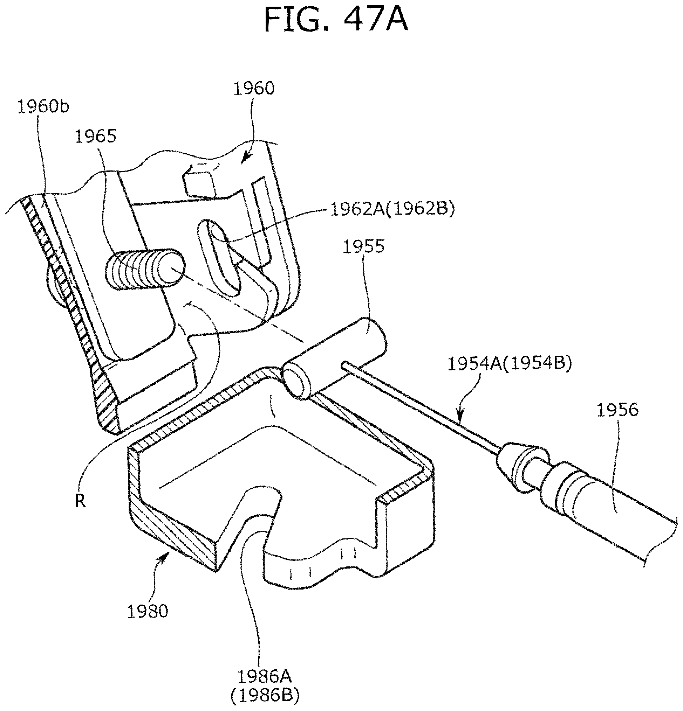

Next, a method of assembling the connecting wire 1954 to the operation lever 1960 will be described with reference to FIG. 47A to FIG. 47C.

FIG. 47A is a view illustrating a state in which the operation lever 1960, the cover member 1970, the lever attachment member 1980, and the lever rotating shaft 1990 are assembled. The cover member 1970 is omitted.

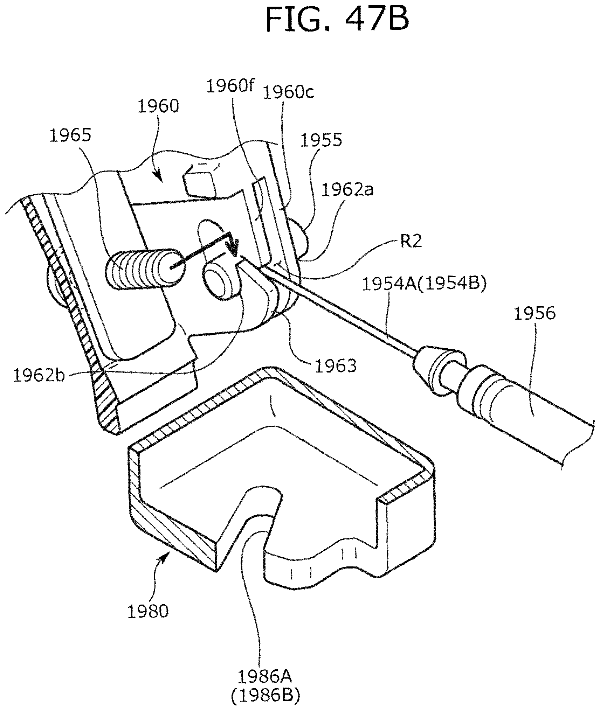

FIG. 47B is a view illustrating a state in which the connecting wire 1954 (connecting tool 1955) is assembled to the operation lever 1960 (attachment portion 1962) from the state in FIG. 47A.

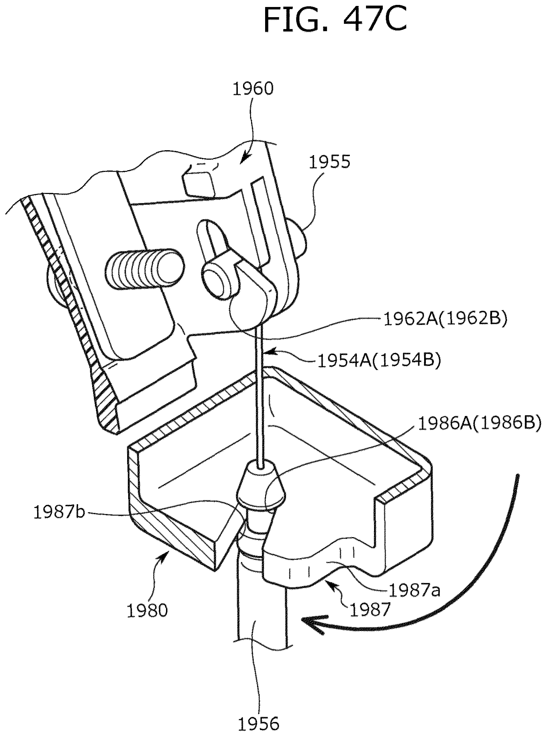

FIG. 47C is a view illustrating a state in which the connecting wire 1954 (support tool 1956) is attached to the lever attachment member 1980 (support portion 1986) from the state in FIG. 47B.

First, a worker performs a process of assembling the connecting tool 1955 of the first connecting wire 1954A to the first attachment portion 1962A of the operation lever 1960 from a rear side (step S1) (refer to FIG. 47A).

Specifically, first, the connecting tool 1955 of the first connecting wire 1954A is moved to a space R located between the first attachment portion 1962A and the second attachment portion 1962B in the operation lever 1960 (step S1-1).

At this time, the first connecting wire 1954A (connecting tool 1955) can reach the operation lever 1960 after passing through the opening portion 1985 of the lever attachment member 1980.

In addition, the connecting tool 1955 comes into contact with a guide member 1965 provided in the space R of the operation lever 1960, thereby positioning the connecting tool 1955 in the seat front to rear direction.

The guide member 1965 is a protrusion member that is assembled to the front wall portion 1960b of the operation lever 1960 and protrudes toward a seat rear side. The guide member 1965 is disposed at a central position between the first attachment portion 1962A and the second attachment portion 1962B.

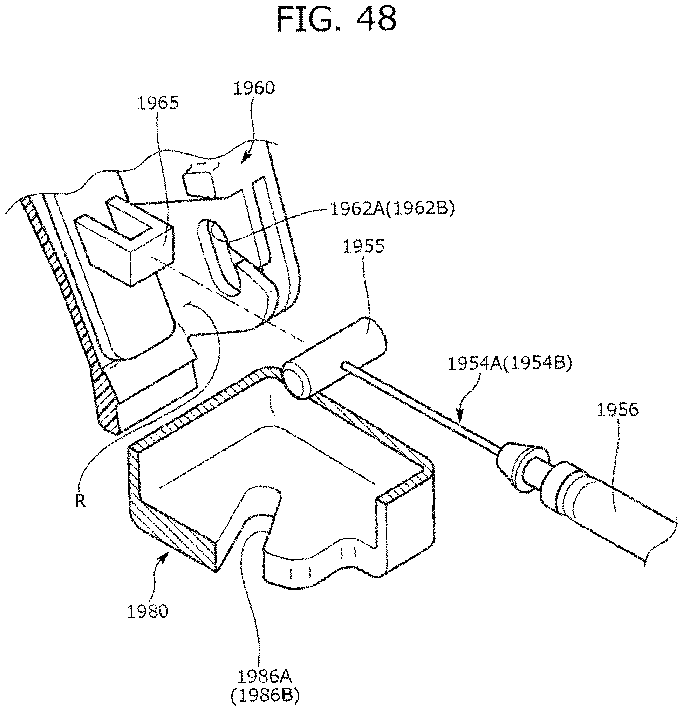

Note that, as a modification example of the guide member 1965, as illustrated in FIG. 48, the guide member 1965 may be a protrusion member having an approximately U-shaped transverse cross-section. That is, the guide member 1965 may be constituted by right and left side wall portions, and a contact wall portion that connects the right and left side wall portions and is in contact with the connecting tool 1955.

In addition, as illustrated in FIG. 47B, the first connecting wire 1954A and the connecting tool 1955 are moved as is to an outer side in a width direction of the operation lever 1960 (step S1-2).

At this time, the first connecting wire 1954A is necessary to be moved in a longitudinal direction in the seat front to rear direction in order to pass through the wire passing portion 1963 of the operation lever 1960. According to this, the first connecting wire 1954A passes through the wire passing portion 1963, and the connecting tool 1955 can pass through the inner through-hole 1962b.

The connecting tool 1955 enters a state of being inserted into both the side wall portion 1960c (the outer through-hole 1962a), and the second side wall portion 1960f (the inner through-hole 1962b), and one end portion of the first connecting wire 1954A enters a state of being located in a space R2 between the side wall portion 1960c and the second side wall portion 1960f.

In addition, as illustrated in FIG. 47B, the connecting tool 1955 of the first connecting wire 1954A is assembled to the first attachment portion 1962A (step S1-3).

Specifically, the connecting tool 1955 is inserted slightly downward to enter a state in which the connecting tool 1955 is held by the outer through-hole 1962a and the inner through-hole 1962b.

Then, as illustrated in FIG. 47C, the worker performs a process of assembling the support tool 1956 of the first connecting wire 1954A to the first support portion 1986A of the lever attachment member 1980 from a rear side (step S2).

Specifically, first, the first connecting wire 1954A is rotated downward with the connecting tool 1955 set as a supporting point to be moved toward the lever attachment member 1980 (first support portion 1986A) (step S2-1).

At this time, the support tool 1956 can be moved toward the first support portion 1986A after passing through the opening portion 1985 of the lever attachment member 1980.

Then, as illustrated in FIG. 47C, the support tool 1956 is inserted into the inside of the guide hole 1987 (step S2-2) .

At this time, the support tool 1956 can be inserted into the guide hole 1987 (first hole portion 1987a) by inclining the first connecting wire 1954A to a central position side in a width direction of the lever attachment member 1980.

Then, the support tool 1956 is assembled to the first support portion 1986A (step S2-3).

Specifically, the support tool 1956 is inserted into the first support portion 1986A (first support hole) while being guided by the guide hole 1987 (second hole portion 1987b). According to this, the support tool 1956 enters a state of being sandwiched by the first support portion 1986A in the seat front to rear direction.

Then, the worker performs a process of assembling the connecting tool 1955 of the second connecting wire 1954B to the second attachment portion 1962B of the operation lever 1960 from a rear side (step S3).

Then, the worker performs a process of assembling the support tool 1956 of the second connecting wire 1954B to the second support portion 1986B of the lever attachment member 1980 from a rear side (step S4).

A series of working processes are terminated through the steps S1 to S4.

According to the method of assembling the connecting wire 1954, it is possible to easily assemble the first connecting wire 1954A and the second connecting wire 1954B in a simple structure, and it is possible to stably assemble the first connecting wire 1954A and the second connecting wire 1954B.

In addition, in the above-described configuration, as illustrated in FIG. 45, the first attachment portion 1962A and the second attachment portion 1962B of the operation lever 1960 are disposed on an inner side as compared with both edges of the opening portion 1985 in a width direction of the opening portion 1985, and are disposed on a downward position as compared with an upper edge of the opening portion 1985.

In addition, the first attachment portion 1962A and the second attachment portion 1962B are disposed at bilaterally symmetrical positions in the operation lever 1960.

According to this, it is easy to visually confirm the first connecting wire 1954A and the second connecting wire 1954B from an outer side through the opening portion 1985. Accordingly, an assembly structure can be further simplified.

In the above-described configuration, as illustrated in FIG. 45, FIG. 46, and FIG. 47C, the first attachment portion 1962A and the first support portion 1986A are disposed at positions overlapping each other in an alignment direction of the first connecting wire 1954A and the second connecting wire 1954B, and are disposed at positions overlapping each other in the operation direction of the operation lever 1960.

In addition, the second attachment portion 1962B and the second support portion 1986B are disposed at positions overlapping each other in the alignment direction, and are disposed at positions overlapping each other in the operation direction of the operation lever 1960.

Therefore, an assembly structure of the operation lever 1960, the lever attachment member 1980, and the plurality of connecting wires 1954 can be simplified. In addition, an operation efficiency of the first connecting wire 1954A and the second connecting wire 1954B by the operation lever 1960 can also be raised.

### <<Movement Restriction Portion>>

As illustrated in FIG. 44 and FIG. 49, the lever attachment member 1980 includes right and left movement restriction portions 1988 which are formed on outer side surfaces of right and left side wall portions 1980a, are provided at positions capable of coming into contact with one end portion of the lever rotating shaft 1990 in an axial direction, and restrict movement of the lever rotating shaft 1990 from a pivotally supported position.

Specifically, the lever attachment member 1980 includes a first reinforcement portion 1989A and a second reinforcement portion 1989B which protrude outward from an outer side surface of each of the side wall portions 1980a, and extend to intersect each other on the outer side surface of the side wall portion 1980a.

In addition, each of the movement restriction portions 1988 is integrally attached to a connecting portion 1989C at which the first reinforcement portion 1989A extending in the up to down direction and the second reinforcement portion 1989B extending in the front to rear direction are connected.

Note that, the movement restriction portion 1988 may be attached to a peripheral portion of the connecting portion 1989C.

The movement restriction portion 1988 is a leaf spring with the connecting portion 1989C set as a base end portion, and protrudes from the base end portion toward an end portion of the lever rotating shaft 1990 and detachably supports the lever rotating shaft 1990.

The movement restriction portion 1988 includes a first extension portion 1988a that extends forward from the connecting portion 1989C of the lever attachment member 1980, a second extension portion 1988b that extends from an extension end portion of the first extension portion 1988a to a direction (upward side) that intersects the extension direction of the first extension portion 1988a, and a contact portion 1988c that protrudes from the second extension portion 1988b toward the lever rotating shaft 1990, and comes into contact with one end portion of the lever rotating shaft 1990.

As illustrated in FIG. 49, the first extension portion 1988a is formed to be wider than the second extension portion 1988b.

The second extension portion 1988b is deformable to be bent with the extension end portion of the first extension portion 1988a set as a support point.

The contact portion 1988c protrudes from an extension end portion of the second extension portion 1988b in a direction (orthogonal direction) intersecting the extension direction of the second extension portion 1988b, and is in contact with a shaft head portion 1992 of the lever rotating shaft 1990.

As illustrated in FIG. 49, the lever rotating shaft 1990 includes an elongated shaft main body portion 1991 that is supported in a state of being inserted into the lever attachment member 1980 (shaft support portion 1981), and the shaft head portion 1992 that is provided at one end portion of the shaft main body portion 1991 in an axial direction, and comes into contact with an opening portion of the shaft support portion 1981.

The movement restriction portion 1988 (contact portion 1988c) comes into contact with an end surface (strictly, an outer peripheral portion of the end surface) of the shaft head portion 1992 and restricts movement of the lever rotating shaft 1990.

In the above-described configuration, the movement restriction portions 1988 are respectively provided at positions corresponding to both end portions of the lever rotating shaft 1990 in an axial direction.

In addition, as illustrated in FIG. 49, each of the movement restriction portions 1988 (contact portion 1988c) is disposed at a position overlapping the shaft head portion 1992 and is disposed at a position not overlapping the shaft main body portion 1991 when viewed from an axial direction of the lever rotating shaft 1990.

Therefore, the movement restriction portion 1988 is configured to come into contact with one end portion (end portion on the shaft head portion 1992 side) of the lever rotating shaft 1990, and is configured not to come into contact with the other end portion (end portion on the shaft main body portion 1991 side) of the lever rotating shaft 1990.

According to this, when assembling the lever rotating shaft 1990 into the lever attachment member 1980 (shaft support portion 1981), it is possible to avoid that the other end portion of the lever rotating shaft 1990 unintentionally comes into contact with the movement restriction portion 1988. That is, the assembly structure of the lever rotating shaft 1990 can be simplified.

In the above-described configuration, as illustrated in FIG. 49, when viewing the movement restriction portion 1988 from an axial direction of the lever rotating shaft 1990, the extension end portion of the first extension portion 1988a and the contact portion 1988c are disposed at positions with a shaft center of the lever rotating shaft 1990 interposed therebetween.

According to this, it is possible to allow the movement restriction portion 1988 to be likely to be bent with respect to one end portion of the lever rotating shaft 1990. That is, when assembling the lever rotating shaft 1990, it is easy to temporarily retract the movement restriction portion 1988 by bending the movement restriction portion 1988.

Therefore, the lever rotating shaft 1990 can be easily assembled, and the lever rotating shaft 1990 can also be prevented from coming out after being assembled.

In the above-described configuration, as illustrated in FIG. 49, a biasing spring 1995 is attached to the lever rotating shaft 1990, and is disposed at a position on one end portion side with which the movement restriction portion 1988 comes into contact among both end portions of the lever rotating shaft 1990 in an axial direction.

According to this, it is possible to dispose the biasing spring 1995 more stably as compared with a position on the other end portion side of the lever rotating shaft 1990.

Note that, the biasing spring 1995 may be attached to a peripheral position of the lever rotating shaft 1990.

In the above-described configuration, as illustrated in FIG. 44, the movement restriction portion 1988 is disposed at a position different from positions of the plurality of engagement holes 1982 on an outer side surface of the lever attachment member 1980.

According to this, when assembling the cover member 1970 (cover engagement claws 1972) to the lever attachment member 1980, it is possible to suppress the movement restriction portion 1988 and the cover engagement claws 1972 from interfering with each other.

In the above-described configuration, in addition to connection between the first reinforcement portion 1989A and the second reinforcement portion 1989B as illustrated in FIG. 44, the first reinforcement portion 1989A is connected to the lateral flange portions 1980f, and the second reinforcement portion 1989B is also connected to the lateral flange portions 1980f.

In addition, first reinforcement portion 1989A and the second reinforcement portion 1989B are disposed to be surrounded by the plurality of engagement holes 1982.

According to this, the rigidity of the lever attachment member 1980 can be raised. Particularly, the engagement holes 1982 can raise the rigidity of the movement restriction portion 1988.

In the above-described configuration, as illustrated in FIG. 44, the lever attachment member 1980 includes reinforcement ribs 1989D and 1989E which protrude outward from outer side surfaces of the side wall portion 1980a, and extend in the up to down direction.

The reinforcement ribs 1989D and 1989E are disposed with an interval in the front to rear direction. The reinforcement rib 1989D is connected to the shaft support portion 1981, and the reinforcement rib 1989E is connected to the second reinforcement portion 1989B.

According to this, in the lever attachment member 1980, the rigidity of a peripheral portion of the lever rotating shaft 1990 can be raised.

In the above-described configuration, as illustrated in FIG. 49, the amount of protrusion of the first reinforcement portion 1989A and the second reinforcement portion 1989B is larger than the amount of protrusion of the movement restriction portion 1988.

According to this, the rigidity of the movement restriction portion 1988 can be raised.

According to the above-described configuration, when the cover engagement claws 1972 engage with the engagement holes 1982, a tip end portion of each of the cover engagement claws 1972 protrudes outward as compared with the movement restriction portion 1988.

According to this, the assembly rigidity of the cover member 1970 and the lever attachment member 1980 can be raised.

In the above-described configuration, as illustrated in FIG. 49, the movement restriction portion 1988 extends along an extension direction of each of the first reinforcement portion 1989A and the second reinforcement portion 1989B. In other words, the movement restriction portion 1988 is disposed to be aligned with each of the first reinforcement portion 1989A and the second reinforcement portion 1989B.

In addition, a base end portion of the movement restriction portion 1988 is disposed at a position close to one end portion of the lever rotating shaft 1990.

According to this, the rigidity of the movement restriction portion 1988 can be raised.

### <Twenty First Embodiment>

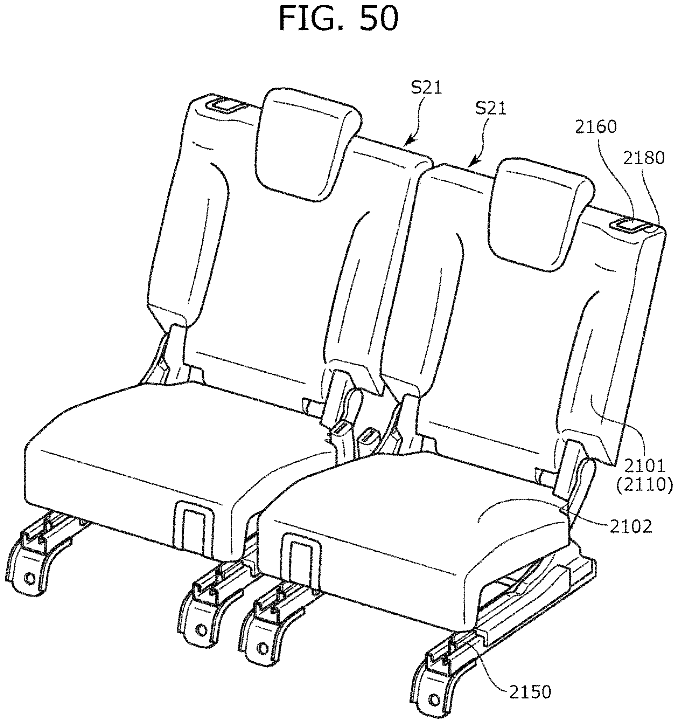

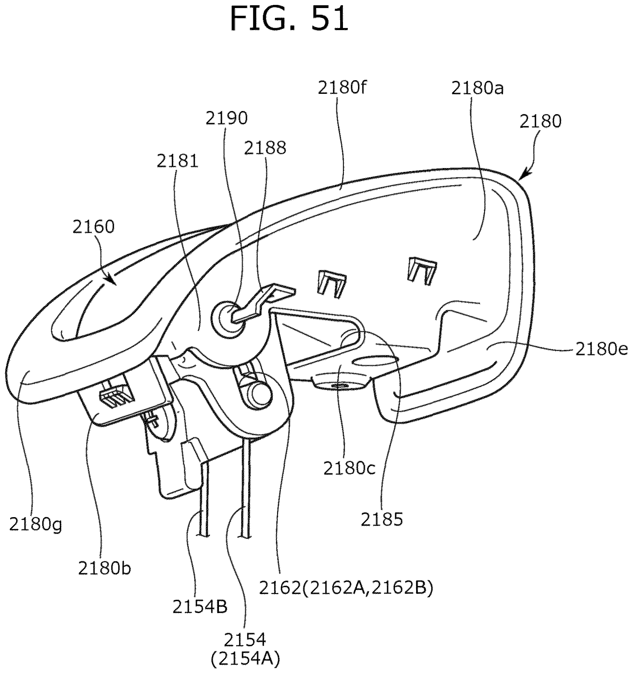

Next, a conveyance seat S21 of a twenty first embodiment will be described with reference to FIG. 50 and FIG. 51.

Note that, description of contents which are redundant with the conveyance seat S20 will be omitted.

The conveyance seat S21 is mainly different from the conveyance seat S20 in that the cover member 1970 is not provided, and a lever attachment member 2080 in which the cover member 1970 and the lever attachment member 1980 are integrated is provided.

The conveyance seat S21 includes a lever attachment member 2080 that is provided on an upper surface of a seat back 2002, and an operation lever 2060 that is rotatably attached to the lever attachment member 2080 through a lever rotating shaft 2090.

The operation lever 2060 is a lever that is operated to release a locked state of a rail device 2050, and is directly accommodated in the lever attachment member 2080.

The operation lever 2060 includes a shaft support portion that pivotally supports the lever rotating shaft 2090, a first attachment portion 2062A that attaches one end portion of a first connecting wire 2054A, and a second attachment portion 2062B that attaches one end portion of a second connecting wire 2054B.

The lever attachment member 2080 is a storage plate that rotatably supports the operation lever 2060, and is partially fitted into an attachment bracket of the back frame 2010 and is attached thereto.

The lever attachment member 2080 has a box shape in which a bottom surface is opened.

Specifically, the lever attachment member 2080 includes right and left side wall portions 2080a, a front wall portion 2080b, a bottom wall portion 2080c, a rear wall portion 2080e, right and left lateral flange portions 2080f, and a front flange portion 2080g.

The lever attachment member 2080 includes right and left shaft support portions 2081 (shaft support holes) formed at a front portion of the right and left side wall portions 2080a and pivotally support the lever rotating shaft 90.

In addition, the lever attachment member 2080 includes an approximately rectangular opening portion 2085 that passes through the bottom wall portion 2080c in the up to down direction.

In addition, the lever attachment member 2080 includes right and left movement restriction portions 2088 which are formed on outer side surfaces of the right and left side wall portions 2080a, are provided at positions capable of coming into contact with one end portion of the lever rotating shaft 2090 in an axial direction, and restrict movement of the lever rotating shaft 2090.

In the above-described configuration, as illustrated in FIG. 51, the side wall portions 2080a are disposed not to cover one end portion (connecting tool 2055) of a connecting wire 2054 from an outer side. In other words, when viewed from an axial direction of the lever rotating shaft 2090, the side wall portions 2080a and the one end portion of the connecting wire 2054 are disposed not to overlap each other.

According to this, it is possible to easily confirm an assembled state of the connecting wire 2054.

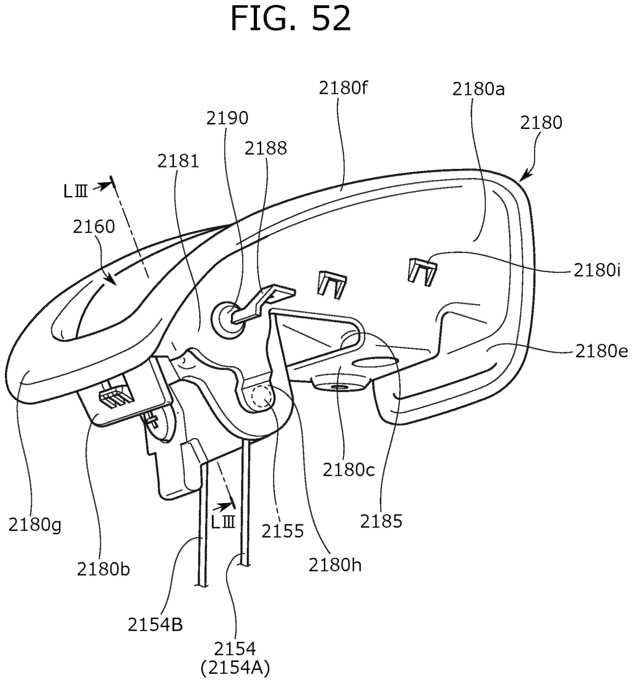

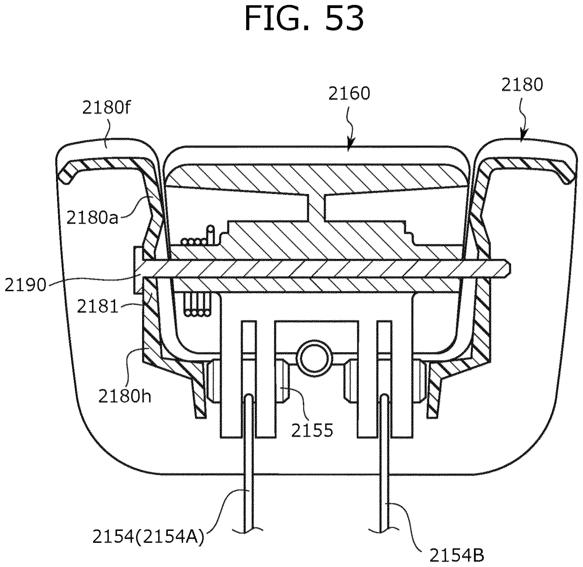

As a modification example of the above-described configuration, as illustrated in FIG. 52 and FIG. 53, the side wall portions 2080a may be disposed to cover the lever rotating shaft 2090 from an outer side, and may be disposed to cover the one end portion (connecting tool 2055) of the connecting wire 2054 from an outer side.

Specifically, the lever attachment member 2080 may further include a hanging portion 2080h that hangs downward from a front portion of each of the side wall portions 2080a. The hanging portion 2080h may cover the one end portion of the connecting wire 2054 from an outer side and may restrict the position of the connecting tool 2055.

According to this, it is possible to restrict a position of the connecting wire 2054 (connecting tool 2055) in a simple configuration without increasing the number of constituent components. In addition, the connecting tool 2055 can be easily assembled.

Preferably, the hanging portion 2080h may have a bent shape, and may bent inward toward the connecting tool 2055. According to this, the thickness of the side wall portion 2080a is not made large, and the hanging portion 2080h can appropriately restrict the position of the connecting tool 2055. In addition, the rigidity of the hanging portion 2080h can also be improved.

Note that, as illustrated in FIG. 52, the lever attachment member 2080 includes a frame engagement portion 2080i that is formed on the outer side surface of the right and left side wall portions 2080a, and engages with an engaged portion provided in the back frame 2010 (attachment bracket). Therefore, it is possible to easily assemble the lever attachment member 2080 to the back frame 2010.

In the above-described configuration, as illustrated in FIG. 51, a portion (lower end portion) of the operation lever 2060 protrudes downward toward a first connecting wire 2054A and a second connecting wire 2054B through an opening portion 2085 formed in the lever attachment member 2080.

According to this, the operation lever 2060, the lever attachment member 2080, and a plurality of the connecting wires 2054 can be compactly arranged.

In addition, work of assembling the first connecting wire 2054A and the second connecting wire 2054B to the operation lever 2060 becomes easy.

In the above-described configuration, as illustrated in FIG. 50, the lever attachment member 2080 is partially exposed from an outer surface of a seat back 2001 and is attached to the back frame 2010 (attachment bracket).

According to this, for example, the lever attachment member 2080 that is attached onto the back frame 2010, and a cover material (bezel) partially exposed from an outer surface of the seat back 2001 can be integrated. According to this, the number of constituent components can be reduced.

In the above-described configuration, for example, the back frame 2010 may include a first support portion (corresponding to a first support portion 86A) that supports the first connecting wire 2054A, and a second support portion (corresponding to a second support portion 86B) that supports the second connecting wire 2054B.

In addition, the first attachment portion 2062A and the first support portion may be disposed at positions overlapping in an alignment direction of the first connecting wire 2054A and the second connecting wire 2054B, and may be disposed at positions overlapping in an operation direction of the operation lever 2060.

The second attachment portion 2062B and the second support portion may also be disposed at positions overlapping in the alignment direction, and may also be disposed at positions overlapping in the operation direction of the operation lever 2060.

According to this, the operation lever 2060, the lever attachment member 2080, and the plurality of connecting wires 2054 can be compactly arranged.

In addition, work of assembling the first connecting wire 2054A and the second connecting wire 2054B to the lever attachment member 2080 becomes easy.

### <<Others>>

In the above-described embodiments, description has been given on the assumption that the "movement state" of the seat main body corresponds to the "slide movement state", but there is no particular limitation.

For example, the "movement state" may correspond to a "reclining state" in which the seat main body (seat back) is inclined rearward to a predetermined position. Alternatively, the "movement state" may correspond to an "accommodation state" in which the seat main body is accommodated to the vehicle body floor side, or a "tip-up state" in which the seat main body (seat back) is flipped up to a predetermined position.

In addition, for example, in a case where the conveyance seat S20 includes the height link device, the "movement state" may be a "height change state" in which the height position of the seat main body is changed.

In addition, for example, in a case where the conveyance seat S20 includes an ottoman device, the "movement state" may be an "ottoman development state" in which a leg support member that is a portion of the seat main body is developed.

In the above-described embodiments, as illustrated in FIG. 40, the conveyance seat S20 includes the reclining device 1940 and the rail device 1950, but the reclining device 1940 may be unnecessary without particular limitation. Alternatively, the rail device 1950 may be unnecessary.

In a case where the reclining device 1940 is set to be unnecessary, it is preferable that the conveyance seat S20 includes the rail device 1950.

In a case where the rail device 1950 is set to be unnecessary, it is preferable that the conveyance seat S20 includes the reclining device 1940. At this time, the reclining operation lever may correspond to the "operation lever", and the reclining main body may correspond to the "lock member". In addition, the movement state of the conveyance seat S20 may correspond to the "reclining state".

In the above-described embodiment, the left lock member 1953 in the rail device 1950 corresponds to the "first lock member", and the right lock member 1953 corresponds to the "second lock member", but there is no particular limitation.

For example, the "first lock member" corresponds to the reclining main body 1941 of the reclining device 1940, and the "second lock member" corresponds to the lock member 1953 of the rail device 1950.

In addition, for example, the "first lock member" corresponds to the reclining main body 1941 of the reclining device 1940, and the "second lock member" corresponds to a lock member of a height link device (not illustrated).

In the above-described embodiments, the conveyance seat S20 (rail device 1950) includes the plurality of lock members 1953 and the plurality of connecting wires 1954, but there is no particular limitation.

For example, the rail device 1950 may include one lock member 1953 and one connecting wire 1954.

In the above-described embodiments, as illustrated in FIG. 39, the operation lever 1960 is attached to the left portion of the upper surface of seat back 1901, but a modification can be made without particular limitation.

For example, the operation lever 1960 may be attached to a right portion of the upper surface of the seat back 1901, or may be attached to a left outer side surface, a right outer side surface, or a rear surface of the seat back 1901.

In addition, for example, the operation lever 1960 may be attached to a front surface, a bottom surface, or a rear surface of the seat cushion 1902. Alternatively, the operation lever 1960 may be attached to a left outer side surface or a right outer side surface of the seat cushion 1902.

In the above-described embodiment, as illustrated in FIGS. 41A and 41B, the operation lever 1960 is a lever elongated in the seat front to rear direction, and the lever rotating shaft 1990 is pivotally supported to a front end portion (base end portion) of the lever, but a modification can be made without particular limitation.

For example, the lever rotating shaft 1990 may be pivotally supported to a rear end portion of the operation lever 1960. In this case, the rear end portion of the operation lever 1960 corresponds to a "base end portion" and a front end portion thereof corresponds to a "tip end portion".

In addition, for example, the operation lever 1960 may be a lever elongated in the seat width direction, and the lever rotating shaft 1990 elongated in the seat front to rear direction may be pivotally supported to one end portion in the seat width direction. In this case, the one end portion of the operation lever 1960 corresponds to the "base end portion" and the other end portion corresponds to the "tip end portion".

In the above-described embodiment, as illustrated in FIG. 49, the movement restriction portion 1988 is a flexible leaf spring that is formed integrally with the lever attachment member 1980, but a modification can be made without particular limitation.

For example, the movement restriction portion 1988 may be separately attached to the lever attachment member 1980 and may have a hinge member including a hinge mechanism. Even in this configuration, the movement restriction portion 1988 can detachably support the lever rotating shaft 1990.

In addition, for example, the movement restriction portion 1988 may be a member including a sliding mechanism. Even in this configuration, the movement restriction portion 1988 may detachably support the lever rotating shaft 1990.

### <<Supplementary Notes of Twentieth to Twenty First Embodiments>>

The conveyance seat of the invention is a conveyance seat that includes a seat main body including a seat back and a seat cushion, and is capable of switching the seat main body between a normal state, and a movement state moved from the normal state. The conveyance seat may include a lock member that is attached to the conveyance seat and locks a movement operation of the seat main body in the normal state, a lever attachment member that is attached to the conveyance seat, a lever rotating shaft that is supported to a shaft support portion provided in the lever attachment member, and an operation lever that is attached to the lever attachment member through the lever rotating shaft, and operates to release a locked state of the lock member. The lever attachment member may include a movement restriction portion that is provided at a position capable of coming into contact with an end portion of the lever rotating shaft in an axial direction, and comes into contact with the end portion of the lever rotating shaft to restrict movement of the lever rotating shaft from the position supported by the shaft support portion.

According to this configuration, it is possible to realize a conveyance seat in which a switching device for switching a state of the seat main body in a simple structure. Particularly, it is possible to simplify an assembly structure of constituent components (lever rotating shaft) in the switching device.

Specifically, the lever attachment member includes the movement restriction portion that is provided at a position capable of coming into contact with the end portion of the lever rotating shaft in the axial direction, and comes into contact with the end portion of the lever rotating shaft to restrict movement of the lever rotating shaft from a position supported by the shaft support portion. Therefore, it is possible to realize a structure in which the lever rotating shaft does not come out by a simple structure. For example, work of press-fitting the lever rotating shaft into the lever attachment member as in the related art is not necessary.

At this time, the conveyance seat may include a lower rail that is fixed to a vehicle body floor, and an upper rail that is attached to be slidable along the lower rail and supports the seat main body from a downward side, the movement state may be a sliding movement state in which the seat main body has slid to a predetermined position in the seat front to rear direction with respect to the vehicle body floor, and the lock member may be a member that moves between a locked position where the upper rail is locked so as not to be slidable with respect to the lower rail and an unlocked position.

According to the above-described configuration, it is possible to simplify an assembly structure of constituent components in a rail device including the lower rail and the upper rail.

At this time, the lever rotating shaft may be supported in a state of being inserted into the shaft support portion, and the movement restriction portion may come into contact with an end surface of the lever rotating shaft to restrict movement of the lever rotating shaft from the shaft support portion in an insertion direction of the lever rotating shaft.

According to the above-described configuration, it is possible to easily assemble the lever rotating shaft in a simple structure, and it is possible to restrict movement of the lever rotating shaft in the insertion direction after being assembled.

At this time, the operation lever may be attached to be rotatable with respect to the lever attachment member between a normal position and a rotation position after rotation from the normal position. The conveyance seat may include a biasing member that is interposed between the lever attachment member and the operation lever, and biases the operation lever from the rotation position side to the normal position side. The biasing member may be attached to the lever rotating shaft or the periphery of the lever rotating shaft, and may be disposed at a position on an end portion side with which the movement restriction portion comes into contact between both end portions of the lever rotating shaft in an axial direction.

As described above, the biasing member is disposed at a position on one end portion side with which the movement restriction portion comes into contact between both end portions of the lever rotating shaft. Therefore, it is possible to dispose the biasing member more stably as compared with a position on the other end portion side of the lever rotating shaft.

At this time, the movement restriction portion may be a leaf spring that is provided in the lever attachment member and protrudes toward the end portion of the lever rotating shaft, and may detachably support the lever rotating shaft to the shaft support portion.

According to the above-described configuration, it is possible to realize a structure in which the lever rotating shaft does not come out by a simple structure using the leaf spring.

At this time, the movement restriction portion may include a first extension portion that extends from the lever attachment member, a second extension portion that extends from an extension end portion of the first extension portion in a direction intersecting an extension direction of the first extension portion and deformable to be bent with the extension end portion of the first extension portion set as a support point, and a contact portion that is provided in the second extension portion and comes into contact with the end portion of the lever rotating shaft. When viewed from an axial direction of the lever rotating shaft, the extension end portion of the first extension portion and the contact portion may be disposed at positions with a shaft center of the lever rotating shaft interposed therebetween.

According to the above-described configuration, it is possible to allow the movement restriction portion to be likely to be bent with respect to the lever rotating shaft (an end portion of the lever rotating shaft). Therefore, when assembling the lever rotating shaft, it is easy to temporarily retract the movement restriction portion by bending the movement restriction portion.

According to this, it is possible to easily assemble the lever rotating shaft, and it is possible to prevent the lever rotating shaft from coming out after being assembled.

At this time, the first extension portion may be formed to be wider than the second extension portion.

According to the above-described configuration, it is possible to raise the rigidity in the base end portion of the movement restriction portion (leaf spring).

At this time, the operation lever may be attached to the lever attachment member to be accommodated through the lever rotating shaft, the lever attachment member may include a main body portion that accommodates the operation lever, and first and second reinforcement portions which protrude from a side surface of the main body portion in a width direction of the lever attachment member, and extend to intersect each other at the side surface of the main body portion, and the movement restriction portion may be attached to a portion where the first reinforcement portion and the second reinforcement portion are connected or a peripheral portion thereof.

According to the above-described configuration, the movement restriction portion is attached to a portion having relatively high rigidity in the lever attachment member. Therefore, it is possible to raise the rigidity in the base end portion of the movement restriction portion (leaf spring).

At this time, the lever rotating shaft may include a shaft main body portion that is supported in a state of being inserted into the shaft support portion, and a shaft head portion that is provided at one end portion of the shaft main body portion in an axial direction and comes into contact with an opening portion of the shaft support portion. The movement restriction portion may be provided at a position corresponding to each of both end portions of the lever rotating shaft in an axial direction, and may be disposed at a position overlapping the shaft head portion and may be disposed at a position not overlapping the shaft main body portion when viewed from the axial direction of the lever rotating shaft.

According to the above-described configuration, the movement restriction portion comes into contact with one end portion of the lever rotating shaft (end portion of the shaft head portion side), and does not come into contact with the other end portion (end portion of the shaft main body portion side) of the lever rotating shaft.

According to this, when assembling the lever rotating shaft into the lever support portion, it is possible to avoid that the other end portion of the lever rotating shaft unintentionally comes into contact with the movement restriction portion. That is, the assembly structure of the lever rotating shaft can be simplified.

At this time, the conveyance seat may include a cover member that is disposed between the lever attachment member and the operation lever and is attached in a state of being accommodated in the lever attachment member, the cover member may include an engagement portion that engages with an engaged portion that is provided on a side surface of the lever attachment member, and the movement restriction portion may be disposed at a position different from that of the engaged portion on the side surface of the lever attachment member.

According to the above-described configuration, when assembling the cover member (engagement portion) to the lever attachment member, it is possible to prevent the movement restriction portion provided in the lever attachment member and the engagement portion from interfering each other.

In the above-described embodiments, description has been given of the conveyance seat that is used in automobiles as a specific example, but the conveyance seat can be used as not only conveyance seats of trains, buses, and the like, but also conveyance seats of airplanes, ships, and the like without particular limitation.

In the embodiments, the conveyance seats according to the invention have been mainly described.

However, the embodiments are illustrative only for easy understanding of the invention, and the invention is not limited thereto. The invention can be modified and improved without departing from the gist of the invention, and the equivalents are also included in the invention.

### REFERENCE SIGNS LIST

### <First Embodiment>

- S1:: conveyance seat (vehicle seat)
- 1:: seat cushion
1a, 2a: pad material
1b, 2b: skin material

- 2:: seat back
- 3:: headrest
- 10:: cushion frame
- 11:: side frame
- 12:: pan frame
- 13:: rear connecting pipe (rear connecting frame)
- 14:: front connecting pipe (front connecting frame)
- 20:: back frame
- 21:: back side frame
- 22:: upper frame
- 23:: lower frame
- 30:: reclining device
- 31:: reclining main body
- 32:: rotating shaft
- 33:: spiral spring
- 40:: height link device
- 41:: first connecting link (connecting member)
41a: link main body portion
41b: cushion connecting portion
41c: base connecting portion
41d: reinforcement flange

- 42:: second connecting link (connecting member)
42a: link main body portion
42b: cushion connecting portion
42c: base connecting portion

- 43:: brake unit
- 50:: rail device (base member)
- 51:: lower rail
- 52:: upper rail
- 53:: rail operation lever
- 60:: connecting bracket
- 60A:: front connecting bracket
- 60B:: rear connecting bracket
- 61:: upper wall portion
- 62:: side wall portion
62a: overhang portion

- 63:: upward bending portion
- 64:: reinforcement flange
- 65:: second reinforcement flange
- 66:: first rotating shaft
- 67:: second rotating shaft
- 70:: second connecting bracket
- 71:: fixing portion
- 72:: overhang portion
- 80:: seating sensor
- R:: interior space, space
- V1:: conveyance (vehicle)
- V1a:: conveyance floor (vehicle body floor)
- V1b:: floor reinforcement member
V1ba: accommodation concave portion

- V1c:: conveyance battery

### <Second Embodiment>

- V2:: conveyance (vehicle)
- 101:: conveyance main body (vehicle body)
- 102:: side wall portion
- 103:: ceiling portion
- 104:: bottom wall portion
- 105:: front wall portion
- 106:: rear wall portion
- 110:: conveyance floor (vehicle floor)
- 111:: through-hole
- 112:: gap filling member
- 120:: conveyance battery (in-vehicle battery)
- 121:: accommodation concave portion (concave portion)
- 130:: conveyance seat (vehicle seat)
- 131:: seat cushion
131a: pad material
131b: skin material

- 132:: seat back
132a: pad material
132b: skin material

- 133:: headrest
- 140:: cushion frame
- 141:: side frame
- 142:: pan frame
- 143:: front connecting pipe (front connecting frame)
- 144:: rear connecting pipe (rear connecting frame)
- 145:: support plate (pressure receiving plate)
- 150:: back frame
- 160:: rail device (base member)
- 161:: lower rail
- 162:: upper rail
- 163:: rail operation lever
- 164:: connecting bracket
- 170:: height link device
- 171:: first connecting link
- 172:: second connecting link
- 173:: brake unit
- 180:: reclining device
- 181:: reclining main body
- 182:: rotating shaft
- 183:: spiral spring

### <Third Embodiment>

- V3:: conveyance
- 201:: conveyance main body
- 204:: bottom wall portion
- 210:: conveyance floor
- 211:: through-hole
- 220:: conveyance battery
- 221:: gap
- 230:: conveyance seat
- 231:: seat cushion
- 260:: rail device (base member)
- 261:: lower rail
- 262:: upper rail
- 264:: connecting bracket
- 265:: support bracket

### <Fourth Embodiment>

- V4:: conveyance
- 301:: conveyance main body
- 304:: bottom wall portion
- 310:: conveyance floor
- 320:: conveyance battery
- 321:: gap
- 330:: conveyance seat
- 331:: seat cushion
- 360:: rail device (base member)
- 361:: lower rail
- 362:: upper rail
- 364:: connecting bracket
- 365:: support bracket

### <Fifth Embodiment>

- V5:: conveyance
- 401:: conveyance main body
- 404:: bottom wall portion
- 410:: conveyance floor
- 411:: accommodation concave portion
- 420:: conveyance battery
- 421:: accommodation concave portion
- 430:: conveyance seat
- 431:: seat cushion
- 440:: cushion frame
- 441:: side frame
- 443:: front connecting pipe
- 444:: rear connecting pipe
- 445:: support plate
- 460:: rail device (base member)
- 461:: lower rail
- 462:: upper rail
- 464:: connecting bracket
- 490:: blower device
- 491:: blower main body
- 492:: harness
- SP:: space

### <Sixth Embodiment>

- V6:: conveyance
- 501:: conveyance main body
- 502:: side wall portion
- 503:: top wall portion
- 510:: conveyance floor
- 520:: conveyance battery
- 530:: conveyance seat
- 531:: seat cushion
- 532:: seat back
- 533:: headrest
- 560:: rail device (base member)
- 561:: fixed rail
- 562:: movement rail
- 563:: connecting member
- 564:: ball portion
- 570:: auxiliary rail device
- 571:: fixed rail
- 572:: movement rail
- 573:: connecting member

### <Seventh Embodiment>

- V7:: conveyance (vehicle)
- 601:: conveyance main body (vehicle body)
- 602:: side wall portion
- 603:: top wall portion
- 604:: bottom wall portion
- 605:: front wall portion
- 606:: rear wall portion
- 607:: conveyance floor (vehicle floor)
- 610:: conveyance battery (in-vehicle battery)
- 620:: image display device
- 621:: screen accommodation portion
- 622:: display screen (display unit)
622a: first image display surface
622b: second image display surface
622c: engaged portion

- 623:: screen engagement portion
- 624:: projector
- 630:: conveyance seat (vehicle seat)
- 630A:: first conveyance seat
- 630B:: second conveyance seat
- 630C:: third conveyance seat
- 631:: seat cushion
631a: cushion frame
631b: pad material
631c: skin material

- 632:: seat back
- 633:: headrest
- 634:: side table
- 635:: reclining device
635a: reclining main body
635b: rotating shaft
635c: spiral spring

- 636:: detection sensor
- 637:: biometric sensor
- 640:: seat rotating device
- 641:: base member
- 642:: rotary shaft
- 643:: rotary member
- 650:: rail device
- 651:: fixed rail
- 652:: first movable rail (first movable portion)
- 653:: second movable rail (second movable portion)
- 660:: control device

### <Eighth Embodiment>

- V8:: conveyance
- 701:: conveyance main body
- 707:: conveyance floor
- 710:: conveyance battery
- 720:: image display device
- 730:: conveyance seat
- 730A to 730C:: first conveyance seat to third conveyance seat
- 731:: seat cushion
- 732:: seat back
- 735:: reclining device
- 740:: seat rotating device
- 750:: rail device
- 760:: control device

### <Ninth Embodiment>

- V9:: conveyance
- 801:: conveyance main body
- 807:: conveyance floor
- 810:: conveyance battery
- 820:: image display device
- 821:: accommodation portion
- 822:: display (display unit)
822a: first image display surface
822b: second image display surface
822c: engaged portion

- 823:: engagement portion
- 830:: conveyance seat
- 831:: seat cushion
- 840:: seat rotating device
- 850:: rail device
- 860:: control device
- 870:: pedal device
- 871:: pedal

### <Tenth Embodiment>

- V10:: conveyance
- 901:: conveyance main body
- 910:: conveyance battery
- 920:: image display device
- 930:: conveyance seat
- 936:: detection sensor
- 937:: biometric sensor
- 940:: seat rotating device
- 950:: rail device
- 960:: control device

### <Eleventh Embodiment>

- V11:: conveyance
- 1001:: conveyance main body
- 1003:: top wall portion
- 1010:: conveyance battery
- 1020:: image display device
- 1030:: conveyance seat
- 1032:: seat back
- 1035:: reclining device
- 1040:: seat rotating device
- 1050:: rail device
- 1060:: control device
- 1070:: sunroof

### <Twelfth Embodiment>

- V12:: conveyance
- 1101:: conveyance main body
- 1110:: conveyance battery
- 1120:: image display device
- 1130:: conveyance seat
- 1132:: seat back
- 1135:: reclining device
- 1137:: biometric sensor
- 1140:: seat rotating device
- 1150:: rail device
- 1160:: control device

### <Thirteenth Embodiment>

- V13:: conveyance
- 1201:: conveyance main body
- 1203:: top wall portion
- 1207:: conveyance floor
- 1210:: conveyance battery
- 1220:: image display device
- 1230:: conveyance seat
- 1231:: seat cushion
- 1240:: seat rotating device
- 1250:: rail device
- 1260:: control device
- 1270:: table device
- 1271:: table main body
- 1272:: auxiliary table
- 1273:: temperature adjustment device
- 1274:: switch
- 1280:: second rail device
- 1281:: fixed rail
- 1282:: movable rail
- 1290:: ventilation device

### <Fourteenth Embodiment>

- V14:: conveyance
- 1301:: conveyance main body
- 1310:: conveyance battery
- 1320:: image display device
- 1330:: conveyance seat
- 1340:: seat rotating device
- 1350:: rail device
- 1360:: control device
- 1370:: steering
- 1380:: imaging camera

### <Fifteenth Embodiment>

- V15:: conveyance
- 1401:: conveyance main body
- 1410:: conveyance battery
- 1420:: image display device
- 1430:: conveyance seat
- 1432:: seat back
- 1440:: seat rotating device
- 1450:: rail device
- 1460:: control device
- 1470:: imaging camera
- 1480:: solar panel

### <Sixteenth Embodiment>

- V16:: conveyance
- 1501:: conveyance main body
- 1510:: conveyance battery
- 1520:: image display device
- 1521:: screen accommodation portion
- 1522:: display screen
- 1530:: conveyance seat
- 1532:: seat back
- 1533:: headrest
- 1534:: face cover
- 1540:: seat rotating device
- 1550:: rail device
- 1560:: control device

### <Seventeenth Embodiment>

- V17:: conveyance
- 1601:: conveyance main body
- 1602:: side wall portion
- 1603:: top wall portion
- 1607:: conveyance floor
- 1610:: conveyance battery
- 1620:: image display device
- 1621:: screen accommodation portion
- 1622:: display screen
- 1623:: screen engagement portion
- 1624:: projector
- 1630:: conveyance seat
- 1630A:: first conveyance seat
- 1630B:: second conveyance seat
- 1631:: seat cushion
- 1632:: seat back
- 1640:: seat rotating device
- 1650:: rail device
- 1660:: control device

### <Eighteenth Embodiment>

- V18:: conveyance
- 1701:: conveyance main body
- 1710:: conveyance battery
- 1720:: image display device
- 1722:: display
- 1730:: conveyance seat
- 1730A:: first conveyance seat
- 1730B:: second conveyance seat
- 1731:: seat cushion
- 1732:: seat back
- 1734:: engaged portion
- 1740:: seat rotating device
- 1750:: rail device
- 1760:: control device
- 1770:: table device
- 1771:: table main body
- 1772:: engagement hook
- 1780:: second rail device

### <Nineteenth Embodiment>

- V19:: conveyance
- 1801:: conveyance main body
- 1802:: side wall portion
- 1810:: conveyance battery
- 1820:: image display device
- 1830:: conveyance seat
- 1830A:: first conveyance seat
- 1830B:: second conveyance seat
- 1831:: seat cushion
- 1832:: seat back
- 1840:: seat rotating device
- 1850:: rail device
- 1860:: control device
- 1870:: sliding door

### <Twentieth Embodiment>

- S20:: conveyance seat
S20a: seat frame

- 1911:: seat back
1901a, 1902a, 1903a: pad member
1901b, 1902b, 1903b: skin material

- 1902:: seat cushion
- 1903:: headrest
- 1910:: back frame
- 1911:: main frame
- 1912:: panel frame
- 1913:: connecting bracket
- 1914:: attachment bracket
- 1920:: cushion frame
- 1921:: side frame
- 1922:: pan frame
- 1923:: rear connecting frame
- 1924:: elastic spring
- 1925:: connecting link
- 1926:: cushion rotating shaft
- 1930:: support base
- 1931:: side base portion
- 1932:: base connecting portion
- 1940:: reclining device
- 1941:: reclining main body
- 1942:: back rotating shaft
- 1943:: spiral spring
- 1950:: rail device
- 1951:: lower rail
- 1952:: upper rail
- 1953:: lock member
- 1953A:: first lock member
- 1953B:: second lock member
1953a: lock main body
1953b: rotating shaft
1953c: rotating lever

- 1954:: connecting wire (connecting member)
- 1954A:: first connecting wire
- 1954B:: second connecting wire
1954a: one end portion
1954b: other end portion

- 1955:: connecting tool
- 1956:: support tool
- 1960:: operation lever (rail operation lever)
1960a: upper wall portion
1960b: front wall portion
1960c: side wall portion
1960d: bottom wall portion
1960e: reinforcement wall portion
1960f: second side wall portion

- 1961:: shaft support portion
- 1962:: attachment portion
- 1962A:: first attachment portion
- 1962B:: second attachment portion
1962a: outer through-hole
1962b: inner through-hole

- 1963:: wire passing portion
- 1964:: lever operation portion
- 1965:: guide member
- 1970:: cover member
1970a: side wall portion
1970b: front wall portion
1970c: bottom wall portion
1970d: lateral flange portion
1970e: front flange portion
1970f: rear flange portion

- 1971:: cover opening portion
- 1972:: cover engagement claw (engagement portion)
- 1973:: cover engagement convex portion
- 1974:: second cover engagement convex portion
- 1980:: lever attachment member
1980a: side wall portion
1980b: front wall portion
1980c: bottom wall portion
1980d: second bottom wall portion
1980e: rear wall portion
1980f: lateral flange portion
1980g: front flange portion

- 1981:: shaft support portion
- 1982:: engagement hole (engaged portion)
- 1983:: engagement concave portion
- 1984:: second engagement concave portion
- 1985:: opening portion
- 1986:: support portion
- 1986A:: first support portion
- 1986B:: second support portion
- 1987:: guide hole (guide portion)
1987a: first hole portion
1987b: second hole portion

- 1988:: movement restriction portion
1988a: first extension portion
1988b: second extension portion
1988c: contact portion

- 1989A:: first reinforcement portion
- 1989B:: second reinforcement portion
- 1989C:: connecting portion

- 1989D, 1989E:: reinforcement portion

- 1990:: lever rotating shaft
- 1991:: shaft main body portion
- 1992:: shaft head portion
- 1995:: biasing spring (biasing member)
- R, R2:: space, interior space

### <Twenty First Embodiment>

- S21:: conveyance seat
- 2001:: seat back
- 2002:: seat cushion
- 2010:: back frame
- 2050:: rail device
- 2054:: connecting wire (connecting member)
- 2054A:: first connecting wire
- 2054B:: second connecting wire
- 2055:: connecting tool
- 2060:: operation lever (rail operation lever)
- 2061:: shaft support portion
- 2062:: attachment portion
- 2062A:: first attachment portion
- 2062B:: second attachment portion
- 2080:: lever attachment member
2080a: side wall portion
2080b: front wall portion
2080c: bottom wall portion
2080e: rear wall portion
2080f: lateral flange portion
2080g: front flange portion
2080h: hanging portion
2080i: frame engagement portion

- 2081:: shaft support portion
- 2085:: opening portion
- 2088:: movement restriction portion
- 2090:: lever rotating shaft

## Claims

1. A conveyance seat, comprising:
a seat cushion;
a base member that supports the seat cushion from a downward side; and
a connecting member that is interposed between the seat cushion and the base member in an up to down direction, and connects the seat cushion and the base member,
wherein a downward portion of the connecting member is attached to the base member through a connecting bracket, or is attached to the base member, and
a lower end portion of the connecting member is disposed on a downward side as compared with an upper end portion of the base member.

2. The conveyance seat according to claim 1,
wherein the base member is a rail device that is provided on a conveyance floor and moves the seat cushion in a seat front to rear direction with respect to the conveyance floor,
the rail device includes a lower rail extending in the seat front to rear direction, and an upper rail that is supported to be movable along the lower rail and moves together with the seat cushion,
the downward portion of the connecting member is attached to the upper rail through a connecting bracket, or is attached to the upper rail, and
the lower end portion of the connecting member is disposed on a downward side as compared with an upper end portion of the upper rail.

3. The conveyance seat according to claim 1,
wherein the connecting member includes a base connecting portion attached to the base member side, and
the base connecting portion is disposed at a position overlapping the base member in the up to down direction.

4. The conveyance seat according to claim 3,
wherein the base connecting portion is attached to a side surface of the connecting bracket in a seat width direction, or is attached to a side surface of the base member.

5. The conveyance seat according to claim 4,
wherein the connecting member is attached to the base member through the connecting bracket, and
the base connecting portion, the connecting bracket, and the base member are disposed at positions overlapping each other in the up to down direction.

6. The conveyance seat according to claim 5,
wherein the connecting bracket includes an upper wall portion that is attached to an upper surface of the base member, and a side wall portion that extends downward from an inner side portion of the upper wall portion in the seat width direction, and
the base connecting portion is attached to the side wall portion of the connecting bracket.

7. The conveyance seat according to claim 3,
wherein the connecting member is attached to the base member through the connecting bracket and a second connecting bracket,
the connecting bracket is attached to the base member, and
the second connecting bracket is attached to the connecting bracket.

8. The conveyance seat according to claim 7,
wherein the second connecting bracket is attached to an inner side surface of the connecting bracket in the seat width direction, and is provided to overhang toward an inner side in the seat width direction from the connecting bracket, and
the base connecting portion is attached to the overhang portion of the second connecting bracket.

9. The conveyance seat according to claim 1,
wherein the base member is a rail device that is provided on a conveyance floor and moves the seat cushion in a seat front to rear direction with respect to the conveyance floor,
the rail device includes a lower rail extending in the seat front to rear direction, and an upper rail that is supported to be movable along the lower rail and moves together with the seat cushion, and
the connecting member is disposed on an inner side in a seat width direction as compared with the lower rail.

10. The conveyance seat according to claim 9,
wherein the connecting member is a connecting link that connects the seat cushion to the base member to be moveable up and down,
the connecting link has a bent shape that is bent in the seat width direction, and
the connecting link includes a cushion connecting portion that is attached to the seat cushion side, and a base connecting portion that is disposed on an inner side in the seat width direction as compared with the cushion connecting portion, and is attached to the base member side.
